# EUROPEAN PATENT SPECIFICATION

(11) **EP 4 409 191 B1**
(45) Date of publication and mention of the grant of the patent: **05.11.2025**
(21) Application number: 22793928.7
(22) Date of filing: 27.09.2022
(51) Int. Cl.: F16N 7/38, F16N 25/02, F16N 11/00, F16N 11/08, F16N 27/02

(54) **CARTRIDGE INJECTOR AND MANIFOLD**
KARTUSCHENINJEKTOR UND VERTEILER
INJECTEUR DE CARTOUCHE ET COLLECTEUR

(30) Priority: 30.09.2021 US 202163250594 P; 04.11.2021 US 202163263537 P
(43) Date of publication of application: 07.08.2024
(60) Divisional application: 25190297.9
(73) Proprietor: Graco Minnesota Inc., Minneapolis, MN 55413-1829 (US)
(72) Inventor: EBBEN, James, R., Shoreview, MN 55126 (US); KAHLER, Bradley, G., Otsego, MN 55330 (US); JENSEN, Daniel, M., Mahtomedi, MN 55115 (US); TICHY, Dustin, A., Otsego, MN 55330 (US); KUSCHEL, Anthony, J., Coon Rapids, MN 55448 (US); LOWY, Andrew, P., Andover, MN 55304 (US); NIJAGUNA, Suresha, Saragur, Plymouth, MN 55446 (US)
(74) Representative: Lewis Silkin LLP
(86) International application number: PCT/US2022/044851
(87) International publication number: WO 2023/055722

(56) References cited:
- WO-A1-03/042595
- WO-A1-2014/202115
- US-A- 2 448 583
- US-A1- 2019 195 423

## Description

### CROSS-REFERENCE TO RELATED APPLICATION(S)

This application claims priority to U.S. Provisional Application No. 63/250,594 filed on September 30, 2021, and entitled "CARTRIDGE INJECTOR AND MANIFOLD," and claims priority to U.S. Provisional Application No. 63/263,537 filed on November 4, 2021, and entitled "CARTRIDGE INJECTOR AND MANIFOLD,".

### BACKGROUND

Injectors are used to deliver metered volumes of lubricant to various components at periodic time intervals. In some instances, the injector and manifold are separate components that are mechanically, as well as fluidly, joined by a banjo bolt or other means. Maintaining and replacing such injectors requires breaking the fluid connection between the manifold and the injector body, breaking the fluid connection between the injector and the lubricated component, and/or disconnecting fluid connections between the lubrication supply and the manifold. Moreover, internal passages of some injectors can have large aspect ratios (e.g., greater than 10: 1), which increases the cost of manufacture. Multiple manufacturing operations are used to interconnect these internal passages to form the injector's supply path.

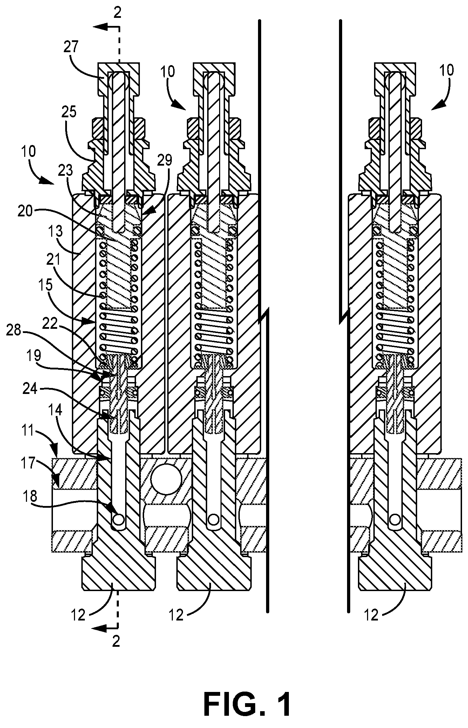

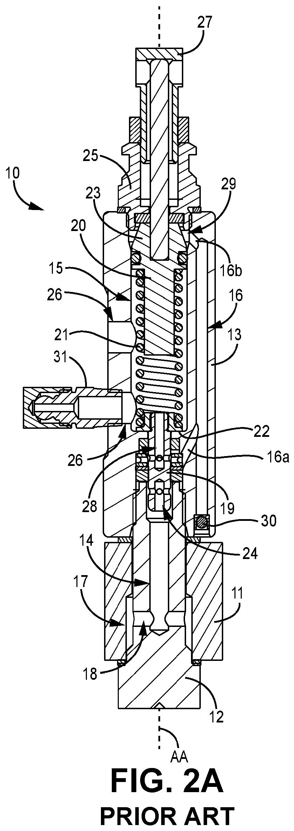

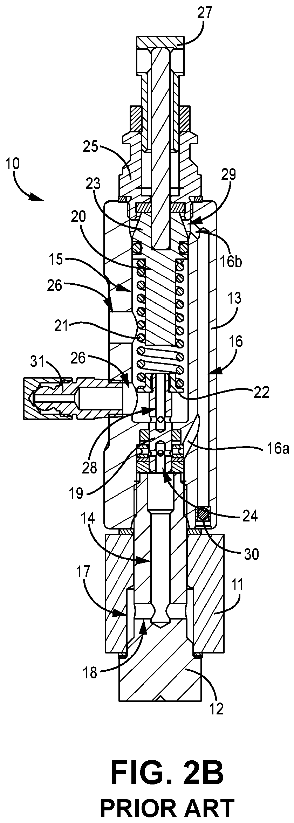

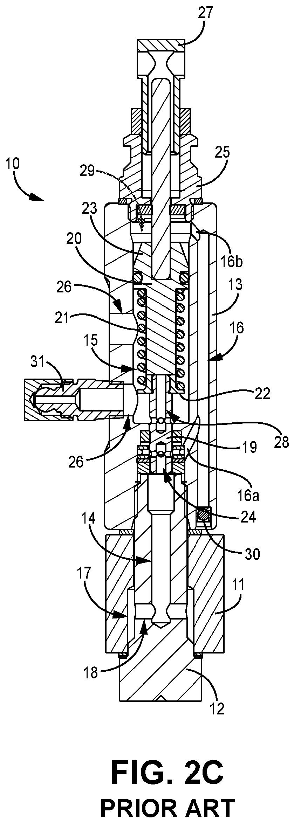

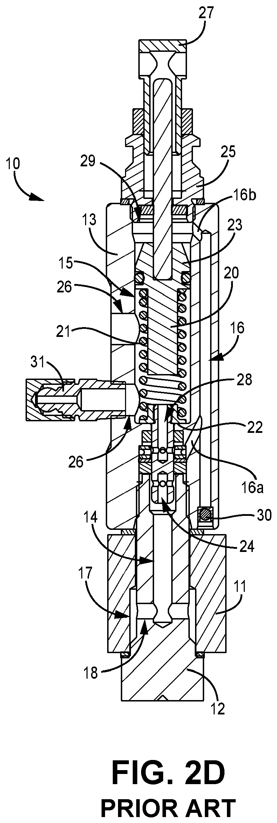

For example, FIG. 1 is a cross-sectional view showing an array of injectors 10 fluidly and mechanically attached to manifold 11 via an array of banjo bolts 12. An outlet line is directly connected to body 13 at equipment passage 26, such as by a fitting threaded directly into body 13. FIGS. 2A-2D are cross-sectional views of an injector 10 showing the process by which lubricant is loaded to and ejected from injector 10 and taken along line 2-2 in FIG. 1. FIG. 2A shows injector 10 in a first state, FIG. 2B shows injector 10 in a second state, FIG. 2C shows injector 10 in a third state, and FIG. 2D shows injector 10 in a fourth state.

Banjo bolt 12 extends fully through manifold 11 and into body 13 of injector 10. Banjo bolt 12 defines inlet cavity 14 while body 13 defines outlet cavity 15. Passage 16 interconnects inlet cavity 14 to outlet cavity 15 and extends through a portion of body 13 spaced radially outward from the actuation axis AA along which piston 20 and poppet 19 reciprocate during operation. In operation, injector 10 is initially in the first state shown in FIG. 2A. Lubricant flows from manifold feed passage 17 through banjo bolt passage 18 and into inlet cavity 14. As lubricant pressurizes inlet cavity 14, poppet 19 translates toward piston 20, compressing spring 21 disposed between poppet flange 22 and head 23 of piston 20. Poppet 19 shifts axially to place injector 10 in the second state shown in FIG. 2B. In the second state, inlet passage 24, which extends axially within and radially through an inlet side of poppet 19, fluidly connects inlet cavity 14 to passage 16. Lubricant flows into and through passage 16, which is spaced radially outward of the outlet cavity 15 from which lubricant is output from injector 10. Lubricant discharges from passage 16 into a drive cavity 29 between piston head 23 and cap 25. The lubricant pressure builds in the drive cavity 29 and displaces piston 20 axially towards poppet 19 to place injector 10 in the third state shown in FIG. 2C. The piston 20 shifting axially decreases the volume of outlet cavity 15, driving lubricant downstream from outlet cavity 15 through equipment passage 26 and associated lines and/or hoses. In the example shown, body 13 includes multiple equipment passages 26. Fitting 31 is connected to one of the equipment passages 26. The other equipment passage 26 can be plugged.

Lubricant pressure within manifold 11 is released after lubricant is output from injector 10. The lubricant pressure in inlet cavity 14 and manifold 11 decreases. Spring 21 displaces poppet 19 axially to place injector 10 in the fourth state shown in FIG. 2D. Outlet passage 28 through poppet 19 fluidly connects passage 16 with outlet cavity 15. The outlet passage 28 extends radially and axially through an outlet side of poppet 19. After sufficient lubricant pressure reduction, spring 21 drives piston 20 axially away from poppet 19 and back to the initial position associated with the first state of injector 10. As piston 20 displaces, piston 20 drives lubricant within drive cavity 30 to outlet cavity 15 through passage 16 and outlet passage 28. The lubricant filling into outlet cavity 15 is loaded for ejection from injector 10 during the next lubricant injection cycle. The spring 21 resets the piston 20 to reload the injector 10 for the next dispense cycle such that injector 10 is returned to the first state shown in FIG. 2A. Restored to the first state, injector 10 can repeat the foregoing process for each subsequent lubricant injection cycle. Adjustment screw 27 can be shifted along actuation axis AA to vary a displacement distance of piston 20 within body 13 and, hence, a lubricant injection volume.

The lubricant flow path through injector 10 utilizes multiple internal cavities (i.e., inlet cavity 14 and outlet cavity 15) that are interconnected by passage 16, the manufacture of which necessitates a high aspect ratio drilling operation which is subsequently sealed by plug 30. Angled portions 16a and 16b of passage 16 are formed by additional angled drilling operations to join passage 16 to inlet cavity 14 and outlet cavity 15 and to drive cavity 29. Moreover, the flow path utilizes discrete internal passages within poppet 19 (i.e., inlet passage 24 and outlet passage 28) to allow lubricant to flow into and out of passage 16. Each of the foregoing features increase manufacturing cost and the complexity of injector 10. Additionally, replacement and/or maintenance of injector 10 requires removal of banjo bolt 12 and disconnecting lines and/or hoses that are directly connected to body 13 at equipment passage 26. The spring 21 is the lubricant flowpath, which requires messy and disruptive activity to access for maintenance purposes. Accordingly, injector maintenance and replacement require disassembly of significant portions of the lubrication system. To ease maintenance of injector systems and decrease cost of injector manufacture, a new injector and manifold configuration is highly desirable.

WO 03/042595 discloses a lubricant injector having a measuring chamber, venting of the injector involving transmission of lubricant from its inlet to the measuring chamber, and a method of operation of the injector involving such transmission.

WO 2014/202115 discloses a distributor for distributing lubricant, comprising a lubricant inlet which is fluidically connected to a lubricant pump, a lubricant outlet for transfer of a pre-metered amount of lubricant, a metering space, and a relief chamber for receiving lubricant. In a starting position, a movably mounted control piston opens up a first lubricant connection between the relief chamber and a pressure duct leading to the metering space and blocks a second lubricant connection between the lubricant inlet and the pressure duct. In a working position, the control piston blocks the first lubricant connection and opens up the second lubricant connection. There are further provided a movably mounted metering piston, and a spring, the first end of which acts upon the control piston and the second end of which acts upon the metering piston.

### SUMMARY

According to an aspect of the present invention, there is provided a cartridge as defined in appended claim 1.

According to another aspect of the present invention, there is provided a method of disassembling a cartridge injector as defined in appended claim 15.

Preferred features of the invention are set out in the appended dependent claims.

### BRIEF DESCRIPTION OF THE DRAWINGS

FIG. 1 is a cross-sectional view of a prior art injector assembly incorporating banjo bolt attachments and high aspect ratio internal passages.
FIG. 2A is a cross-sectional view taken along line 2-2 in FIG. 1 showing a prior art injector in a first state.
FIG. 2B is a cross-sectional view taken along line 2-2 in FIG. 1 showing a prior art injector in a second state.
FIG. 2C is a cross-sectional view taken along line 2-2 in FIG. 1 showing a prior art injector in a third state.
FIG. 2D is a cross-sectional view taken along line 2-2 in FIG. 1 showing a prior art injector in a fourth state.
FIG. 3 is a schematic view of a lubrication system that includes cartridge injectors.
FIG. 4 is an isometric view of an injector assembly showing a cartridge injector and spacer exploded away from a manifold.
FIG. 5A is an isometric view of a first manifold.
FIG. 5B is an isometric view of a second manifold.
FIG. 5C is an isometric view of a third manifold.
FIG. 6 is a cross-sectional view of an injector assembly.
FIG. 7A is a cross-sectional view taken along line 7-7 in FIG. 6 showing a cartridge injector in a first state.
FIG. 7B is a cross-sectional view taken along line 7-7 in FIG. 6 showing the cartridge injector in a second state.
FIG. 7C a cross-sectional view taken along line 7-7 in FIG. 6 showing the cartridge injector in a third state.
FIG. 7D is a cross-sectional view taken along line 7-7 in FIG. 6 showing the cartridge injector in a fourth state.
FIG. 8A is an isometric view of a cartridge injector.
FIG. 8B is a side elevation view of the cartridge injector taken along line A-A shown in FIG. 8A.
FIG. 8C is an exploded view of the cartridge injector.
FIG. 9 is a cross-sectional view of another injector assembly.
FIG. 10A is a cross-sectional view taken along line 10-10 in FIG. 9 showing a cartridge injector in a first state.
FIG. 10B is a cross-sectional view taken along line 10-10 in FIG. 9 showing the cartridge injector in a second state.
FIG. 10C a cross-sectional view taken along line 10-10 in FIG. 9 showing the cartridge injector in a third state.
FIG. 10D is a cross-sectional view taken along line 10-10 in FIG. 9 showing the cartridge injector in a fourth state.
FIG. 11 is a side elevational view of a cartridge injector.
FIG. 12 is an isometric cross-sectional view of a manifold taken along line 12-12 in FIG. 4.

### DETAILED DESCRIPTION

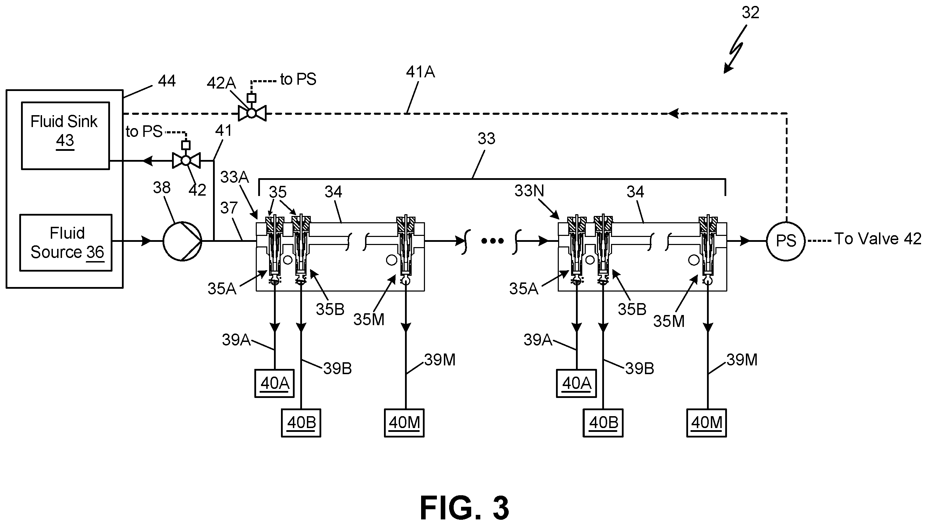

FIG. 3 is a simplified schematic view of lubrication system 32 that includes at least one injector assembly 33A and up to an arbitrary number "N" of injector assemblies 33 as indicated by injector assembly 33N. Whether lubrication system 32 includes a single injector assembly 33, or multiple injector assemblies 33, each injector assembly 33 includes manifold 34 and at least one cartridge injector 35 and up to an arbitrary number "M" of cartridge injectors 35. Injector assemblies 33 within lubrication system 32 can be assembled with the same number of cartridge injectors 35 or different numbers and configurations of cartridge injectors 35, depending on the configuration of manifold 34 of that injector assembly 33. As such, each injector assembly 33 can include the same number of cartridge injectors 35 as one or more other injector assemblies 33 in lubrication system 32 or can include a different number of cartridge injectors 35 from any other injector assembly 33 in lubrication system 32.

Manifolds 34 of injector assemblies 33 receive lubricant from fluid source 36 delivered along supply line 37 and pressurized by pump 38, which is disposed along supply line 37 upstream from injector assemblies 33. Injector assemblies 33 can be arranged in series along supply line 37. Alternatively, injector assemblies 33 can be arranged in parallel, each assembly receiving lubricant directly via source 36, or via one or more branch lines. In other embodiments, lubrication system 32 includes some injector assemblies 33 connected in series while other injector assemblies 33 are arranged in parallel. Output lines 39 connect each injector assembly 33 with a component 40 that receives lubricant from the injector assembly 33. In some examples, lubrication system 32 includes the same number of output lines 39 as cartridge injectors 35, such that each cartridge injector 35 is associated with a dedicated output line 39 and each output line 39 is associated with a dedicated cartridge injector 35. FIG. 3 depicts output lines 39A, 39B, and up to 39M connecting each of cartridge injectors 35A, 35B, up to 35M to respective components 40A, 40B, up to 40M for delivering lubricant to those components 40A-40M.

Lubrication system 32 includes return line 41 and valve 42 for reducing lubricant pressure within injector assemblies 33 after delivering lubricant to each component 40. Return line 41 connects supply line 37, or one or more injector assemblies 33, to fluid sink 43. Valve 42 opens in response to signals from pressure switch PS, located downstream from the last injector assembly 33N along supply line 41, indicating that a threshold lubricant pressure has been reached. The threshold pressure can be set greater than the pressures associated with activating injectors 33, such that the lubricant reaching that threshold pressure indicates that all injectors 33 have dispensed lubricant. Return line 41 and valve 42 can be located between discharge of pump 38 and first injector assembly 33A. Alternatively, return line 41 and valve 42 can be downstream of pressure switch PS as indicated by dashed line 41A and valve 42A. Fluid sink 43 can be discrete from fluid source 36. **In** other configurations, fluid source 36 and fluid sink 43 are combined into fluid reservoir 44.

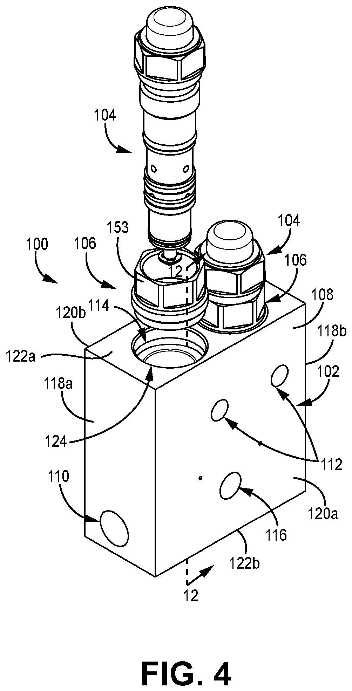

FIG. 4 is an isometric view of an injector assembly 100 showing a cartridge injector 104 and spacer 106 exploded away from manifold 102. Injector assembly 100 is substantially similar to and indicative of any one of injector assemblies 33 shown in FIG. 3. Injector assembly 100 includes manifold 102, cartridge injectors 104, and spacers 106. Manifold body 108, supply port 110, equipment ports 112, injector cavities 114, and mount bores 116 of manifold 102 are shown. Manifold body 108 includes longitudinal sides 118a, 118b; lateral sides 120a, 120b; and vertical sides 122a, 122b.

Manifold 102 is configured to directly connect to line (e.g., supply line 37) that provides lubricant for dispense. Manifold 102 is directly connected to one or more lines (e.g., output lines 39) that transport lubricant downstream from manifold 102 for application at a discrete application point (e.g., component 40). Manifold body 108 defines flowpaths that provide lubricant from supply port 110 to injector cavities 114 and that receive lubricant from injector cavities 114 and provide the lubricant to equipment ports 112. Supply port 110 is configured to receive an inlet flow of lubricant such that only a single supply line 37 is required to provide lubricant for output to multiple output lines 39 connected to manifold 102. The supply line 37 and output lines 39 are directly connected to manifold 102. The supply line 37 and output lines 39 are not directly connected to any one of cartridge injectors 104.

In the example shown, supply port 110 includes female threading that is configured to interface with male threading of a fitting of a supply line 37. All lubricant output from manifold 102 flows through a common feed passage formed through manifold body 108, which supply port 110 defines an axial end of. Supply port 110 is formed through longitudinal side 118a of manifold body 108. Supply ports 110 can also be referred to as supply openings.

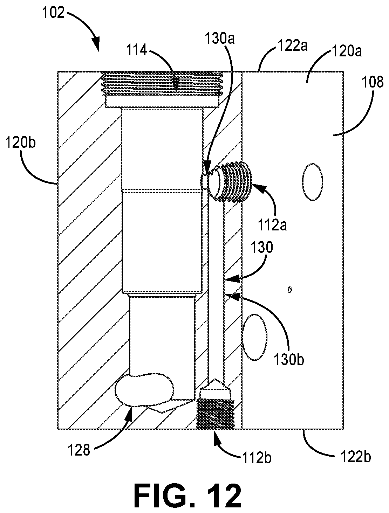

Equipment ports 112, which can also be referred to as manifold outlets or equipment outlets, are configured to connect to output lines 39. Each equipment port 112 is configured to connect to a separate output line 39 from the other equipment port 112 such that manifold 102 can supply lubricant to multiple output lines for application at multiple different component 40 locations. Equipment ports 112 are disposed through one or more of the exterior sides of manifold body 108. Equipment ports 112 are formed in lateral side 120a of manifold body 108 in the example shown. It is understood that additional sets of equipment ports 112 can be formed through other sides of manifold body 108, such as through vertical side 122b, as shown in FIG. 12. In the example shown, an array of equipment ports 112 is formed through lateral side 120a of manifold body 108. In the example shown, equipment ports 112 through lateral side 120a are disposed closer to vertical side 122a than supply port 110. Each equipment port 112 is associated with a single respective one of injector cavities 114. It is understood that multiple equipment ports 112, such as a first equipment port 112 through lateral side 120a and a second equipment port 112 through vertical side 122b, can be associated with the same respective injector cavity 114. A single equipment port 112 is not associated with multiple injector cavities 114 in the example shown.

Mount bores 116 are formed through manifold body 108. Mount bores 116 extend fully through manifold body 108 between the two lateral sides 120a, 120b of manifold body 108. Mount bores 116 provide locations for bolts, rods, or other supports/fasteners to extend through manifold body 108 to mount manifold 102 at a desired location. Mount bores 116 are disposed vertically between equipment ports 112 and vertical side 122b. Mount bores 116 are disposed longitudinally between injector cavities 114.

Injector cavities 114 are formed in manifold body 108. Specifically, injector cavities 114 extend into manifold body 108 from vertical side 122a. Apertures 124 are formed in vertical side 122a. Apertures 124 are the openings of injector cavities 114 formed in the exterior of manifold body 108. During operation, vertical side 122a is a side of manifold 102 configured to be oriented vertically upwards, which prevents dripping of lubricant when cartridge injector 104 is removed and replaced. In some examples, vertical side 122a is oriented vertically downward. As such, injector cavities 114 can be open vertically downward while equipment ports 112(b) (FIG. 12) can be oriented vertically upwards. It is understood, however, that while the side through which injector cavities 114 extend into manifold 102 is labeled as a vertical side and is typically oriented vertically upwards or downwards during operation, the disclosure is not so limited. The vertical sides 122a, 122b can be considered to be "vertical sides" even if not oriented vertically with respect to gravity.

Cartridge injectors 104 are configured to enter into injector cavities 114 of manifold body 108 through apertures 124. Cartridge injectors 104 are received within injector cavities 114. In some examples, each cartridge injector 104 can mount directly to manifold body 108 by interfaced threading between the exterior of cartridge injector 104 and injector cavity 114. For example, the exterior of cartridge injector 104 can include threading configured to interface with threading formed in injector cavity 114. Cartridge injectors 104 fluidly isolate the lubricant in the feed passage that extends from supply port 110 from the equipment ports 112. Cartridge injectors 104 are configured to meter a set volume of lubricant from the feed passage and then drive that volume of lubricant downstream through an equipment port 112 associated with the injector cavity 114 that the cartridge injector 104 is disposed within.

In the example shown, cartridge injector 104 interfaces with spacer 106 and spacer 106 interfaces with manifold body 108. Cartridge injector 104 extends through spacer 106 and into the injector cavity 114. Spacer 106 is configured to set a distance that the dispense piston of cartridge injector 104 can travel, thereby controlling the volume of lubricant metered by and output by cartridge injector 104 during each lubricant injection cycle. Spacer 106 can include internal threading configured to interface with external threading on cartridge injector 104. Spacer 106 can include exterior threading configured to interface with internal threading within injector cavity 114. Different configurations of spacers 106 having different heights can be connected at injector cavities 114 to vary the output volume of cartridge injectors 104. As such, each cartridge injector 104 mounted to manifold 102 can output the same or a different volume of lubricant from any other cartridge injector 104 mounted to manifold 102.

Cartridge injectors 104 are at least partially disposed within manifold body 108. Cartridge injectors 104 control the flow of lubricant from an inlet flowpath fluidly connected to supply port 110 to an outlet flowpath fluidly connected to equipment ports 112. Each cartridge injector 104 is operatively associated with only those equipment ports 112 (or set of equipment ports 112a, 112b) operatively associated with the injector cavity 114 that the cartridge injector 104 is disposed within to control lubricant flow to and through that equipment port 112. Each equipment port 112, or set of equipment ports 112a, 112b, is associated with a respective injector cavity 114 of manifold 102. Each cartridge injector 104 can be mounted to and removed from manifold 102 as a single component without requiring assembly and disassembly of any of the lubricant-carrying components of that cartridge injector 104. The supply line 37 and output lines 39 can remain connected to manifold body 108 when cartridge injectors 104 are inserted into or removed from injector cavities 114. Spacers 106 can remain mounted to manifold body 108 when cartridge injectors 104 are inserted into or removed from injector cavities 114.

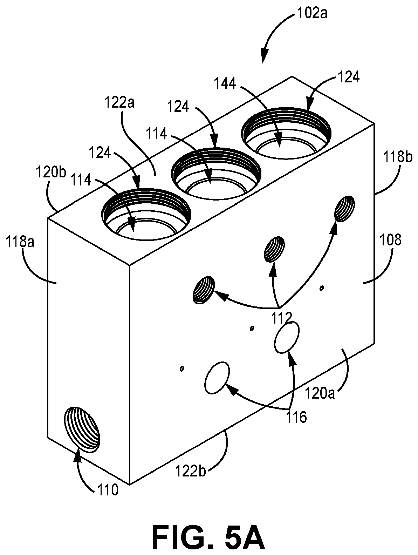

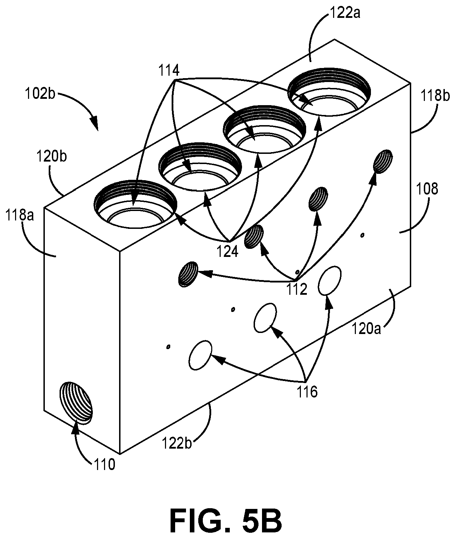

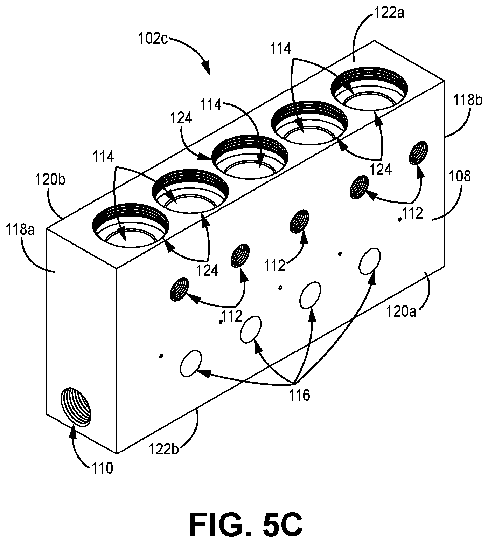

FIG. 5A is an isometric view of manifold 102a. FIG. 5B is an isometric view of manifold 102b. FIG. 5C is an isometric view of manifold 102c. FIGS. 5A-5C will be discussed together. Each of manifolds 102a-102c includes manifold body 108, supply port 110, equipment ports 112, injector cavities 114, and mount bores 116 of each manifold 102a-102c are shown. Manifold 102a, manifold 102b, and manifold 102c are substantially similar to each other, except that each configuration includes a different number of equipment ports 112 and injector cavities 114.

Manifold 102a is configured with three injector cavities 114. Three equipment ports 112 of manifold 102a are shown and extend through lateral side 120a. It is understood that manifold 102a can include additional equipment ports 112 through additional surfaces, such as vertical side 122b. Manifold 102a can receive up to three cartridge injectors 104 to control lubricant flow to three downstream locations.

Manifold 102b is configured with four injector cavities 114. Four equipment ports 112 of manifold 102b are shown and extend through lateral side 120a. It is understood that manifold 102b can include additional equipment ports 112 through additional surfaces, such as vertical side 122b. Manifold 102b can receive up to four cartridge injectors 104 to control lubricant flow to four downstream locations.

Manifold 102c is configured with five injector cavities 114. Five equipment ports 112 of manifold 102c are shown and extend through lateral side 120a. It is understood that manifold 102c can include additional equipment ports 112 through additional surfaces, such as vertical side 122b. Manifold 102c can receive up to five cartridge injectors 104 to control lubricant flow to five downstream locations.

It is understood that cartridge injectors 104 can be utilized with manifolds 102 of any desired configuration and having any desired number of equipment ports 112, such as one, two, three, four, five, six, or more.

Each of manifolds 102a-102c includes a supply port 110 that opens to a common inlet pathway within that manifold 102a-102c. That common inlet pathway is fluidly connected to each injector cavity 114 to provide lubricant for the cartridge injector 104 mounted in that injector cavity 114. Each of manifolds 102a-102c includes multiple, discrete equipment ports 112 that are each fluidly connected to a single one of the injector cavities 114. The cartridge injectors 104 mounted to the manifold 102a-102c are each connected to a common inlet flow and each provide separately metered doses of lubricant downstream through the individual equipment ports 112. The cartridge injectors 104 can each be individually removed for servicing and/or replacement without disturbing other ones of the cartridge injectors 104. The cartridge injectors 104 can be installed on manifold 102 as a single piece and removed from manifold 102 as a single piece. The cartridge injectors 104 can be installed and removed without disconnecting a supply line 35 from the supply port 110 and without disconnecting any output lines 39 from any equipment port 112.

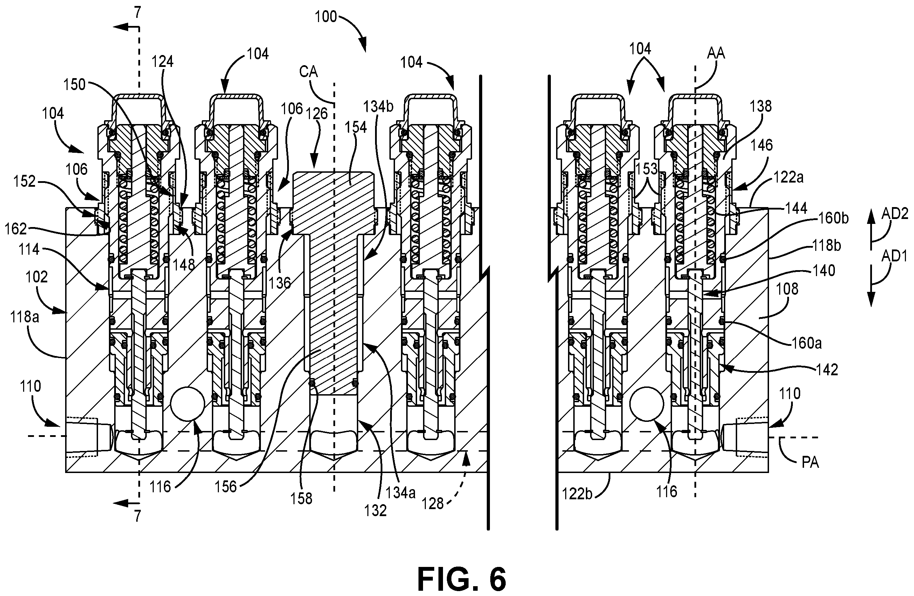

FIG. 6 is a cross-sectional view of an injector assembly 100. Injector assembly 100 is substantially similar to any one or more of the injector assemblies 33 shown in FIG. 3. For example, injector assembly 100 similarly includes cartridge injectors 104 that are individually mountable to and removable from manifold 102. Injector assembly 100 includes manifold 102, cartridge injectors 104, and spacers 106. Plug 126 is also shown.

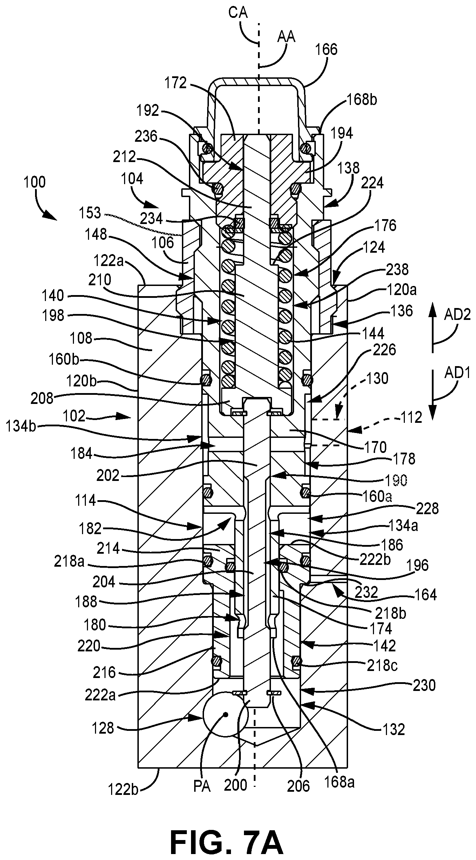

Manifold 102 includes manifold body 108, supply ports 110, equipment ports 112, injector cavities 114, mount bores 116, feed passage 128, and equipment passages 130 (FIGS. 7A-7D). Each injector cavity 114 includes receiving aperture 124, inlet bore 132, intermediate bores 134a, 134b, and connector bore 136. Each cartridge injector 104 includes cartridge body 138, poppet 140, piston 142, and poppet spring 144. Cartridge body 138 includes cartridge threads 146. Spacer 106 includes spacer bore 148, inner threads 150, and outer threads 152. Plug 126 includes plug head 154, plug shaft 156, and plug seal 158.

Manifold body 108 supports other components of injector assembly 100. Manifold body 108 defines passages that supply flows of lubricant to cartridge injectors 104 and that provide flows of lubricant downstream from cartridge injectors 104. Manifold body 108 can be formed from a metal or a composite, among other options. For example, manifold body 108 can be formed from aluminum or steel, among other options. Supply ports 110 are formed in manifold body 108. In the example shown, a supply port 110 is formed in each longitudinal end 118a, 118b of manifold body 108. The example shown includes two supply ports 110 formed in manifold body 108 such that another injector assembly 100 can be mounted downstream from and in series with injector assembly 100 to receive an inflow of lubricant from injector assembly 100. For example, a first one of supply ports 110 can form a supply inlet and the second one of supply ports 110 can form a supply outlet. A supply line 37 can be connected to manifold 102 at the inlet one of supply ports 110 to provide lubricant flow to feed passage 128 through that inlet supply port 110. A second line, such as another supply line 37 or a return line 41, can be connected to manifold 102 at the outlet one of supply ports 110 to receive lubricant from feed passage 128.

Feed passage 128 extends through manifold 102. Feed passage 128 extends fully through manifold 102 in the example shown. Feed passage 128 extends between and is fluidly connected to each of supply ports 110. Feed passage 128 is open on both longitudinal ends 118a, 118b of manifold body 108. Feed passage 128 intersects with and is fluidly connected to each injector cavity 114 in manifold body 108. As such, feed passage 128 is the sole lubricant supply source for metering and output by cartridge injectors 104. Specifically, feed passage 128 intersects with the inlet bore 132 of each injector cavity 114.

In some examples, manifold 102 includes valving to control lubricant flow to or between injector cavities 114. For example, a valve can extend into feed passage 128 at a location between adjacent injector cavities 114. The valve can be actuated to a closed state to turn off lubricant flow to all injector cavities 114 downstream of the valve. For example, the valve can extend to a handle, switch, or other actuator accessible from the exterior of manifold 102, which the user can use to actuate the valve opened or closed. Such a valve can be utilized to gang cartridge injectors 104 together to provide or prevent lubricant flow to all of those ganged cartridge injectors 104. In some examples, a valve can be associated with an individual injector cavity 114 to control lubricant flow to that injector cavity 114 without affecting lubricant flow to the other injector cavities 114.

In the example shown, the passage axis PA along which feed passage 128 extends is laterally offset from the chamber axis CA along which each cartridge chamber extends. Passage axis PA is laterally offset from the chamber axes CA such that feed passage 128 intersects with injector cavities 114 at a location radially offset from the chamber axis CA. The offset means that the entirety of the lubricant flow does not need to flow through an injector cavity 114 before flowing to the next injector cavity 114 in manifold body 108. A portion of the lubricant can divert to the injector cavity 114 to fill that injector cavity 114 while other portions of the lubricant continue downstream through feed passage 128 to fill other injector cavities 114. The radial offset between feed passage 128 and injector cavities 114 also means that the lubricant does not need to encounter and flow around elements of a cartridge injector 104 prior to flowing to another injector cavity 114, which interference could interfere with the flow. This is different from a banjo bolt 12 connection in which the banjo bolt 12 extends fully through the manifold 11 and through the center of the feed passage 17 of the manifold 11. The radial offset between passage axis PA and chamber axes CA facilitates smoother and quicker flow of lubricant and provides for more efficient pressurization and venting of the lubricant.

Injector cavities 114 extend into manifold body 108 from vertical side 122a. In the example shown, each injector cavity 114 is formed as a series of bores with progressively varying diameters. Inlet bore 132 is an innermost bore, which is furthest into manifold body 108 from vertical side 122a. Inlet bore 132 intersects with feed passage 128 to receive lubricant from feed passage 128. Intermediate bore 134a is adjacent to and extends axially from inlet bore 132 along the chamber axis CA. Intermediate bore 134a has a larger diameter than inlet bore 132. Cartridge seal 160a is supported by cartridge injector 104 and configured to interface with the surface of intermediate bore 134a to form a sealed interface therebetween. Intermediate bore 134b extends from intermediate bore 134a. Intermediate bore 134b has a larger diameter than intermediate bore 134a. Cartridge seal 160b is supported by cartridge injector 104 and configured to interface with the surface of intermediate bore 134b to form a sealed interface therebetween. One or both of intermediate bores 134a, 134b can be considered to form an outlet bore of the injector cavity 114. The equipment passage 130 intersects the injector cavity 114 at a location axially along intermediate bores 134a, 134b. In some examples, the equipment passage 130 can intersect with intermediate bore 134a. In some examples, the equipment passage 130 can intersect with intermediate bore 134b. In some examples the equipment passage 130 can intersect with injector cavity 114 at an intersection between intermediate bore 134a and intermediate bore 134b. The outlet bore formed by intermediate bores 134a, 134b has multiple, varying diameters.

Connector bore 136 extends from intermediate bore 134b to vertical side 122a. Connector bore 136 extends between intermediate bore 134b and aperture 124. Connector bore 136 has a larger diameter than intermediate bore 134b. In the example shown, connector bore 136 includes injector mount threads 162 formed within connector bore 136 and configured to secure cartridge injector 104 to manifold 102. While injector cavity 114 is described as having connector bore 136 with a larger diameter than other bores of injector cavity 114, it is understood that not all examples are so limited. In some examples, intermediate bore 134b extends to aperture 124.

Injector assembly 100 can be utilized as any one or more of injector assemblies 33A-33N of lubrication system 32. Injector assembly 100 shares many components and features with injector assembly 33. For instance, injector assembly 100 includes manifold 102 that, like manifold 34, is a solid body or block for housing multiple cartridge injectors 104 within one of injector cavities 114. Injector cavities 114 extend into manifold 102 from apertures 124 formed in an exterior surface of manifold 102 to a terminal end within manifold 102. Feed passage 128 extends through manifold 102 from the inlet one of supply ports 110 to the outlet one of supply ports 110, which supply ports 110 are formed at opposite longitudinal end faces of manifold 102 to intersect terminal portions of each injector cavity 114. Either one of supply ports 110 can be configured as the inlet one of supply ports 110 and either one of supply ports 110 can be configured as the outlet one of supply ports 110. Manifold 102 includes equipment passages 130 spaced axially along the chamber axis CA from the terminal ends of respective injector cavities 114 and from feed passage 128. Equipment passages 130 extend radially outward relative to the chamber axis CA to equipment ports 112 formed in an exterior surface of manifold 102.

Cartridge injectors 104 are mounted to manifold 102. Cartridge injectors 104 are configured to meter a volume of lubricant and drive the volume of lubricant downstream out of manifold 102 through equipment passages 130 and equipment ports 112 for transmission to discrete application points. Each cartridge injector 104 extends into and is at least partially disposed in an injector cavity 114. Cartridge injector 104 projects through aperture 124 and into injector cavity 114. In the example shown, cartridge body 138 extends through connector bore 136, through intermediate bore 134b, through intermediate bore 134a, and into inlet bore 132. Cartridge body 138 extends into and is at least partially disposed within injector cavity 114. Cartridge body 138 receives lubricant from a location within manifold body 108 and outputs lubricant into manifold body 108.

Cartridge body 138 mounts cartridge injector 104 to manifold 102. In the example shown, cartridge threads 146 are formed on the exterior of cartridge body 138 and configured to secure cartridge injector 104 relative to manifold 102. While cartridge injector 104 is shown as including threading to secure cartridge injector 104 to manifold 102, it is understood that not all examples are so limited. Cartridge injector 104 can be secured to manifold 102 in any desired manner, such as by a bayonet connection, by a clamp, etc. In the example shown, cartridge body 138 directly interfaces with spacer 106 and spacer 106 directly interfaces with manifold body 108 to secure cartridge injector 104 to manifold body 108.

Poppet 140 is at least partially disposed in cartridge body 138. Poppet 140 is configured to actuate along actuation axis AA during operation of cartridge injector 104. Poppet spring 144 interfaces with poppet 140 and is configured to bias poppet 140 in first axial direction AD1, which is an axial direction taken relative to actuation axis AA. First axial direction AD1 is an axial direction into injector cavity 114 from aperture 124. Second axial direction AD2 is opposite first axial direction AD1 and is an axial direction towards aperture 124 from inlet bore 132. Poppet 140 projects through aperture 124 and into injector cavity 114. In the example shown, poppet 140 extends through connector bore 136, through intermediate bore 134b, through intermediate bore 134a, and into inlet bore 132. Piston 142 is disposed outside of cartridge body 138. Piston 142 can be formed from a metal, such as steel, among other options. As such, cartridge body 138 and piston 142 together from an exterior of the cartridge injector 104. Piston 142 is configured to actuate along actuation axis AA during operation of cartridge injector 104. Piston 142 is configured to drive lubricant downstream from injector cavity 114 and out of manifold 102 through a respective equipment passage 130. Piston 142 can also be referred to as a dispense piston. Piston 142 is partially disposed in intermediate bore 134a and is partially disposed in inlet bore 132, in the example shown. Piston 142 and poppet 140 are configured to reciprocate along actuation axis AA and relative to cartridge body 138 and relative to manifold body 108. With cartridge injector 104 mounted in an injector cavity 114, the actuation axis AA is coaxial with the cavity axis CA.

Spacer 106 is configured to mount cartridge injector 104 to manifold 102. Spacer bore 148 extends fully through spacer 106. Inner threads 150, which can also be referred to as spacer threads, are formed on an inner radial side of spacer 106. Inner threads 150 are configured to interface with cartridge body 138 to mount cartridge injector 104 to spacer 106. Outer threads 152, which can also be referred to as spacer threads, are formed on an outer radial surface of spacer 106. Outer threads 152 are configured to interface with mount threads of manifold body 108 to mount spacer 106 to manifold body 108. Spacer 106 and an associated cartridge injector 104 are disposed coaxially on an actuation axis AA.

Spacer 106 is separate from cartridge injector 104 such that cartridge injector 104 can be removed from manifold 102 for servicing and/or replacement while spacer 106 remains mounted on manifold 102. The same or a different cartridge injector 104 can be mounted to that spacer 106 and that spacer 106 will ensure that that cartridge injector 104 outputs the desired dose volume without the user needing to adjust or manipulate components of the cartridge injector 104 itself. With cartridge injector 104 connected to spacer 106, cartridge injector 104 is not directly connected to

Spacer 106 limits the distance that cartridge injector 104 can extend into injector cavity 114. Spacer 106 can thereby set the volume of lubricant dispensed by cartridge injector 104 during each injection cycle, as discussed in more detail below. Specifically, the axial length of spacer 106 sets the distance that cartridge injector 104 can extend into injector cavity 114, thereby setting a volume of a metering chamber that meters the volume of lubricant for dosing to a component 40. A spacer 106 having a different axial length can be used to mount cartridge injector 104 to manifold 102 to change the dose volume of the lubricant. A spacer 106 with a shorter axial length decreases the dose volume and a spacer 106 with a greater axial length increases the dose volume.

Plug 126 is mountable to manifold 102. Plug 126 is configured to convert an injector cavity 114 from a dosing cavity, for dosing volumes of lubricant to a downstream location when a cartridge injector 104 is associated with the injector cavity 114, to a bypass cavity from which no lubricant is output during a lubricant injection cycle. Plug 126 fluidly separates the feed passage 128 from the equipment passage 130 of the injector cavity 114 that plug 126 is mounted within.

Plug 126 prevents lubricant flow from feed passage 128 to the equipment passage 130 associated with the injector cavity 114 that the plug 126 is disposed within. In the example shown, plug 126 is directly connected to manifold body 108 to secure plug 126 to manifold 102. Specifically, the example shown includes plug head 154 that is mounted to manifold body 108 within connector bore 136. Plug head 154 is connected to manifold body 108 by interfaced threading on the exterior of plug head 154 and interior of connector bore 136, though it is understood that plug head 154 can be secured to manifold body 108 in any desired manner. Plug 126 can mount to the same mount threads 162 that a spacer 106 connects to.

Plug shaft 156 extends from plug head 154. Plug shaft 156 extends at least partially through injector cavity 114. In the example shown, plug shaft 156 extends through intermediate bore 134b, through intermediate bore 134a, and into inlet bore 132, though it is understood that not all examples are so limited. Plug seal 158 is supported by the body of plug 126 and is configured to interface with manifold body 108. Plug seal 158 is supported by plug shaft 156 in the example shown. Plug seal 158 is disposed in a seal groove that extends into plug shaft 156. Plug seal 158 can be an elastomer seal, such as an O-ring, among other options. Plug seal 158 interfaces with plug shaft 156 and with manifold body 108 to form the fluid-tight seal therebetween that prevents lubricant flow between feed passage 128 and equipment passage 130. Plug 126 allows manifold 102 to be used to dispense lubricant to fewer locations that the number of equipment ports 112 of the manifold 102. Any desired number of plugs 126 can be inserted into manifold 102 to fluidly disconnect equipment ports 112 from the feed passage 128 and thus prevent discharge of lubricant through those equipment ports 112. The injector cavity 114 can be converted back from a bypass cavity to a dosing cavity by simply removing plug 126 and mounting a cartridge injector 104 at that injector cavity 114.

Integrating injector assembly 100 into a lubrication system, such as lubrication system 32, includes connecting supply line 37 to the inlet one of supply ports 110. Another fluid line is connected to the outlet one of supply ports 110 to connect to another injector assembly 100 or connect to valve 42A associated with return line 41A. Output lines 39 are connected to manifold body 108 at equipment ports 112. Fluid connections with manifold 102 can be accomplished using a pipe fitting, a tube fitting, a flanged joint, a welded joint, or other mechanical connections know in the art.

Injector assembly 100 can include up to an arbitrary number of cartridge injectors 104 inserted within corresponding injector cavities 114. Injector assembly 100 can include more or less cartridge injectors 104 and injector cavities 114 than the number depicted in FIG. 6 depending on the configuration of the lubrication system. Plug 126 is inserted into injector cavity 114c such that injector cavity 114c is configured as a bypass cavity while other of the injector cavities 114 are configured as dosing cavities.

Injector assembly 100 provides significant advantages. Manifold 102 defines a common feed passage 128 that provides lubricant to each injector cavity 114 of the manifold 102. Cartridge injectors 104 can be mounted in any of the injector cavities 114 of manifold 102 to control lubricant dosing and flow through that injector cavity 114. The cartridge injectors 104 can be removed as a single component and replaced as a single component without requiring manipulation of other separate components, such as a banjo bolt 12. Inserting the cartridge injector 104 into an injector cavity 114 forms fluid connections between the cartridge injector 104 and both feed passage 128 and an equipment passage 130. Only a single connection needs to be made to mechanically connect cartridge injector 104 to manifold 102 and fluidly connect cartridge injector 104 to the inlet feed passage 128 and the outlet equipment passage 130, the single connection being the mechanical connection securing cartridge injector 104 to manifold 102. **In** the example shown, the single connection is made by shifting cartridge injector 104 axially into injector cavity 114 and then rotating cartridge injector 104 on actuation axis AA to form the threaded connection that secures the cartridge injector 104 to manifold 102. The cartridge injectors 104 can be installed and uninstalled and replaced without connecting or disconnecting any lubricant lines from manifold 102.

Plug 126 facilitates modification of manifold 102 to output lubricant through less than all of the equipment ports 112 of the manifold 102. Plugs 126 can be inserted into one or more of the injector cavities 114 to convert that injector cavity 114 to a bypass chamber that does not output lubricant to an equipment port 112 associated with that plugged injector cavity 114. Plug 126 provides a fluid-tight seal within the injector cavity 114 between the inlet bore 132 that intersects with feed passage 128 and the portion of injector cavity 114 that intersects with equipment passage 130. Manifold 102 can thus quickly and easily be modified to output to a desired number of output lines that is less than the number of equipment ports 112.

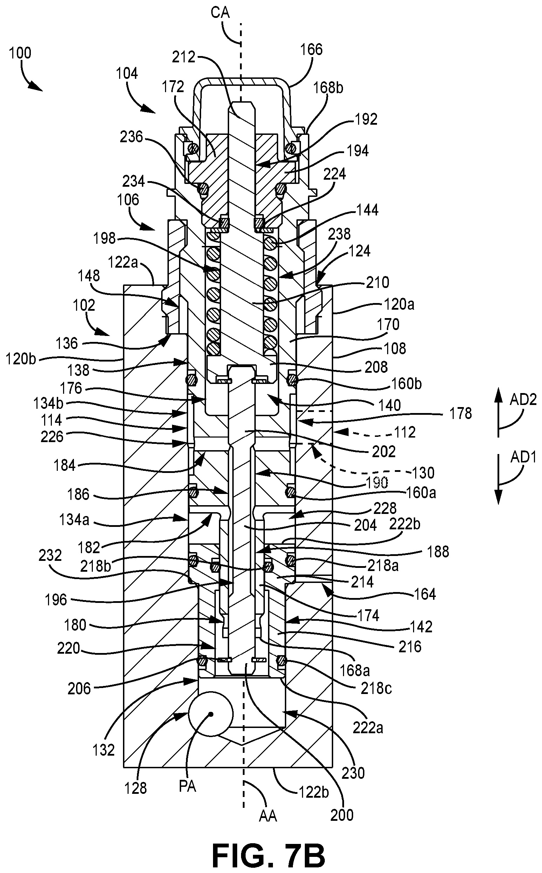

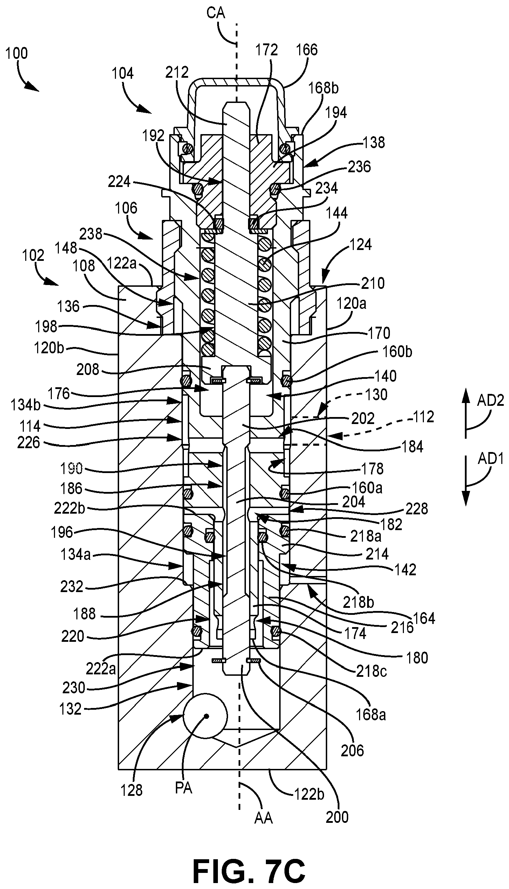

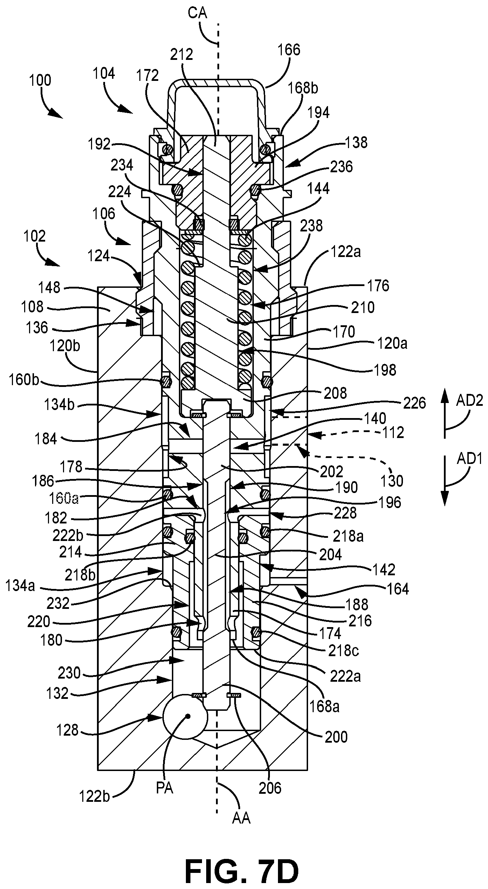

FIG. 7A is a cross-sectional view taken along line 7-7 in FIG. 6 showing cartridge injector 104 in a first state. FIG. 7B is a cross-sectional view taken along line 7-7 in FIG. 6 showing cartridge injector 104 in a second state. FIG. 7C a cross-sectional view taken along line 7-7 in FIG. 6 showing cartridge injector 104 in a third state. FIG. 7D is a cross-sectional view taken along line 7-7 in FIG. 6 showing cartridge injector 104 in a fourth state. FIGS. 7A-7D will be discussed together.

Manifold body 108, equipment ports 112, injector cavity 114, feed passage 128, equipment passage 130, and weep hole 164 of manifold 102 are shown. Cartridge injector 104 includes cartridge body 138, poppet 140, piston 142, poppet spring 144, and dust cap 166. Cartridge body 138 extends between body ends 168a, 168b and includes main body 170, end cap 172, end shaft 174, central cavity 176, spring chamber 238, supply groove 178, inlet passages 180, transfer passages 182, outlet passages 184, and lubricant passage 186. Lubricant passage 186 is divided into load passage 188 and dose passage 190. End cap 172 includes cap bore 192 and cap flange 194. Poppet 140 includes meter shuttle 196 and meter pin 198. Meter shuttle 196 includes supply head 200, dose head 202, and shuttle shaft 204. Meter pin 198 includes spring head 208, pin body 210, and indicator shaft 212. Piston 142 includes piston head 214, piston shaft 216, piston seal 218a, piston seal 218b, piston seal 218c, and piston bore 220.

Cartridge body 138 extends along actuation axis AA between body ends 168a, 168b. Body end 168a is an axial end of cartridge body 138 oriented in axial direction AD1 and into the injector cavity 114. Body end 168b is an axial end of cartridge body 138 opposite body end 168a and oriented in second axial direction AD2 out of injector cavity 114. In the example shown, cartridge body 138 is partially disposed in injector cavity 114 such that body end 168a is disposed within injector cavity 114 and body end 168b is disposed outside of injector cavity 114. Feed passage 128 is configured to provide lubricant to injector cavity 114 and equipment passage 130 is configured to receive lubricant from injector cavity 114. The passage axis PA is closer to lateral side 120b of manifold body 108 than chamber axes CA. While cartridge injector 104 receives lubricant from feed passage 128, inlet passages 180 are not disposed within feed passage 128 itself. No element of cartridge injector 104 extends through feed passage 128. In the example shown, no element of cartridge injector 104 extends into feed passage 128. As such, lubricant flow through feed passage can be unobstructed.

Main body 170 of cartridge injector 104 forms a portion of cartridge body 138 that interfaces with portions of manifold 102. Main body 170 is configured to mount cartridge injector 104 to manifold 102. Main body 170 is partially disposed within injector cavity 114 and partially disposed outside of injector cavity 114 in the example shown. End shaft 174 is formed at an axial end of main body 170. End shaft 174 has a smaller diameter than main body 170 and projects in first axial direction AD1 away from main body 170 and further into injector cavity 114. End shaft 174 extends from main body 170 to body end 168b.

Supply groove 178 is formed in an exterior surface of cartridge body 138. Specifically, supply groove 178 is formed in a portion of main body 170. Supply groove 178 extends radially into the exterior of cartridge body 138 to reduce the diameter of cartridge body 138 along supply groove 178. Supply groove 178 can extend fully annularly around cartridge body 138. Supply groove 178 at least partially defines an outlet chamber 226 into which lubricant is output from cartridge body 138. Outlet chamber 226 is formed as an annular chamber defined by cartridge body 138 and the surface of manifold 102 defining injector cavity 114. Outlet chamber 226 is disposed radially between cartridge body 138 and manifold body 108. Outlet chamber 226 being an annular chamber allows the outlet passages 184 of cartridge injector 104 to be oriented in any desired orientation relative to actuation axis AA while still providing flow to equipment passage 130. The outlet passages 184 do not need to be aligned with the equipment passage 130 to facilitate flow to and through equipment passage 130.

Central cavity 176 extends axially through cartridge body 138 from body end 168a to body end 168b. Central cavity 176 extends fully through cartridge body 138 in the example shown. Central cavity 176 is formed through main body 170 and end shaft 174. In the example shown, central cavity 176 defines both dry chambers and wet chambers within cartridge body 138. The dry chambers are configured to be isolated from the lubricant flow during operation and the wet chambers are configured to be exposed to the lubricant flow during operation.

Spring chamber 238 is formed within cartridge body 138. Spring chamber 238 extends into cartridge body 138 from body end 168b. Spring chamber 238 forms a dry portion of the central cavity 176. Spring chamber 238 is configured as a dry chamber that is isolated from the lubricant flow during operation.

Inlet passages 180, transfer passages 182, outlet passages 184, and lubricant passage 186 are configured as wet portions of cartridge body 138 through which lubricant flows during operation of cartridge injector 104. Lubricant passage 186 is formed as a wet portion of central cavity 176. Lubricant passage can be cylindrical and is disposed on actuation axis AA.

Inlet passages 180 are formed through cartridge body 138 and intersect lubricant passage 186. Inlet passages 180 extends from outer openings that are open on an exterior of cartridge body 138 to inner openings that are open to lubricant passage 186. More specifically, inlet passages 180 extend to intersect with load passage 188 of lubricant passage 186. Inlet passages 180 are formed through cartridge body 138 at a location proximate to body end 168b. In the example shown, inlet passages 180 are formed through end shaft 174. Inlet passages 180 are exposed within and in fluid communication with inlet bore 132 of injector cavity 114 throughout operation. Cartridge body 138 can include multiple inlet passages 180 extending through cartridge body 138 between the exterior of cartridge body 138 and lubricant passage 186. Inlet passages 180 can form an annular array of passages around cartridge body 138. Inlet passages 180 can form an array of passages extending circumferentially about cartridge body 138. Inlet passages 180 can be evenly or unevenly arrayed about cartridge body 138.

Transfer passages 182 extend through cartridge body 138 from an exterior of cartridge body 138 to central cavity 176. Transfer passages 182 extend from outer openings that are open on an exterior of cartridge body 138 to inner openings that are open to lubricant passage 186. In the embodiment shown, transfer passages 182 intersect cartridge body 138 at a junction between main body 170, which can be considered to form a major exterior diameter portion of cartridge body 138, and end shaft 174, which can be considered to form a minor exterior diameter portion of cartridge body 138. Transfer passages 182 are disposed axially between inlet passages 180 and outlet passages 184. Cartridge body 138 can include multiple transfer passages 182 extending through cartridge body 138 between the exterior of cartridge body 138 and the axial lubricant passage 186. Transfer passages 182 intersect with lubricant passage 186 at an intersection between load passage 188 and dose passage 190. Transfer passages 182 can form an annular array of passages around cartridge body 138. Transfer passages 182 can form an array of passages extending circumferentially about cartridge body 138. Transfer passages 182 can be evenly or unevenly arrayed about cartridge body 138.

Outlet passages 184 extend through cartridge body 138 from an exterior of cartridge body 138 to lubricant passage 186. Outlet passages 184 extend from outer openings that are open on an exterior of cartridge body 138 to inner openings that are open to lubricant passage 186. More specifically, outlet passages 184 extend to intersect with dose passage 190. In the example shown, outlet passages 184 are formed through main body 170. Outlet passages 184 are disposed axially between the spring chamber 238 that poppet spring 144 is disposed within and inlet passages 180. Outlet passages 184 are disposed axially between the dry spring chamber 238 that poppet spring 144 is disposed within and transfer passages 182. Cartridge body 138 can include multiple outlet passages 184 extending through cartridge body 138 between the exterior of cartridge body 138 and lubricant passage 186. Outlet passages 184 can form an annular array of passages around cartridge body 138. Outlet passages 184 can form an array of passages extending circumferentially about cartridge body 138. Outlet passages 184 can be evenly or unevenly arrayed about cartridge body 138.

Portions of central cavity 176 define the lubricant flowpath through cartridge injector 104. Lubricant passage 186 is configured to transport lubricant axially within cartridge body 138. Lubricant passage 186 provides a pathway for lubricant to flow between inlet passages 180 and outlet passages 184. More specifically, lubricant passage 186 provides a pathway for lubricant to flow from inlet passages 180 to transfer passages 182 and provides a pathway for lubricant to flow from transfer passages 182 to outlet passages 184.

Load passage 188 is defined radially between poppet 140 and cartridge body 138. Load passage 188 is formed within cartridge body 138. Specifically, load passage 188 is formed within end shaft 174 of cartridge body 138. Load passage 188 provides a flowpath for lubricant to flow from inlet passages 180 to transfer passages 182. Load passage 188 can be formed by the bore through end shaft 174 having a larger diameter than shuttle shaft 204, by grooves formed in the exterior of shuttle shaft 204, etc.

Dose passage 190 is defined radially between poppet 140 and cartridge body 138. Dose passage 190 is formed within cartridge body 138. Specifically, dose passage 190 is formed within main body 170 of cartridge body 138. Dose passage 190 provides a flowpath for lubricant to flow from transfer passages 182 to outlet passages 184. Dose passage 190 can be formed by the bore through main body 170 having a larger diameter than shuttle shaft 204, by grooves formed in the exterior of shuttle shaft 204, etc. Dose passage 190 can be disposed coaxially with load passage 188 on actuation axis AA.

Load passage 188 and dose passage 190 are disposed coaxially. Load passage 188 and dose passage 190 form portions of the axial lubricant passage 186 within cartridge body 138. The axial lubricant flow through cartridge body 138 is aligned on actuation axis A-A. The axial lubricant flow through cartridge body 138 is coaxial with the movement of piston 142 and the movement of poppet 140. Lubricant flows axially through cartridge body 138 from inlet passages 180 to outlet passages 184. Cartridge injector 104 does not include any axial flow passages that are radially offset from the actuation axis AA, unlike passage 16 of injector 10. The coaxial flow along actuation axis AA allows for a more compact cartridge body 138, reducing material costs and simplifying manufacture. The coaxial flow along actuation axis A-A reduces manufacturing costs as additional offset passages are eliminated. The axial flow channels through cartridge body 138 are disposed coaxially with chamber axis CA of the injector cavity 114 that the cartridge injector 104 is disposed within.

Cartridge body 138 retains cartridge seals 160a, 160b within grooves extending circumferentially about actuation axis AA. Outlet passages 184 are disposed axially between cartridge seals 160a, 160b. Cartridge seal 160a prevents lubricant leakage between outlet chamber 226 and metering chamber 228. Cartridge seal 160b prevents lubricant leakage axially outward in second axial direction AD2 from outlet chamber 226. Cartridge seals 160a, 160b can be considered to form static seals that are disposed between two static elements throughout operation. The cartridge body 138 does not shift relative to the manifold body 108 and the manifold body 108 does not shift relative to the cartridge body 138. Cartridge seal 160b has a larger diameter than cartridge seal 160a to facilitate cartridge seal 160b sealing against the surface of manifold body 108 defining intermediate bore 134b while cartridge seal 160a seals against the surface of the smaller diameter intermediate bore 134a.

Cartridge seal 160a is disposed at a first axial location along the actuation axis AA and cartridge seal 160b is disposed at a second axial location along actuation axis AA. The first axial location is disposed axially between transfer passages 182 and outlet passages 184. The second axial location is disposed axially between outlet passage 184 and aperture 124.

End cap 172 encloses an end of cartridge body 138. End cap 172 is disposed at an opposite axial end of cartridge injector 104 from inlet passages 180. End cap 172 includes cap bore 192 that extends axially through end cap 172. Cap bore 192 is concentric with central cavity 176. Cap flange 194 projects radially outwards relative to a body of end cap 172. Cap flange 194 is configured to abut an end face of main body 170. End cap 172 can be mounted to main body 170 in any desired manner, such as by interfaced threading between threads on the exterior of end cap 172 and threads on the interior of main body 170. Indicator shaft 212 of poppet 140 is disposed within and can extend through cap bore 192. Indicator shaft 212 is configured to provide visual indication that cartridge injector 104 regarding the state of a lubricant injection cycle.

Poppet seal 234 is disposed radially between poppet 140 and end cap 172. Specifically, poppet seal 234 is disposed between indicator shaft 212 and end cap 172. In the example shown, poppet seal 234 is supported by end cap 172 and remains stationary relative to end cap 172. Poppet seal 234 is a dynamic seal in that poppet 140 can move relative to poppet seal 234. In some examples, a groove is formed in the exterior of poppet 140 and poppet seal 234 is disposed in that groove to ride with poppet 140 along actuation axis AA. Poppet seal 234 inhibits particulate matter from entering into spring chamber 238.

Cap seal 236 is disposed between end cap 172 and cartridge body 138. Cap seal 236 provides a fluid-tight seal between end cap 172 and cartridge body 138. Cap seal 236 prevents particulate from entering into spring chamber 238. Cap seal 236 and poppet seal 234 together seal one axial end of spring chamber 238.

Dust cap 166 is mounted to cartridge body 138. Dust cap 166 is disposed adjacent to end cap 172. Dust cap 166 encloses the axial end of central cavity 176 through cartridge body 138. Dust cap 166 can be formed from a transparent material to allow a user to visually see indicator shaft 212 through dust cap 166. Dust cap 166 is configured to prevent dust or other particulate from entering between poppet 140 and end cap 172 and into central cavity 176.

Poppet 140 is at least partially disposed within cartridge body 138. Poppet 140 extends axially within cartridge body 138. Poppet 140 extends axially within central cavity 176 and cap bore 192. Poppet 140 extends axially within lubricant passage 186. In the example shown, poppet 140 extends axially through lubricant passage 186. Poppet 140 is configured to control flow of lubricant through cartridge injector 104. Poppet 140 is configured to shift along actuation axis A-A between a first poppet position (shown in FIGS. 7A and 7D) and a second poppet position (shown in FIGS. 7B and 7C). In the first poppet position, poppet 140 fluidly connects inlet passages 180 and transfer passages 182 and fluidly disconnects transfer passages 182 from outlet passages 184. The first poppet position is associated with the state of cartridge injector 104 prior to a lubricant injection cycle and at the end of a lubricant injection cycle. In the second poppet position, poppet 140 fluidly connects transfer passages 182 and outlet passages 184 and fluidly disconnects transfer passages 182 from inlet passages 180. The second poppet position is associated with the state of cartridge injector 104 during lubricant injection and prior to venting lubricant pressure.

Poppet 140 includes a poppet shaft that extends axially within cartridge body 138. The poppet shaft is formed by meter shuttle 196 and meter pin 198 that are connected together. Meter shuttle 196 is disposed at least partially within central cavity 176. Meter shuttle 196 extends between dry portions of central cavity 176 and wet portions of central cavity 176. Meter shuttle 196 is at least partially disposed within and is configured to translate within lubricant passage 186. Meter shuttle 196 is exposed to lubricant flowing through cartridge injector 104 during operation.

Meter shuttle 196 is axially elongate. Meter shuttle 196 includes shuttle shaft 204 that extends axially between supply head 200 and dose head 202. Supply head 200 has a larger diameter than shuttle shaft 204. Dose head 202 has a larger diameter than shuttle shaft 204. Supply head 200 and dose head 202 can have the same diameter such that lubricant pressure acting on the axial end of dose head 202 oriented in first axial direction AD1 balances with lubricant pressure acting on the axial end of supply head 200 oriented in axial direction AD2. Projection 206 extends radially outward from supply head 200. Projection 206 is a radial enlargement of poppet 140 and provides a surface for the lubricant pressure to act on to displace poppet 140 in second axial direction AD2, as discussed in more detail below. Projection 206 can be formed separately from meter shuttle 196 and connected to meter shuttle 196.

Meter pin 198 is axially elongate. Meter pin 198 interfaces with meter shuttle 196 to move with meter shuttle 196. In some examples, meter pin 198 is connected to meter shuttle 196, such as by interfaced threading among other connection options. It is understood, however, that other examples of cartridge injector 104 can include a poppet 140 that is formed with a single piece poppet shaft. For example, meter pin 198 and meter shuttle 196 can be formed as a monolithic structure.

Meter pin 198 is at least partially disposed within the spring chamber 238. Spring head 208 is disposed at an end of meter pin 198 interfacing with meter shuttle 196. In the example shown, a portion of meter shuttle 196 extends into a bore within spring head 208 to form the interface between meter shuttle 196 and meter pin 198. Spring head 208 can be considered to form a radially extending flange of meter pin 198. Spring head 208 extends radially outward relative to other portions of meter pin 198. Spring head 208 includes a spring surface that is oriented in axial direction AD2. The spring surface of spring head 208 is configured to interface with poppet spring 144. Poppet spring 144 exerts driving force on poppet 140 at spring head 208. Spring head 208 abuts a portion of cartridge body 138 with poppet 140 in the first poppet position. The portion of cartridge body 138 interfacing with spring head 208 can form the base of spring chamber 238. Spring head 208 interfacing with that portion of cartridge body 138 defines the limit of axial movement of poppet 140 in first axial direction AD1.

Pin body 210 extends axially from spring head 208. Indicator shaft 212 extends axially from pin body 210. Pin body 210 has a smaller diameter than spring head 208. Indicator shaft 212 has a smaller diameter than pin body 210. Indicator shaft 212 extends into cap bore 192. Indicator shaft 212 is configured to extend axially outward beyond end cap 172 in second axial direction AD2 during a lubricant injection cycle to provide the visual indication that dispense is occurring.

Shoulder 224 is formed at the intersection between pin body 210 and indicator shaft 212. Shoulder 224 reduces the diameter between pin body 210 and indicator shaft 212. Shoulder 224 is shown as a sloped surface that extends axially and radially, though it is understood that not all examples are so limited. For example, shoulder 224 can be formed as a planar surface oriented orthogonal to the actuation axis AA. Shoulder 224 limits axial displacement of poppet 140 relative to cartridge body 138. Shoulder 224 extends to have a larger diameter than cap bore 192. Shoulder 224 engaging with end cap 172 prevents further displacement of poppet 140 in second axial direction AD2.

Poppet spring 144 circumscribes a portion of poppet 140 within spring chamber 238. Poppet spring 144 is disposed fully within spring chamber 238. Poppet spring 144 extends between end cap 172 and spring head 208 and interfaces with spring head 208 to bias poppet 140 in first axial direction AD1. Poppet spring 144 is disposed within a dry area of cartridge body 138. Poppet spring 144 is configured to not be exposed to or be disposed within the flow of lubricant through manifold 102 and cartridge injector 104. Poppet spring 144 is configured to drive poppet 140 from the second poppet position and back to the first poppet position.

As assembled within cartridge body 138, poppet 140 at least partially defines the lubricant flowpaths through cartridge injector 104. Meter shuttle 196 extends within end shaft 174 and at least partially defines load passage 188 formed between inlet passages 180 and transfer passages 182. The load passage 188 is defined between an exterior surface of meter shuttle 196 and an interior surface of end shaft 174. Meter shuttle 196 extends within cartridge body 138 and at least partially defines dose passage 190 formed between transfer passages 182 and outlet passages 184. The dose passage 190 is defined between an exterior surface of meter shuttle 196 and an interior surface of cartridge body 138. Supply head 200 and dose head 202 are configured to open and close the flowpaths between inlet passages 180 and transfer passages 182 and between transfer passages 182 and outlet passages 184, respectively, and as discussed in more detail below. In some examples, a peripheral surface of supply head 200 and an interior surface of cartridge body 138 are complimentarily honed, forming a seal interface therebetween. In some examples, a peripheral surface of dose head 202 and an interior surface of cartridge body 138 are complimentarily honed, forming a seal interface therebetween.

Piston 142 is configured to drive lubricant downstream out of cartridge injector 104 during a lubricant injection cycle. Piston 142 is disposed coaxially with poppet 140 and cartridge body 138 on actuation axis AA. Piston 142 is configured to shift along actuation axis AA to dispense lubricant and meter a volume of lubricant for a subsequent dispense cycle. Piston 142 is configured to shift along actuation axis A-A between a first piston position (shown in FIGS. 7A and 7B) and a second piston position (shown in FIGS. 7C and 7D). In the first piston position, piston 142 is shifted in first axial direction AD1 away from transfer passages 182.

Metering chamber 228 is formed within manifold body 108 radially between cartridge body 138 and manifold body 108. Metering chamber 228 is at a largest operating volume with piston 142 in the first piston position. The first piston position is associated with the state of cartridge injector 104 prior to a lubricant actually being ejected from cartridge injector 104. In the second piston position, piston 142 is shifted in axial direction AD2 relative to the first piston position to decrease the volume of metering chamber 228. Metering chamber 228 is at a smallest operating volume with piston 142 in the second piston position. Piston 142 is configured to drive lubricant out of metering chamber 228 and through transfer passages 182, dose passage 190, and outlet passages 184 to equipment passage 130 as piston 142 shifts from the first piston position to the second piston position. The second piston position is associated with the state of cartridge injector 104 after lubricant is emitted from cartridge injector 104 and prior to resetting for another lubricant injection cycle.

Piston 142 includes piston bore 220 that extends axially through piston 142. Piston bore 220is disposed concentrically with lubricant passage 186. Cartridge body 138 extends into piston bore 220. In the example shown, end shaft 174 of cartridge body 138 extends into piston bore 220. End shaft 174 extends into piston bore 220 and aligns piston 142 on actuation axis AA.

Piston 142 extends axially between piston end 222a and piston end 222b. Piston end 222a is oriented in first axial direction AD1 and into injector cavity 114. Piston end 222b is oriented in second axial direction AD2 and towards main body 170. Piston head 214 is formed as a radially enlarged portion of piston 142 relative to actuation axis A-A. Piston shaft 216 extends axially away from piston head 214. Piston shaft 216 extends away from piston head 214 such that piston head 214 is disposed axially between piston shaft 216 and main body 170. Piston head 214 and piston shaft 216 can be considered to form a body of piston 142. Piston head 214 can also be referred to as a flange that extends radially outward from the cylindrical piston shaft 216. In the example shown, piston head 214 has a larger diameter relative to actuation axis AA than piston shaft 216. Piston 142 has dual exterior diameters in the example shown.

Piston head 214 is disposed within intermediate bore 134a. Piston head 214 has a larger diameter than inlet bore 132 portion of injector cavity 114. The larger diameter piston head 214 is configured to interface with shelf 232 that is formed at the intersection between the larger diameter intermediate bore 134a and the smaller diameter inlet bore 132. Shelf 232 is configured to interface with an axial side of piston head 214 opposite piston end 222a. Shelf 232 interfaces with piston head 214 to limit axial displacement of piston 142 in first axial direction AD1.

Sealing elements fluidly isolate regions of the assembly. Sealing elements can include O-rings and/or resilient metal seals housed within a groove or retained at a junction between adjacent components. Piston seals 218a-218c prevent lubricant crossflow between feed passage 128 and metering chamber 228.

Piston seal 218a is supported on an exterior of piston 142. In the example shown, piston seal 218a is supported on an exterior radial surface of piston head 214. Piston seal 218a is disposed in a groove formed in piston head 214. Piston seal 218a is configured to extend between and fluidly seal against piston 142 and manifold body 108. Piston seal 218a seals between piston 142 and the portion of manifold body 108 defining intermediate bore 134a. Piston seal 218a can be an annular seal that extends fully around piston 142. Piston seal 218a can be an elastomer seal, such as an O-ring, among other options. Piston seal 218a prevents lubricant leakage between metering chamber 228 and inlet chamber 230 during operation.

Piston seal 218b is supported on an interior of piston 142. In the example shown, piston seal 218b is supported on an inner radial surface of piston head 214. It is understood, however, that piston seal 218b can be disposed at any desired location along piston bore 220 to facilitate continuous sealing engagement with cartridge body 138. Piston seal 218b is configured to extend between and fluidly seal against piston 142 and cartridge body 138. In the example shown, piston seal 218b seals against end shaft 174 throughout operation. Piston seal 218b is disposed axially between inlet passages 180 and transfer passages 182 throughout operation. Piston seal 218b can be an annular seal that extends fully around actuation axis AA. Piston seal 218b can be an elastomer seal, such as an O-ring, among other options. Piston seal 218b prevents lubricant leakage between piston 142 and cartridge body 138.

Piston seal 218c is supported on an exterior of piston 142. In the example shown, piston seal 218c is supported on an exterior radial surface of piston shaft 216. Piston seal 218c is disposed in a groove formed in piston shaft 216. Piston seal 218c is configured to extend between and fluidly seal against piston 142 and manifold body 108. Piston seal 218c seals between piston 142 and the portion of manifold body 108 defining inlet bore 132. Piston seal 218c can be an annular seal that extends fully around piston 142. Piston seal 218c can be an elastomer seal, such as an O-ring, among other options. Piston seal 218c prevents lubricant leakage from metering chamber 228 to an area axially between piston seal 218a and piston seal 218c and radially between piston 142 and manifold body 108 during operation. In the example shown, piston seal 218c has a smaller diameter than piston seal 218a.

Piston seal 218a, piston seal 218b, and piston seal 218c are formed as dynamic seals that move along actuation axis A-A and relative to manifold body 108 and cartridge body 138 during operation. Piston seal 218a and piston seal 218c maintain sealing engagement with manifold body 108 and slide along manifold body 108. Piston seal 218b maintains sealing engagement with cartridge body 138 and slides along cartridge body 138.

Cartridge injector 104 does not include any springs in the lubricant flowpath. Any springs of cartridge injector 104 are disposed outside of the lubricant flowpath and are not exposed to the injection lubricant during operation. The example shown includes a single spring (poppet spring 144) that is disposed within a dry spring chamber 238. The poppet spring 144 is disposed in a dry portion of central cavity 176. There are no springs that reset any moving components of cartridge injector 104 (e.g., reset piston 142 or poppet 140) that are disposed in the lubricant flow through cartridge injector 104.

Poppet spring 144, which can also be referred to as a reset spring, is spaced from piston 142 in second axial direction AD2. Poppet spring 144 is disposed in a downstream direction from the lubricant flowpaths through cartridge injector 104. Poppet spring 144 is disposed in a downstream direction from the piston 142. Piston 142 is disposed in an upstream direction from poppet spring 144 relative to the flowpaths through cartridge body 138.

In the example shown, cartridge injector 104 does not include any springs associated with piston 142. Piston 142 is not actuated by any spring. Instead, piston 142 is pressure driven and actuated by lubricant pressure. The lubricant flow provided to cartridge injector 104 for metering and dispense is the same lubricant flow that drives piston 142 from the first piston position to the second piston position. The lubricant flow provided to cartridge injector 104 for metering and dispense is the same lubricant flow that drives piston 142 from the second piston position to the first piston position. The lubricant flow drives piston 142 to emit the set volume from the metering chamber 228, refills metering chamber 228, and drives piston 142 back to the first piston position to prime cartridge injector 104 with lubricant for a subsequent injection cycle. Piston 142 being pressure actuated eliminates wear components (e.g., springs) from cartridge injector 104 and provides for a simpler cartridge injector 104 that requires less maintenance and fewer parts.

While piston 142 is not axially restrained during operation, it is understood that piston 142 can be retained on other components of cartridge injector 104 while cartridge injector 104 is uninstalled, such that cartridge injector 104 is a unitary component during installation. For example, projection 206 can have a larger diameter than the opening through piston bore 220 that directly opposes end shaft 174 and supports piston seal 218b. When cartridge injector 104 is uninstalled, cartridge body 138 is disconnected from manifold 102 (e.g., by unthreading cartridge body 138 from spacer 106) and pulled in second axial direction AD2. Poppet 140 is retained within cartridge body 138 and pulled in second axial direction AD2 by cartridge body 138. Projection 206 can catch on the body of piston 142 within piston bore 220 and then pull piston 142 in second axial direction AD2. In some examples, piston 142 and cartridge body 138 are sized such that end shaft 174 still extends into piston bore 220 when projection 206 catches within piston bore 220. Such a configuration maintains concentricity between piston 142 and cartridge body 138. Cartridge injector 104 can thus be uninstalled as a single unitary component. Cartridge injector 104 can be installed as a single unitary component. Piston 142 is the first portion of cartridge injector 104 inserted into injector cavity 114 and can align cartridge body 138 on cartridge axis CA (e.g., due to concentric alignment between piston 142 and end shaft 174). Cartridge body 138 is shifted in first axial direction AD1 into injector cavity 114 and can engage piston 142 to drive piston 142 further into injector cavity 114. Cartridge injector 104 is connected to manifold body 108 (e.g., by threading cartridge body 138 onto spacer 106).

Piston 142 and poppet 140 radially overlap with each other throughout operation, with cartridge injector 104 in the first state, the second state, the third state, and the fourth state. Components can be considered to radially overlap with each other when the components are disposed at a common axial location along an axis such that a radial line extending from the axis extends through each of those radially overlapping components. At least a portion of poppet 140 is disposed radially within piston 142. In some states of cartridge injector 104, poppet 140 extends fully through piston 142 to project through each axial end of piston bore 220. In some states of cartridge injector 104 (e.g., the second state) poppet 140 does not extend fully axially through piston 142. As such at least a portion of the piston 142 can be disposed upstream of an upstream-most end of the poppet 140. Piston 142 is disposed around the actuation axis AA and radially outside of poppet 140.

In the example shown, no portion of piston 142 axially overlaps with a portion of meter shuttle 196. Components can be considered to axially overlap with each other when the components are disposed at a common radial distance from and circumferential location about an axis such that an axial line parallel with the axis extends through each of those axially overlapping components. The piston 142 not axially overlapping with the meter shuttle 196 allows for piston 142 to seat on manifold body 108 and be disconnected from cartridge body 138. This allows the poppet 140 to be shifted axially relative to piston 142 without concern for interference between poppet 140 and piston 142. Such a configuration facilitates altering the volume of metering chamber 228 by changing the distance that cartridge injector 104 extends into injector cavity 114.

Piston 142 radially overlaps with portions of cartridge body 138 throughout operation but is disconnected from cartridge body 138. Piston 142 can move axially relative to cartridge body 138 while end shaft 174 interfaces with piston 142 within piston bore 220 to guide the axial movement of piston 142. Piston 142 defines at least a portion of the exterior of cartridge injector 104. The exterior of cartridge injector 104 is formed by cartridge body 138 and piston 142. Cartridge injector 104 interfaces with manifold 102 at a mechanical connection (e.g., directly between cartridge body 138 and manifold 102 or via spacer 106) and interfaces with manifold body 108 at static seal locations and dynamic seal locations. The static seal locations are formed between cartridge body 138 and manifold body 108 (e.g., by cartridge seals 160a, 160b). The dynamic seal locations are formed between piston 142 and manifold body 108 (e.g., by piston seal 218a and piston seal 218c). The dynamic sealing locations move relative to manifold body 108 during operation (e.g., as piston 142 reciprocates along actuation axis A-A), while the static seal locations remain stationary relative to manifold body 108 during operation.

Weep hole 164 extends through manifold body 108 and intersects with injector cavity 114. Weep hole 164 intersects injector cavity 114 at a location axially between piston seal 218a and piston seal 218c and radially between piston 142 and manifold body 108. Weep hole 164 provides a pathway for any lubricant that does leak into that area to exit from manifold body 108. Lubricant leaking from weep hole 164 provides a visual indicator to the user that leakage is occurring and servicing of that cartridge injector 104 is required. Weep hole 164 also provides a vent path for air to enter into and exit from the area axially between piston seal 218a and piston seal 218c and radially between piston 142 and manifold body 108 as piston 142 reciprocates, preventing over-pressurization and preventing formation of an undesirable vacuum condition.

Spacer 106 is a cylindrical tube circumscribing cartridge body 138 at an exterior end of cartridge injector 104. Spacer 106 attaches to cartridge body 138 via a threaded interface between female threads of spacer 106 and male threads of cartridge injector 104. Spacer 106 attaches to manifold body 108 by a threaded interface between male threads of spacer 106 and female threads of manifold 102. Spacer 106 affixes cartridge injector 104 to manifold 102 as well as defines a maximum volume of metering chamber 228, by limiting a distance that cartridge injector 104 can extend into injector cavity 114, thereby defining a distance that piston 142 can travel relative to cartridge body 138. Cartridge injector 104 can be disassembled from manifold 102 by breaking the connection between cartridge body 138 and spacer 106, such as by rotating cartridge body 138 on actuation axis AA and relative to spacer 106 to break the threaded connection therebetween, permitting spacer 106 to remain assembled to manifold 102 while cartridge injector 104 is removed. Cartridge injector 104 can be reassembled to manifold 102, or replaced with a different cartridge injector 104, without resetting the lubrication volume of metering chamber 228, which is determined by an axial length of spacer 106. In the example shown, spacer 106 includes tool interface 153 that is configured to interface with a tool (e.g., wrench) to install and uninstall spacer 106 from manifold 102. The tool interface 153 is disposed outside of manifold body 108.

During operation, cartridge injector 104 is initially in the first state shown in FIG. 7A. Poppet spring 144 biases poppet 140 in first axial direction AD1 to the first poppet position in which spring head 208 abuts an interior surface of cartridge body 138. Piston 142 is initially displaced in second axial direction AD2 and in the first piston position.

With poppet 140 in the first poppet position, supply head 200 of meter shuttle 196 is spaced in first axial direction AD1 from inlet passages 180. The inlet passages 180 are in fluid communication with inlet chamber 230 and feed passage 128. The inlet passages 180 are not blocked by meter shuttle 196 and lubricant can freely flow through inlet passages 180, load passage 188 and transfer passages 182. Metering chamber 228 is thus fluidly connected to inlet chamber 230. Transfer passages 182 are fluidly isolated from outlet passages 184 with poppet 140 in the first poppet position. Meter shuttle 196 fluidly disconnects transfer passages 182 from outlet passages 184. In the example shown, dose head 202 seals against cartridge body 138 to fluidly disconnect transfer passages 182 and outlet passages 184. Specifically, dose head 202 is disposed within a portion of lubricant passage 186 seals against an inner radial surface of cartridge body 138. Dose head 202 can directly interface with cartridge body 138 to seal with cartridge body 138.

The pump 38 of the lubrication system 32 is activated, increasing lubricant pressure through feed passage 128 and into inlet chamber 230. Valve 42 closes and pump 38 of lubrication system 32 increases pressure within supply line 37 and feed passage 128. Lubricant flows through inlet passages 180 and load passage 188 to transfer passages 182. Lubricant is output from transfer passages 182 to increase a lubricant pressure within metering chamber 228. The lubricant pressure builds within inlet chamber 230 until the lubricant pressure acting on poppet 140, such as acting on projection 206 to bias poppet 140 in second axial direction AD2, exceeds the biasing force applied to poppet 140 by poppet spring 144. The lubricant pressure exceeding the spring force cases poppet 140 to shift in second axial direction AD2 from the first poppet position to the second poppet position, placing cartridge injector 104 in the second state shown in FIG. 7B.

As poppet 140 transitions to the second poppet position, supply head 200 seals the lubricant pathway between inlet passages 180 and lubricant passage 186. In the example shown, supply head 200 is drawn into a portion of lubricant passage 186 through end shaft 174 and sealingly engages with an interior surface of end shaft 174. Supply head 200 moves to block inlet passages 180, which isolates the lubricant within metering chamber 228 from lubricant upstream of load passage 188. The metering chamber 228 is fluidly isolated from inlet chamber 230. The seal between dose head 202 and cartridge body 138 is broken such that transfer passages 182 and outlet passages 184 are fluidly connected. Dose head 202 disengages from the portion of cartridge body 138 to fluidly connect transfer passages 182 and outlet passages 184. Metering chamber 228 is thus placed into fluid communication with outlet chamber 226.

Cartridge injector 104 can be configured such that inlet chamber 230 and outlet chamber 226 are fluidly isolated from each other throughout operation. Poppet 140 is sized such that supply head 200 has to travel a first axial distance in second axial direction AD2 from the first poppet position to fluidly disconnect inlet passages 180 and load passage 188 and such that dose head 202 has to travel a second axial distance in second axial direction AD2 from the first poppet position to fluidly connect dose passage 190 and outlet passages 184. The second axial distance in second axial direction AD2 is larger than the first axial distance in second axial direction AD2. As such, dose head 202 is still engaged with cartridge body 138 and fluidly isolating metering chamber 228 and outlet chamber 226 when supply head 200 cuts fluid communication between inlet chamber 230 and load passage 188. Metering chamber 228 is thereby fluidly isolated from both inlet chamber 230 and outlet chamber 226 during at least a portion of the operation of cartridge injector 104.

With poppet 140 in the second poppet position, dose passage 190 is open and transfer passages 182 are fluidly connected with outlet passages 184. Lubricant within metering chamber 228 is free to flow downstream from metering chamber 228, through dose passage 190, through outlet passages 184, through outlet chamber 226, through equipment passage 130 and equipment port 112, and downstream through an output line 39 for application at a component 40. The flowpath between metering chamber 228 and outlet chamber 226 being opened can cause the lubricant pressure in metering chamber 228 to drop, in some examples.

Metering chamber 228 is fluidly disconnected from inlet chamber 230. The lubricant pressure within inlet chamber 230 continues to rise and applies a driving force on piston 142 in second axial direction AD2. Once the force due to lubricant pressure acting on piston end 222b exceeds the force due to lubricant pressure acting on piston end 222a, piston 142 displaces in second axial direction AD2 towards main body 170 of cartridge injector 104. Cartridge injector 104 transitions to the third state shown in FIG. 7C.

Piston 142 displaces from the first piston position to the second piston position as cartridge injector 104 transitions from the second state to the third state. Piston 142 shifting in second axial direction AD2 decreases the volume of metering chamber 228 and drives lubricant from metering chamber 228 downstream through transfer passages 182, dose passage 190, and outlet passages 184. Lubricant discharges from outlet passages 184 and into the annular outlet chamber 226.

Cartridge injector 104 is primed for a subsequent dispense cycle after discharging a dose of lubricant. The lubricant pressure in feed passage 128 is decreased, decreasing the lubricant pressure in inlet chamber 230. The lubricant pressure in inlet chamber 230 decreases such that poppet spring 144 can again overcome the lubricant pressure in inlet chamber 230. Poppet spring 144 drives poppet 140 in first axial direction AD1. Dose head 202 engages with cartridge body 138 and seals the flowpaths between outlet passages 184 and transfer passages 182. Metering chamber 228 is thereby fluidly disconnected from outlet chamber 226. Dose head 202 engages cartridge body 138 to fluidly isolate outlet chamber 226 from metering chamber 228 prior to supply head 200 uncovering inlet passages 180 to fluidly connect inlet chamber 230 and metering chamber 228.

Poppet 140 continues to shift in second axial direction AD2 and supply head 200 shifts to fluidly connect inlet passages 180 and load passage 188. Cartridge injector 104 is thereby placed in the fourth state shown in FIG. 7D. The lubricant within inlet chamber 230 has a decreased pressure relative to the injection pressure but is still pressurized. The pressurized lubricant in inlet chamber 230 flows through inlet passages 180, load passage 188, and transfer passages 182 and to metering chamber 228. Since the cross-sectional area of the axial face of piston end 222b taken orthogonal to actuation axis A-A exceeds the cross-sectional area of the axial end of piston end 222a taken orthogonal to actuation axis A-A, the lubricant pressure of the lubricant flowing to metering chamber 228 biases piston 142 in second axial direction AD2 and drives piston 142 from the second piston position to the first piston position. A volume of lubricant for the next dispense cycle is thus loaded into metering chamber 228 for dispense during the next lubricant injection cycle. Piston 142 shifting back to the first piston position places cartridge injector 104 back into the first state shown in FIG. 7A. Cartridge injector 104 is thus primed with a volume of lubricant to dispense during the next lubricant injection cycle.

The volume of lubricant supplied to the component 40 is equal to the volume of lubricant discharged from metering chamber 228 by piston 142. This lubricant volume can be increased or decreased by adjusting a length of spacer 106 and thus a distance that cartridge body 138 extends into injector cavity 114. For example, the current spacer 106 can be removed and replaced with a different spacer 106 having a different axial length. Adjusting the axial length of spacer 106 changes the distance that piston 142 can travel within injector cavity 114, thereby changing the maximum volume of metering chamber 228. Increasing the axial length of spacer 106 increases the lubricant volume output by cartridge injector 104. Decreasing the axial length of spacer 106, or eliminating spacer 106, decreases the lubricant volume output by cartridge injector 104.

Piston 142 shifts in second axial direction AD2 between the first piston position associated with the first state of cartridge injector 104 and the second piston position associated with the third state of cartridge injector 104. The first state can also be referred to as a primed state and the third state can also be referred to as a dispensed state. Poppet 140 shifts in the second axial direction AD2 between the first poppet position associated with the first state of cartridge injector 104 and the second poppet position associated with the third state of cartridge injector 104. Poppet 140 shifts in the same axial direction as piston 142 between the primed state and the dispensed state. Poppet 140 shifts in the same axial direction as piston 142 between the dispensed state and the primed state. The axial movement in a common axial direction between poppet 140 and piston 142 allows for a more compact cartridge injector 104 because piston 142 and poppet 140 are not required to move in opposite axial directions, away from each other, which requires a larger axial length to accommodate.

Cartridge injector 104 can be installed and uninstalled as a single component, simplifying the installation and removal processes and making the processes more efficient. Cartridge injector 104 being mountable as the single component reduces downtime, decreasing costs and allows equipment to operate for longer periods. Cartridge injector 104 is a single component which eliminates loose parts that can be mishandled or lost by the installer. A single configuration of cartridge injector 104 can be utilized to output different dose volumes without manipulating the configuration of cartridge injector 104 itself.

Manifold body 108 defines at least a portion of the pressure cavities associated with the injection process. Manifold body 108 defines the inlet chamber 230 that receives the lubricant from feed passage 128. The lubricant within inlet chamber 230 drives poppet 140 from the first poppet position to the second poppet position. The lubricant within inlet chamber 230 drives piston 142 from the first piston position to the second piston position. The lubricant that displaces poppet 140 and piston 142 is within a chamber that is at least partially defined by manifold body 108 itself. The pressure chamber that is inlet chamber 230 is formed within manifold body 108 and manifold body 108 contains the pressure within inlet chamber 230.

Metering chamber 228 is the chamber that measures a volume of lubricant for application during a lubricant injection cycle. Metering chamber 228 is at least partially defined by manifold body 108. In the example shown, manifold body 108 forms the outer radial sides of metering chamber 228. Manifold body 108 defines a cylindrical exterior of metering chamber 228. Metering chamber 228 is not formed within cartridge body 138. Instead, metering chamber 228 is formed around a portion of cartridge body 138 and is fluidly connected to flowpaths through cartridge body 138. Transfer passages 182 output lubricant into metering chamber 228 out of cartridge body 138. Transfer passages 182 also receive lubricant from metering chamber 228 and into cartridge body 138. The lubricant received through transfer passages 182 from metering chamber 228 comes from outside of cartridge body 138. Metering chamber 228 is a pressure chamber. Piston 142 increases the pressure in pressure chamber to drive lubricant downstream from metering chamber 228, back into cartridge body 138, and downstream from cartridge body 138 for application.

Metering chamber 228 being at least partially defined by manifold body 108 allows for a less robust construction of cartridge injector 104, providing manufacturing and materials cost savings. Manifold body 108 holds the pressure in metering chamber 228 meaning that less stress is imparted to cartridge injector 104, increasing the operational life. Further, metering chamber 228 being at least partially defined by manifold body 108 allows for a larger volume metering chamber 228 without a corresponding increase in the size of cartridge body 138, as shown by adjusting the volume of metering chamber 228 by simply shifting the axial position of cartridge body 138 within injector cavity 114.

Outlet chamber 226 is the chamber that receives the outflow of lubricant from cartridge injector 104. Outlet chamber 226 is at least partially defined by cartridge body 138. In the example shown, manifold body 108 forms the outer radial sides of outlet chamber 226. Manifold body 108 defines a cylindrical exterior of outlet chamber 226. Outlet chamber 226 can be formed with a multiple-diameter exterior, though it is understood that not all examples are so limited. In the example shown, outlet chamber 226 is formed with a dual-diameter exterior, the larger diameter portion within intermediate bore 134b and the smaller diameter portion within intermediate bore 134a. Outlet chamber 226 is not formed within cartridge body 138. Outlet chamber 226 is not a fluid fitting that connects directly to cartridge body 138. Instead, outlet chamber 226 is formed around a portion of cartridge body 138 and is fluidly connected to flowpaths through cartridge body 138. Outlet chamber 226 can extend fully annularly around cartridge body 138.

Supply groove 178 is disposed to partially define the inner radial side of outlet chamber 226. Outlet passages 184 are disposed such that the outer radial openings of the outlet passages 184 are formed in a base of the supply groove 178. The outlet passages 184 are positioned to output lubricant directly into outlet chamber 226.

Outlet chamber 226 is connected to equipment passage 130 that extends through manifold body 108 to equipment port 112. Equipment passage 130 is radially offset from the center of injector cavity 114. Equipment passage 130 is disposed such that an axis of the equipment passage 130 does not intersect actuation axis AA or cavity axis CA. Equipment port 112 is the location of injector assembly 100 where an exterior line can connect to injector assembly 100 to receive an outflow of lubricant from injector assembly 100. Cartridge injector 104 outputs lubricant into manifold body 108, not directly into a fluid line extending to a component.

Cartridge injector 104 outputs lubricant to multiple, discrete chambers defined by manifold body 108 during a lubricant injection cycle. Lubricant is output from cartridge body 138 multiple times during a lubricant injection cycle. Lubricant is received into cartridge body 138 multiple times during a lubricant injection cycle. In the example shown, lubricant is received into cartridge body 138 for a first time from inlet chamber 230. Lubricant is output from cartridge body 138 a first time into metering chamber 228. Lubricant is received into cartridge body 138 for a second time from metering chamber 228. Lubricant is output from cartridge body 138 a second time into outlet chamber 226.

Lubricant is output from cartridge injector 104 for the first time (from transfer passages 182) at a first location along actuation axis AA and is output from cartridge injector 104 for the second time (from outlet passages 184) at a second location along actuation axis AA. The first location is spaced axially from the second location along the actuation axis. Lubricant is received into cartridge injector 104 for the first time (through inlet passages 180) at a third location along actuation axis AA. The third location is spaced axially from the first location and the second location. The third location is disposed such that both of the first location and the second location are spaced in the same axial direction, in the second axial direction AD2 in the example shown, from the third location.

While lubricant is input into and output from cartridge body 138 multiple times during a single cartridge injection process, the lubricant is received into manifold 102 a single time and output from manifold 102 a single time for a single cartridge injection process for a cartridge injector. The lubricant is received into manifold 102 via a supply port 110 and flows through feed passage 128. The lubricant is output from manifold 102 via equipment passage 130 and equipment port 112. While multiple discrete flows of lubricant can be output from manifold 102 for each cartridge injection process (e.g., from the multiple equipment ports 112), each of those discrete flows is a single output related to a single cartridge injector 104.

At least a portion of the lubricant flow in inlet chamber 230 flows radially around a portion of cartridge body 138. A portion of end shaft 174 extends into inlet chamber 230 to be surrounded by the lubricant in inlet chamber 230. The inlet chamber 230 can thus be at least partially radially between the exterior of the end shaft 174 and the interior surface of piston 142 that defines piston bore 220. A portion of cartridge body 138 is radially surrounded by lubricant that is received from metering chamber 228. Similarly, at least a portion of cartridge body 138 is surrounded radially by flow output from cartridge body 138, both in metering chamber 228 and in outlet chamber 226.

Inlet passages 180 can receive lubricant from annularly around cartridge body 138. Transfer passages 182 can receive lubricant from annularly around cartridge body 138 and can output lubricant annularly around cartridge body 138. Outlet passages 184 can output lubricant annularly around cartridge body 138. Receiving and outputting annular flows allows for quicker loading of cartridge injector 104 and quicker actuation of components as lubricant can be more quickly loaded into and output from cartridge injector 104.

The inlet passages 180 are disposed at an axial end of cartridge body 138. Inlet passages 180 are disposed adjacent body end 168a of cartridge body 138. The outlet passages 184 are located through a radial side of the cartridge body 138. The lubricant flows axially within cartridge body 138, coaxial with actuation axis AA through lubricant passage 186, and is emitted radially out of outlet passages 184 and into the annular outlet chamber 226 surrounding cartridge body 138.

The injection process described in reference to cartridge injector 104 repeats for each cartridge injector 104 included within an injector assembly 100. Each injection process can occur contemporaneously or in sequential order for all cartridge injectors 104 of lubrication system 32 until each injector provides a target volume of lubricant to respective components 40. Lubrication system 32 remains in this state, with all cartridge injectors 104 in the injected position until valve 42 opens, reducing the pressure within supply line 37 and feed passage 128 and facilitating cartridge injector 104 resetting to the first state.

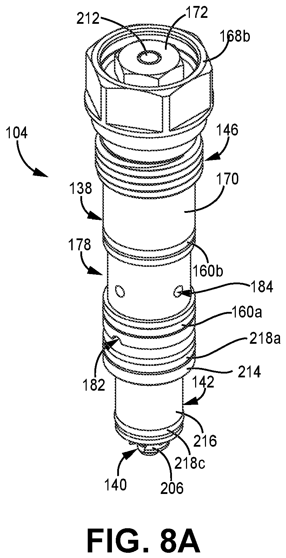

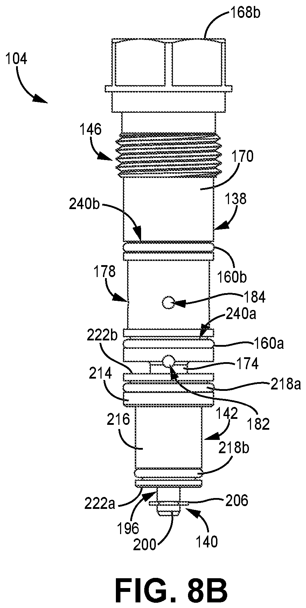

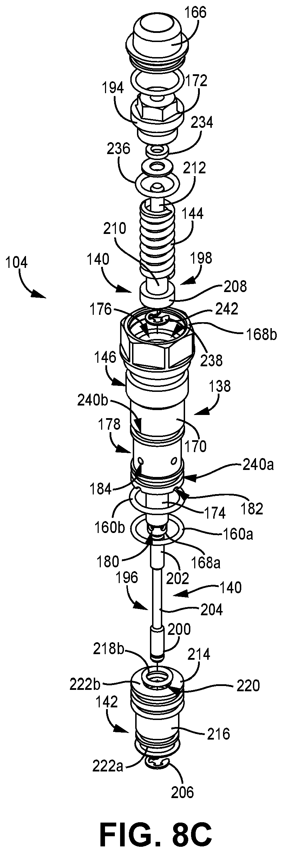

FIG. 8A is an isometric view of cartridge injector 104. FIG. 8B is a side elevation view of cartridge injector 104 taken along line A-A shown in FIG. 8A. FIG. 8C is an exploded view of cartridge injector 104. FIGS. 8A-8C will be discussed together.

In FIGS. 8A-8C cartridge injector 104 is removed from manifold 102 to illustrate external features of cartridge injector 104 in greater detail. It is understood, however, that the discussion of cartridge injector 104 is with continued reference to FIGS. 6-7. End cap 172 and main body 170 form cartridge body 138. The radial exterior of cartridge injector 104 is formed by cartridge body 138 and piston 142. Cartridge body 138 is configured to remain stationary within an injector cavity 114 while piston 142 can move along actuation axis AA relative to cartridge body 138. Piston 142 is disposed at an axial end of cartridge body 138 opposite end cap 172. Piston 142, cartridge body 138, and poppet 140 are disposed coaxially on the actuation axis AA.

With piston 142 abutting cartridge body 138, poppet 140 protrudes from piston 142, as shown. Inlet passages 180 extend through cartridge body 138. Transfer passages 182 extend through cartridge body 138 at a location disposed axially cartridge seal 160a piston 142. As shown, transfer passages 182 are partially formed in main body 170 and partially formed in end shaft 174. An axial side of transfer passages 182 oriented in second axial direction AD2 is formed in main body 170 and covered for a full radial length of transfer passage 182. An axial side of transfer passages 182 oriented in first axial direction AD1 is uncovered for a portion of the length of transfer passage 182 radially outside of end shaft 174. Such a configuration allows piston 142 to shift radially overlap with a portion of transfer passages 182 when piston 142 contacts cartridge body 138, facilitating minimizing the volume of the metering chamber 228. Outlet passages 184 extend through cartridge body 138 at locations axially between seal groove 240a and seal groove 240b.

In the example shown, cartridge injector 104 includes an array of inlet passages 180, an array of outlet passages 184, and an array of transfer passages 182. Subsets of each array of ports are shown in FIGS. 8A-8C. FIG. 8A shows two of the four transfer passages 182 and two of the four outlet passages 184. FIG. 8C shows two of the four inlet passages 180, two of the four transfer passages 182, and two of the four outlet passages 184. While cartridge injector 104 includes at least one inlet passage 180, at least one outlet passage 184, and at least one transfer passage 182, it is understood that cartridge injector 104 can include any desired number of each of inlet passage 180, transfer passage 182, and outlet passage 184, such as one, two, three, four, five, or more. It is further understood that cartridge injector 104 can include the same or a different number of inlet passages 180 from transfer passages 182 and/or outlet passages 184. Cartridge injector 104 can include the same or a different number of transfer passages 182 from inlet passages 180 and/or outlet passages 184. Cartridge injector 104 can include the same or a different number of outlet passages 184 from inlet passages 180 and/or transfer passages 182. Projection 206 is disposed at an end of poppet 140. Projection 206 is formed as a clip configured to be secured on supply head 200 of poppet 140, in the example shown. Projection 206 is configured to interface with piston 142 to prevent piston 142 from detaching from other components of cartridge injector 104.

Supply groove 178 is formed about the exterior of cartridge body 138. Specifically, supply groove 178 is formed around main body 170 of cartridge body 138. Supply groove 178 extends radially into cartridge body 138 and is formed axially between the seal grooves 240a, 240b. Outlet passages 184 extends through the exterior of cartridge body 138 at locations within supply groove 178. The outer openings of outlet passages 184 are formed in a bases of supply groove 178. Supply groove 178 recesses the outer openings of the outlet passages 184 from other portions of the exterior of cartridge body 138. Recessing the outlet passages 184 within the annular supply groove 178 facilitates creation of an annular outlet chamber 226 within manifold body 108. Outlet passages 184 can be oriented in any radial direction 360-degrees about actuation axis AA and will still be fluidly connected to emit lubricant to the outlet chamber 226. Cartridge body 138 can be rotated to any orientation about the cartridge axis CA during installation and will still be fluidly connected to the output line 37 that transmits lubricant to the component 40. The radial output into an annular outlet chamber 226 simplifies installation and operation of cartridge injector 104. No hose is directly connected to cartridge body 138. Cartridge body 138 does not need to be aligned in a particular orientation during installation. The example of cartridge injector 104 shown can be inserted into injector cavity 114 with outlet passages 184 oriented in any radial direction and then rotated on actuation axis AA to engage threads of cartridge injector 104 with threads on manifold 102 or spacer 106. Cartridge body 138 can be rotated until a desired tightness is achieved in the threaded interface without concern as to the final orientation of the outlet passages 184.

Seal grooves 240a, 240b are formed in the exterior of cartridge body 138. Seal groove 240a is configured to hold cartridge seal 160a and seal groove 240b is configured to hold cartridge seal 160b. Seal grooves 240a, 240b are configured such that both axial sides of each seal groove 240a, 240b are formed by a portion of cartridge body 138 that projects away from the base of the seal groove 240a, 240b. Seal grooves 240a, 240b support cartridge seals 160a, 160b on both axial sides of the cartridge seal 160a, 160b. Seal groove 240a is disposed axially between transfer passages 182 and outlet passages 184. Seal groove 240b is disposed on an opposite axial side of supply groove 178 from seal groove 240a. Seal groove 240b is disposed on an opposite axial side of outlet passages 184 from seal groove 240a. Each of inlet passages 180, transfer passages 182, and outlet passages 184 are disposed on a same axial side of seal groove 240b.

End cap 172 is connected to main body 170. For example, end cap 172 can be mounted to main body 170 by interfaced threading formed therebetween. In the example shown, end cap 172 extends into the interior of main body 170.

Poppet 140 extends axially within cartridge body 138 and projects through body end 168a. A portion of poppet 140 (e.g., indicator shaft 212) can extend through body end 168b. As shown, poppet 140 is formed by meter shuttle 196 and meter pin 198. Meter shuttle 196 is at least partially disposed within the axial lubricant passage 186 (FIGS. 7A-7D) through cartridge body 138 and is exposed to the lubricant flow through cartridge body 138. Clip 242 is connected to dose head 202 of meter shuttle 196. Clip 242 retains meter shuttle 196 within spring chamber 238. Clip 242 prevents meter shuttle 196 from shifting out of spring chamber 238 in first axial direction AD1. Meter pin 198 is at least partially disposed within spring chamber 238 of cartridge body 138. Meter pin 198 is isolated from and not exposed to the lubricant flow through cartridge body 138. Poppet 140 is disposed coaxially with the axial lubricant passage 186. Poppet 140 is configured to reciprocate axially along actuation axis AA.

Poppet spring 144 extends around meter pin 198 and interfaces with spring head 208. Poppet spring 144 biases poppet 140 in first axial direction AD1. Poppet spring 144 interfaces with end cap 172 and spring head 208. End cap 172 is secured to cartridge body 138 and remains stationary relative to cartridge body 138 throughout operation. Poppet spring 144 is configured to return poppet 140 to the first poppet position.

In some examples, meter shuttle 196 is connected to meter pin 198, such as by interfaced threading therebetween. In some examples, meter shuttle 196 and meter pin 198 are associated to drive each other axially but are not directly connected to each other. For example, dose head 202 can extend into a receiving bore within meter pin 198. Meter pin 198 inhibits free axial movement of meter shuttle 196 in second axial direction AD2. Poppet spring 144 resists axial movement of meter pin 198 in second axial direction AD2, thereby also acting on meter shuttle 196 to resist axial movement in second axial direction AD2. Clip 242 interfacing with cartridge body 138 prevents axial movement of meter shuttle 196 in first axial direction AD1. Cartridge body 138 also prevents axial movement of meter pin 198 in first axial direction AD1 when poppet 140 is in the first poppet position. The force exerted by the lubricant pressure acting on meter shuttle 196 in second axial direction AD2 is transmitted through meter shuttle 196 and to meter pin 198. That force overcomes the spring force of poppet spring 144 and drives both meter shuttle 196 and meter pin 198 in second axial direction AD2. When pressure is relieved, poppet spring 144 drives meter pin 198 in first axial direction AD1, and meter pin 198 acts on clip 242 and/or on dose head 202 and drives meter shuttle 196 in first axial direction AD1. Clip 242 then interfaces with cartridge body 138 to arrest movement of meter shuttle 196 in first axial direction AD1.

Cartridge injector 104 provides significant advantages. A portion of the exterior of cartridge injector 104 is formed by the cartridge body 138 that guides lubricant between an inlet and an outlet and another portion of the exterior of cartridge injector 104 is formed by piston 142 that drives the dose of lubricant downstream for injection. Such a configuration decreases the size of cartridge injector 104 and provides for a more compact and resilient assembly. Cartridge injector 104 includes arrays of passages (e.g., one or more of inlet passages 180, transfer passages 182, and outlet passages 184) that are arrayed around cartridge body 138. The arrays of passages facilitate quick and efficient lubricant flow into and out of cartridge body 138.

Piston 142 and poppet 140 are disposed to actuate coaxially during operation. Poppet 140 extends into piston 142 to radially overlap with piston 142. Piston 142 and poppet 140 actuate in the same direction during transition between the states of cartridge injector 104, facilitating a compact cartridge injector 104.

Piston 142 is disconnected from cartridge body 138. Piston 142 can freely reciprocate relative to cartridge body 138. No springs act on piston 142 to displace piston in either axial direction along actuation axis AA. Instead, piston 142 is actuated by lubricant pressure. Piston 142 being separate from cartridge body 138 allows for quick and easy servicing and replacement of piston 142 if needed. Piston 142 can be removed from cartridge injector 104 by shifting piston 142 in first axial direction AD1 and off of poppet 140 and cartridge body 138. For example, the clip forming projection 206 can be removed from poppet 140 and then piston 142 can be slid axially off of cartridge body 138. Piston 142 can be removed and replaced without accessing the interior of cartridge body 138.

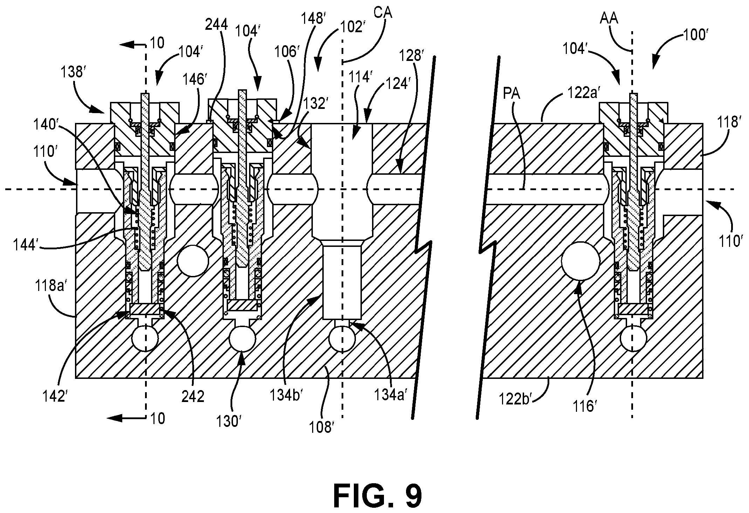

FIG. 9 is a cross-sectional view of injector assembly 100', which can be representative of any one of injector assemblies 33A-33N (FIG. 3). Injector assembly 100' is substantially similar to injector assembly 100 (FIGS. 4 and 6-7D). Injector assembly 100' includes cartridge injectors 104' that are individually mounted to and removable from manifold 102'. Cartridge injectors 104' can be removed from manifold 102' and replaced to control lubricant flow without manipulating any fluid lines connected to manifold 102'. Cartridge injector 104' is not directly connected to a fitting of a lubricant line. Injector assembly 100' includes manifold 102', cartridge injectors 104', and spacers 106'.

Manifold 102' includes manifold body 108', supply ports 110', equipment ports 112', injector cavities 114', mount bores 116', feed passage 128', and equipment passages 130'. Each injector cavity 114' includes inlet bore 132', intermediate bores 134a', 134b', and aperture 124. Each cartridge injector 104' includes cartridge body 138', poppet 140', piston 142', poppet spring 144', and piston spring 242. Cartridge body 138' includes cartridge threads 146'. Spacer 106' includes spacer ring 244 and spacer bore 148' through spacer ring 244.

Manifold 102' can be formed as a solid body or block for housing one or multiple cartridge injectors 104', each cartridge injector 104' is inserted into one of injector cavities 114'. Manifold 102' is substantially similar to manifold 102. Manifold body 108' supports other components of injector assembly 100'. Manifold body 108' defines passages that supply flows of lubricant to cartridge injectors 104' and that provide flows of lubricant downstream from cartridge injectors 104'. Supply ports 110' are formed in manifold body 108'. In the example shown, supply ports 110' are formed in both longitudinal ends 118a', 118b' of manifold body 108'. The example shown includes two supply ports 110' formed in manifold body 108' such that another injector assembly 100' can be mounted downstream from injector assembly 100' and in series with injector assembly 100' to receive an inflow of lubricant from injector assembly 100'. For example, a first one of supply ports 110' can form a supply inlet and the second one of supply ports 110' can form a supply outlet. A supply line 37 can be connected to manifold 102' at the inlet one of supply ports 110' to provide lubricant flow to feed passage 128' through that inlet supply port 110'. A second hose (e.g., another supply line 37 or return line 41) can be connected to manifold 102' at the outlet one of supply ports 110' to receive lubricant from feed passage 128'.

Injector cavities 114' extend into manifold 102' from apertures 124' formed in the exterior surface of manifold 102'. Injector cavities 114' extend to a terminal end within manifold 102'. Feed passage 128' extends through manifold 102' from that inlet one of supply ports 110' to the outlet one of supply ports 110'. In the example shown, feed passage 128' is disposed closer to vertical side 122a', through which apertures 124' are formed, than to vertical side 122b'. Equipment ports 112' are disposed vertically closer to vertical side 122b' than supply ports 110'. Supply ports 110' are disposed axially between equipment ports 112' and apertures 124' relative to cartridge axis CA, in the example shown.

Feed passage 128' intersects with each of the injector cavities 114'. At the terminal end of each injector cavity 114', manifold 102' includes equipment passage 130' extending laterally outward to an equipment port 112' formed in an exterior surface of manifold 102'. Equipment passages 130' extend from a respective injector cavity 114' to a lateral side 120a', 120b' of manifold body 108'. Feed passage 128' provides lubricant to each injector cavity 114' of manifold 102'. A portion of the lubricant flow through feed passage 128' can divert into each cartridge injector 104' while other lubricant continues through feed passage 128' to flow into cartridge injectors 104' in other injector cavities 114'.

When integrated into lubrication system 32, the inlet one of supply ports 110' connects to supply line 37 to receive lubrication from fluid source 36. Equipment passages 130' connect to one of output lines 39 to supply lubricant to respective components 40. Fluid connections can be accomplished using a pipe fitting, a tube fitting, a flanged joint, a welded joint, or other mechanical means known in the art.

As shown in FIG. 9, injector assembly 100' includes up to an arbitrary number of cartridge injectors 104' inserted within corresponding injector cavities 114'. Equipment passages 130' extend from terminal ends of respective injector cavities 114'. Injector assembly 100' can include more or less cartridge injectors 104', injector cavities 114', equipment passages 130', and equipment ports 112' than the number depicted in FIG. 9 depending on the configuration of lubrication system 32. one of injector cavities 114' is unoccupied in the example shown to show details of injector cavity 114'. It is understood that during operation each injector cavity 114' is occupied by a cartridge injector 104' or a plug (e.g., plug 126 (FIG. 6)). The plug fluidly isolates feed passage 128' from the equipment passage 130' of the injector cavity 114' that the plug is inserted into.

In the example shown, each injector cavity 114' is formed as a series of bores with progressively varying diameters. Inlet bore 132' is an outermost bore, which is closest to aperture 124. Inlet bore 132' extends into manifold body 108' from aperture 124 in the example shown. Inlet bore 132' intersects with feed passage 128' to receive lubricant from feed passage 128'. Intermediate bore 134b' extends from inlet bore 132'. Intermediate bore 134a' has a smaller diameter than inlet bore 132'. Intermediate bore 134a' extends from intermediate bore 134b' to equipment passage 130'. Intermediate bore 134a' has a smaller diameter than intermediate bore 134b' in the example shown. Cartridge seal 160a' is supported by cartridge injector 104' and configured to interface with the surface of intermediate bore 134b' to form a sealed interface therebetween. Cartridge seal 160b' is supported by cartridge injector 104' and configured to interface with the surface of inlet bore 132' to form a sealed interface therebetween. Inlet bore 132' can include threading or another connection feature formed on the inner surface of inlet bore 132'. Cartridge injector 104' can connect to manifold body 108' by interfaced threading formed on an exterior of cartridge body 138' and formed on an interior of injector cavity 114'.

Equipment passages 130' extend radially outward relative to the chamber axis CA to equipment ports 112' formed in an exterior surface of manifold 102'. Intermediate bore 134a' extends to intersect with the equipment passage 130'.

Cartridge injectors 104' are mounted to manifold 102'. Cartridge injectors 104' are configured to dose a volume of lubricant and drive the volume of lubricant downstream out of manifold 102' through equipment passages 130' and equipment ports 112' for transmission to discrete application points. Cartridge injector 104' extends into and is at least partially disposed in injector cavity 114'. Cartridge injector 104' projects through aperture 124 and into injector cavity 114'. In the example shown, cartridge body 138' extends through inlet bore 132' and into intermediate bore 134b'. Cartridge injector 104' does not extend into intermediate bore 134a' in the example shown. Cartridge body 138' extends into and is at least partially disposed within injector cavity 114'. In the example shown, cartridge body 138' extends axially through inlet bore 132' and into intermediate bore 134b'.

Poppet 140' is at least partially disposed in cartridge body 138'. Poppet 140' is configured to actuate along actuation axis AA during operation of cartridge injector 104'. Poppet spring 144' interfaces with poppet 140' and is configured to bias poppet 140' in first axial direction AD1, which is an axial direction taken relative to actuation axis AA. Poppet 140' projects through aperture 124 and into injector cavity 114'. In the example shown, poppet 140' extends through inlet bore 132' and into intermediate bore 134b'. Poppet 140' does not extend into or radially overlap with any portion of intermediate bore 134a'. Poppet spring 144' is disposed in the lubricant flowpath through cartridge injector 104' and is exposed to that lubricant flowing through cartridge body 138'.

Piston 142' is disposed outside of cartridge body 138'. Piston 142' is configured to actuate along actuation axis AA during operation of cartridge injector 104'. Piston 142' is disposed in intermediate bore 134b'. Piston 142' is disconnected from cartridge body 138' and can move relative to cartridge body 138'. Piston spring 242 is operatively associated with piston 142'. Piston spring 242 is configured to bias piston 142' in second axial direction AD2 and towards cartridge body 138'. Piston spring 242 biases piston 142' in a same axial direction that poppet spring 144' biases poppet 140'. Piston 142' and poppet 140' are configured to reciprocate along actuation axis AA relative to cartridge body 138'.

Spacer 106' can be associated with a cartridge injector 104'. Spacer 106' limits the distance that cartridge injector 104' can extend into injector cavity 114'. Spacer 106' can thereby set the volume of lubricant dispensed by cartridge injector 104' during each injection cycle, as discussed in more detail below. Specifically, the axial length of spacer 106' sets the distance that cartridge injector 104' can extend into injector cavity 114'. In the example shown, spacer 106' is formed by one or more spacer rings 244 that are stacked together. Spacer bore 148' extending fully through spacer 106'. Multiple spacer rings 244 can be stacked one on top of the other to increase the volume of lubricant output by cartridge injector 104'. Fewer spacer rings 244, down to no spacer rings 244, can be associated with the cartridge injector 104' to decrease the lubricant volume output by cartridge injector 104'. Spacer 106' and an associated cartridge injector 104' are disposed coaxially on an actuation axis AA.

Spacer 106' is separate from cartridge injector 104' such that cartridge injector 104' can be removed from manifold 102' for servicing and/or replacement while spacer 106' remains disposed on manifold 102'. The same or a different cartridge injector 104' can be mounted to manifold 102' and the spacer 106' will ensure that that cartridge injector 104' outputs the desired dose volume without the user needing to adjust or manipulate components of the cartridge injector 104' itself.

Injector assembly 100' provides significant advantages. Manifold 102' defines a common feed passage 128' that provides lubricant to each injector cavity 114' of the manifold 102'. Cartridge injectors 104' can be mounted in any of the injector cavities 114' of manifold 102' to control lubricant dosing and flow through that injector cavity 114'. The cartridge injectors 104' can be removed as a single component and replaced as a single component without requiring manipulation of other separate components, such as a banjo bolt 12. Simply inserting the cartridge injector 104' into an injector cavity 114' forms fluid connections of the cartridge with both feed passage 128' and equipment passage 130'. Only a single connection needs to be made to mechanically connect cartridge injector 104' to manifold 102' and fluidly connect cartridge injector 104' to the inlet feed passage 128' and the outlet equipment passage 130', the single connection being the mechanical connection securing cartridge injector 104' to manifold 102'. In the example shown, the single connection is made by shifting cartridge injector 104' axially into injector cavity 114' and then rotating cartridge injector 104' on actuation axis AA to form the threaded connection that secures the cartridge injector 104'. The cartridge injectors 104' can be installed and uninstalled and replaced without connecting or disconnecting any lubricant lines from manifold 102'.

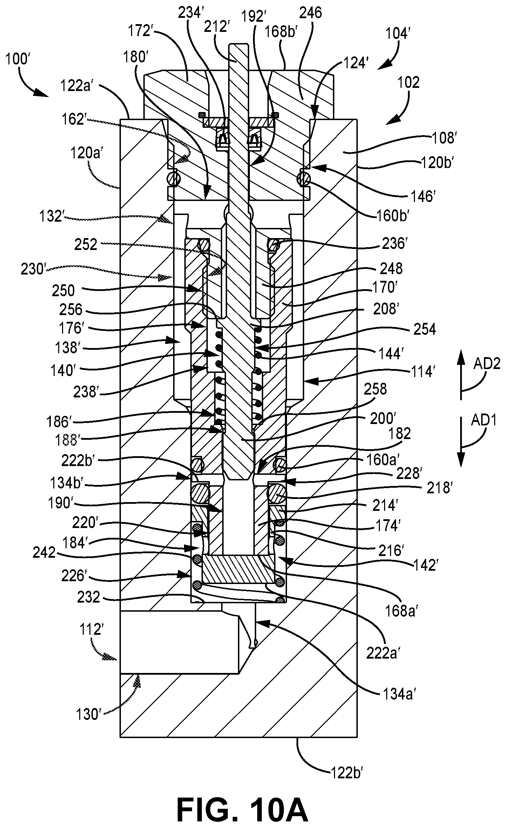

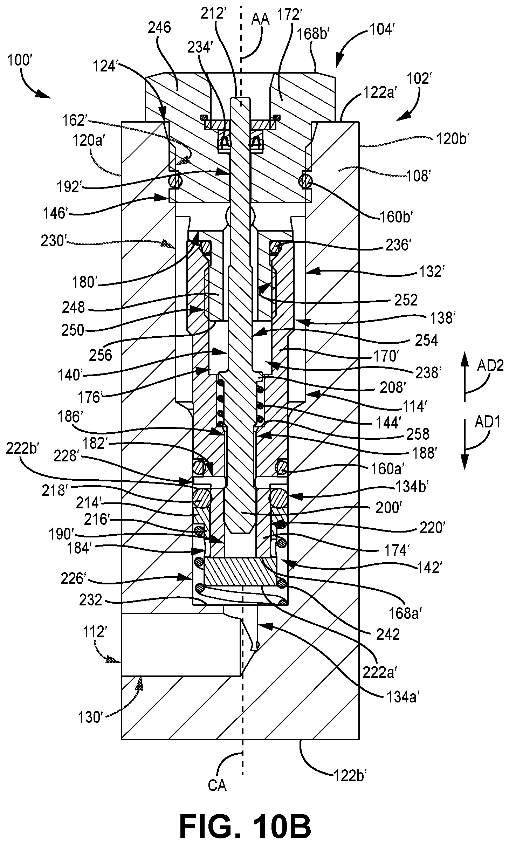

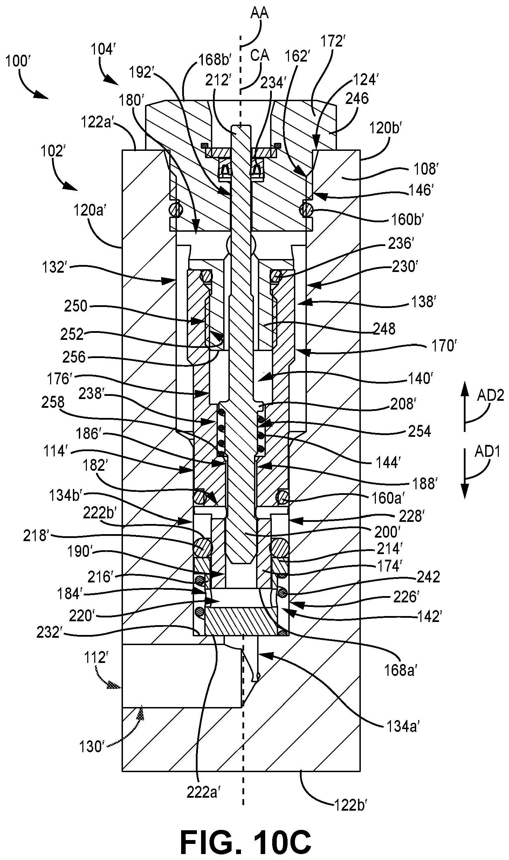

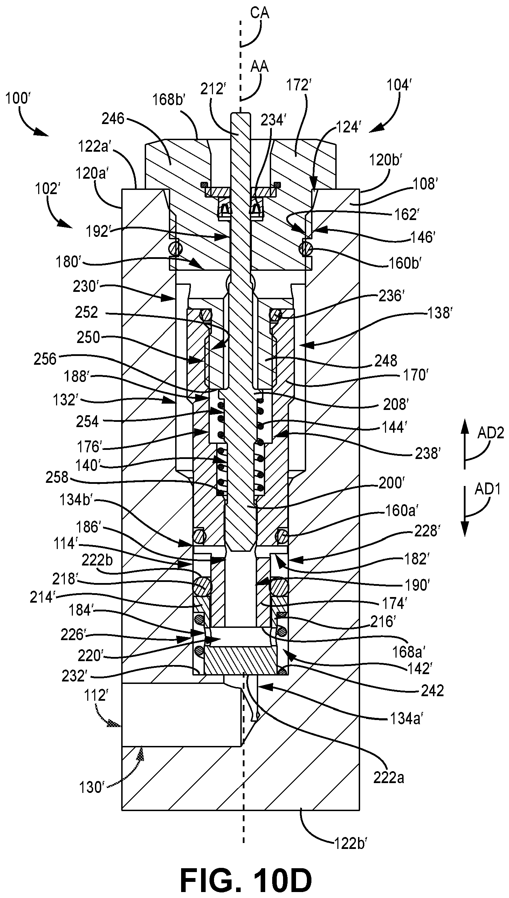

FIG. 10A is a cross-sectional view taken along line 10-10 in FIG. 9 showing cartridge injector 104' in a first state. FIG. 10B is a cross-sectional view taken along line 10-10 in FIG. 9 showing cartridge injector 104' in a second state. FIG. 10C a cross-sectional view taken along line 10-10 in FIG. 9 showing cartridge injector 104' in a third state. FIG. 10D is a cross-sectional view taken along line 10-10 in FIG. 9 showing cartridge injector 104' in a fourth state. FIGS. 10A-10D will be discussed together.

Injector cavity 114', feed passage 128', equipment passage 130', and equipment port 112' of manifold 102' are shown. Cartridge injector 104' includes cartridge body 138', poppet 140', piston 142', poppet spring 144', central cavity 176', inlet passages 180', transfer passages 182', outlet ports 184', lubricant passage 186', and piston spring 242. Cartridge body 138' extends between body ends 168a', 168b' and includes end cap 172', main body 170', and end shaft 174'. End cap 172' includes cap body and cap shaft 248. Poppet 140' includes supply head 200', poppet shaft 254, and spring head 208'. Indicator shaft 212' is formed as a portion of poppet 140' axially opposite supply head 200'. Piston 142' includes piston head 214', piston shaft 216', piston seal 218', and piston bore 220'.

Cartridge injector 104' is substantially similar to cartridge injectors 104 (best seen in FIGS. 7A-8C). It is understood that similar components are indicated with the same reference numeral but with a prime added (e.g., cartridge body 138 of cartridge injector 104 and cartridge body 138' of cartridge injector 104'). Cartridge injector 104' is disposed at least partially in injector cavity 114 to receive lubricant from feed passage 128' and output lubricant to a respective equipment passage 130'.

Cartridge body 138' extends along actuation axis AA between body ends 168a', 168b'. Body end 168a' is an axial end of cartridge body 138' oriented in axial direction AD1 and into the injector cavity 114'. Body end 168b' is an axial end of cartridge body 138' opposite body end 168a' and oriented in second axial direction AD2 away from injector cavity 114'. In the example shown, cartridge body 138' is partially disposed in injector cavity 114' such that body end 168a' is disposed within injector cavity 114' and body end 168b' is disposed outside of injector cavity 114'.

Static sealing interfaces are formed between cartridge body 138' and manifold body 108'. Cartridge seal 160a' is disposed between cartridge body 138' and manifold body 108' and provides a fluid tight seal therebetween. Specifically, cartridge seal 160a' is supported on main body 170' of cartridge body 138'. Cartridge seal 160a' interfaces with the portion of manifold body 108' defining intermediate bore 134b'. Cartridge seal 160a' fluidly isolates the inlet chamber 230' from the metering chamber 228'. Cartridge seal 160b' is disposed between cartridge body 138' and manifold body 108' and provides a fluid tight seal therebetween. Specifically, cartridge seal 160b' is supported on end cap 172' of cartridge body 138'. Cartridge seal 160b' interfaces with the portion of manifold body 108' defining inlet bore 132'. Cartridge seal 160b' fluidly isolates the inlet chamber 230' from the exterior of manifold 102'.

In the example shown, cartridge body 138' is formed as a multi-part component. Different components are assembled together to form the exterior of cartridge body 138'. End cap 172' is formed separately from main body 170'. End cap 172' encloses an axial end of cartridge body 138'. End cap 172' is disposed at an opposite axial end of cartridge injector 104' from piston 142'. End cap 172' includes cap bore 192' that extends axially through end cap 172'. Cap bore 192' is concentric with central cavity 176' within cartridge body 138'. Cartridge threads 146' and cap threads 250 are formed on the exterior of end cap 172'. Specifically, cartridge threads 146' are formed on the exterior of cap body 246. Cartridge threads 146' are configured to engage mount threads 162' formed on an interior surface of injector cavity 114' to fix end cap 172' to manifold 102'. End cap 172' interfaces with manifold body 108' to secure cartridge injector 104' to manifold 102'. Cap seal 236' is disposed between end cap 172' and cap body 138' to prevent lubricant leakage therebetween.

Cap shaft 248 extends axially from cap body 246. Cap shaft 248 extends in first axial direction AD1 towards piston 142'. Cap shaft 248 projects axially towards outlet chamber 226'. Cap shaft 248 has a smaller diameter relative to actuation axis AA than cap body 246. Cap shaft 248 is configured to interface with main body 170' to secure main body 170' and end cap 172' relative to each other. In the example shown, cap threads 250 are formed on an exterior of cap shaft 248. Cap threads 250 are configured to engage with body threads 252 formed on an interior surface of main body 170'. The threaded interface between end cap 172' and main body 170' secures end cap 172' and main body 170' to each other such that cartridge body 138' can be considered to be a single body component of cartridge injector 104'. End cap 172' and main body 170' are fixed together such that cartridge body 138' forms a single unitary component during installation of cartridge injector 104' in injector cavity 114' and during removal of cartridge injector 104' from cartridge body 138'.

Main body 170' is disposed within injector cavity 114'. Main body 170' is disposed fully within injector cavity 114' and does not project out of injector cavity 114' in the example shown. Main body 170' extends in first axial direction AD1 away from end cap 172'. Main body 170' defines at least some of the lubricant pathways through cartridge injector 104'. A largest diameter portion of main body 170' is smaller than the diameter of end cap 172' at the location of inlet passages 180' along actuation axis AA. The smaller diameter of main body 170' facilitates flowing lubricant annularly around cartridge injector 104' within inlet chamber 230' to provide an annular inlet flow, as discussed in more detail below

End shaft 174' is formed at an axial end of main body 170' opposite end cap 172'. End shaft 174' has a smaller diameter than main body 170' and projects in first axial direction AD1 away from main body 170' and further into injector cavity 114'. End shaft 174' extends from main body 170' to body end 168a'.

Central cavity 176' extends axially through cartridge body 138' from body end 168a' to body end 168b'. Central cavity 176' extends fully through cartridge body 138' in the example shown. Central cavity 176' is formed through end cap 172', main body 170', and end shaft 174'. Spring chamber 238' is formed within cartridge body 138'. Spring chamber 238' forms a wet portion of the central cavity 176' in the example shown. Spring chamber 238' is configured as a wet chamber that the lubricant flow passes through during operation. Lubricant passage 186' extends axially within cartridge body 138'. Lubricant passage 186' is at least partially formed by central cavity 176'. In the example shown, at least a portion of lubricant passage 186' can further be formed within piston 142'. More specifically, lubricant passage 186' is formed within end cap 172', main body 170', and piston 142', in the example shown. Lubricant passage 186' provides a flowpath for lubricant to flow axially between inlet passages 180' and transfer passages 182' and to flow axially between transfer passages 182' and outlet ports 184'. Lubricant passage 186' is aligned on actuation axis AA. Lubricant passage 186' includes load passage 188' that extends axially between inlet passages 180' and transfer passages 182' and dose passage 190' that extends axially between transfer passages 182' and outlet ports 184'.

Inlet passages 180', transfer passages 182', outlet ports 184', and lubricant passage 186' are configured as wet portions of cartridge body 138' through which lubricant flows during operation of cartridge injector 104'. Inlet passages 180' are formed through cartridge body 138' and intersect lubricant passage 186'. Inlet passages 180' extend between openings on the exterior of cartridge body 138' to openings into lubricant passage 186'. Inlet passages 180' are formed through end cap 172' in the example shown. Inlet passages 180' are disposed axially closer to aperture 124 than transfer passages 182' and outlet ports 184'. Inlet passages 180' are exposed within and in fluid communication with inlet bore 132' throughout operation. It is understood that cartridge body 138' can include multiple inlet passages 180' extending through cartridge body 138' between the exterior of cartridge body 138' and load passage 188'. Inlet passages 180' can form an annular array of passages around cartridge body 138'. Inlet passages 180' can form an array of passages extending circumferentially about cartridge body 138'. Inlet passages 180' can be evenly or unevenly arrayed about cartridge body 138'. Inlet passages 180' extend radially in the example shown.

As shown, inlet passages 180' are partially formed in cap body 246 and partially formed in cap shaft 248. An axial side or inlet passages 180' oriented in second axial direction AD2 is formed in cap body 246 and covered for a full radial length of transfer passage 182'. An axial side of inlet passages 180' oriented in first axial direction AD1 is uncovered for a portion of the length of inlet passage 180' radially outside of cap shaft 248.

Transfer passages 182' extend through cartridge body 138' from an exterior of cartridge body 138' to lubricant passage 186'. Transfer passages 182' extend between openings on the exterior of cartridge body 138' to openings into lubricant passage 186'. In the embodiment shown, transfer passages 182' extend into cartridge body 138' at a junction between main body 170' and end shaft 174'. Transfer passages 182' intersect lubricant passage 186' at an intersection between load passage 188' and dose passage 190'. Transfer passages 182' are disposed axially between inlet passages 180' and outlet ports 184'. Cartridge body 138' can include multiple transfer passages 182' extending through cartridge body 138' between the exterior of cartridge body 138' and the axial lubricant passage 186'. Transfer passages 182' can form an annular array of passages around cartridge body 138'. Transfer passages 182' can form an array of passages extending circumferentially about cartridge body 138'. Transfer passages 182' can be evenly or unevenly arrayed about cartridge body 138'. Transfer passages 182' extend radially in the example shown.

As shown, transfer passages 182' are partially formed in main body 170' and partially formed in end shaft 174'. An axial side of transfer passages 182' oriented in second axial direction AD2 is formed in main body 170' and covered for a full radial length of transfer passage 182'. An axial side of transfer passages 182' oriented in first axial direction AD1 is uncovered for a portion of the length of transfer passage 182' radially outside of end shaft 174'. Such a configuration facilitates emptying a greater portion of the volume of metering chamber 228' during each lubricant injection cycle as piston 142' can shift further in second axial direction AD2 to radially overlap with at least a portion of transfer passages 182', reducing the volume of metering chamber 228' as opposed to transfer ports that are fully covered on both axial sides for a full radial length.

Outlet ports 184' extend through cartridge injector 104' from an exterior of cartridge injector 104' to lubricant passage 186'. In the example shown, outlet ports 184' extend from an exterior of piston 142' to piston bore 220'. Outlet ports 184' are disposed such that spring chamber 238' is axially between outlet ports 184' and inlet passages 180'. Outlet ports 184' are disposed such that transfer passages 182' are axially between outlet ports 184' and spring chamber 238'. Piston 142' can include multiple outlet ports 184' extending through piston 142' between the exterior of piston 142' and piston bore 220'. Outlet ports 184' can form an annular array of passages around piston 142'. Outlet ports 184' can form an array of passages extending circumferentially about piston 142'. Outlet ports 184' can be evenly or unevenly arrayed about piston 142'. In the example shown, outlet ports 184' are formed through piston shaft 216' of piston 142'.

Portions of central cavity 176' define the lubricant flowpath through cartridge injector 104'. Lubricant passage 186' extends within portions of central cavity 176' and provides a flowpath for lubricant to flow axially within cartridge injector 104'. Load passage 188' is defined radially between poppet 140' and cartridge body 138'. Load passage 188' is formed within cartridge body 138'. Specifically, load passage 188' is formed within both cap shaft 248 and main body 170'. Load passage 188' extends axially between inlet passages 180' and transfer passages 182'. Load passage 188' provides a flowpath for lubricant to flow from inlet passages 180' to transfer passages 182'. In the example shown, spring chamber 238' forms a portion of load passage 188'.

Dose passage 190' is defined radially within cartridge body 138'. During operation, poppet 140' can extend into portions of cartridge body 138' defining dose passage 190'. In the example shown, dose passage 190' is formed within end shaft 174' of cartridge body 138'. Dose passage 190' provides a flowpath for lubricant to flow from transfer passages 182' to outlet ports 184'. Dose passage 190' and load passage 188' can be disposed coaxially on actuation axis AA.

Load passage 188' and dose passage 190' are disposed coaxially. Load passage 188' and dose passage 190' define an axial lubricant passage 186' within cartridge body 138'. The axial lubricant flow through cartridge body 138' is aligned on actuation axis AA. The axial lubricant flow through cartridge body 138' is coaxial with the movement of piston 142' and the movement of poppet 140'. Lubricant flows axially through cartridge body 138' from inlet passages 180' to outlet ports 184'. Cartridge injector 104' does not include any axial flow passages that are radially offset from the actuation axis AA, unlike passage 16 of injector 10. The coaxial flow along actuation axis AA allows for a more compact cartridge body 138', reducing material costs. The coaxial flow along actuation axis AA reduces manufacturing costs as additional offset passages are eliminated. The axial flow channels through cartridge body 138' are disposed coaxially with chamber axis CA of the injector cavity 114' that the cartridge injector 104' is disposed within.

Inlet passages 180' are disposed axially between cartridge seals 160a', 160b'. Cartridge seal 160a' prevents lubricant leakage around cartridge body 138' between inlet chamber 230' and metering chamber 228'. Cartridge seal 160b' prevents lubricant leakage around cartridge body 138' and axially outward in second axial direction AD2 from inlet chamber 230'. Cartridge seals 160a', 160b' can be considered to form static seals that are disposed between two static elements throughout operation. The cartridge body 138' does not shift relative to the manifold body 108' and the manifold body 108' does not shift relative to the cartridge body 138' during a lubricant injection cycle. Cartridge seal 160b' has a larger diameter than cartridge seal 160a' to facilitate cartridge seal 160b' sealing against the surface of manifold body 108' defining inlet bore 132' while cartridge seal 160a' seals against the surface of the smaller diameter intermediate bore 134b'.

A dust cap, such as dust cap 166 (best seen in FIGS. 7A-7D) can be mounted to cartridge body 138' to enclose the end of cartridge body 138' that indicator shaft 212' extends through.

Poppet 140' is at least partially disposed within cartridge body 138'. Poppet 140' extends axially within cartridge body 138'. Poppet 140' extends axially within central cavity 176'. Poppet 140' is configured to control flow of lubricant through cartridge injector 104'. Poppet 140' is configured to shift along actuation axis A-A between a first poppet position (shown in FIGS. 10A and 10D) and a second poppet position (shown in FIGS. 10B and 10C). In the first poppet position, poppet 140' fluidly connects transfer passages 182' and outlet ports 184' and fluidly disconnects transfer passages 182' from inlet passages 180'. In the second poppet position, poppet 140' fluidly connects inlet passages 180' and transfer passages 182' and fluidly disconnects transfer passages 182' from outlet ports 184'. Poppet 140' is normally in the first poppet position. The poppet spring 144' biases poppet 140' to the first poppet position and poppet 140' is driven by lubricant pressure to the second poppet position.

Poppet 140' extends axially within cartridge body 138' along actuation axis AA. Poppet 140' is axially elongate. Poppet 140' extends fully axially through load passage 188'. All flow through lubricant passage 186' flows around poppet 140' in the example shown. All flow through load passage 188' flows around poppet 140' in the example shown. Supply head 200' is disposed at an axial end of poppet 140'. Supply head 200' projects radially outward relative to portions of poppet shaft 254. Supply head 200' is configured to seal portions of lubricant passage 186' during operation to fluidly connect and disconnect transfer passages 182' from inlet passages 180' and outlet ports 184', depending on the state of cartridge injector 104'. In some examples, a peripheral surface of supply head 200' and an interior surface of cartridge body 138' are complimentarily honed, forming a seal interface to divide lubricant passage 186' into load passage 188' and dose passage 190'. The supply head 200' interfaces with the interior surface of main body 170' with poppet 140' in the first poppet position to fluidly isolate inlet passages 180' and transfer passages 182'. The supply head 200' interfaces with the interior surface of end shaft 174' with poppet in the second poppet position to fluidly isolate transfer passages 182' and outlet ports 184'.

Poppet shaft 254 extends in second axial direction AD2 from supply head 200'. Spring head 208' projects radially from poppet shaft 254. Spring head 208' is formed as a radial enlargement of poppet 140'. Spring head 208' can be considered to form a flange projecting from poppet shaft 254. Spring head 208' interfaces with poppet spring 144'. Poppet spring 144' interfaces with spring head 208' to exert a driving force on poppet 140' in second axial direction AD2. Poppet spring 144' is configured to bias poppet 140' to the first poppet position. Spring head 208' includes a spring surface that is oriented in first axial direction AD1. The spring surface of spring head 208' is configured to interface with poppet spring 144'. Spring head 208' abuts brace 256 of cartridge body 138' with poppet 140' in the first poppet position. Brace 256 interfacing with spring head 208' can form the base of spring chamber 238'. In the example shown, brace 256 is formed by the axial end face of end cap 172'. Specifically, brace 256 is formed by the end face of cap shaft 248. Spring head 208' interfacing with brace 256 defines the limit of axial movement of poppet 140' in second axial direction AD2.

Indicator shaft 212' is formed as a portion of poppet shaft 254 axially opposite supply head 200'. Indicator shaft 212' is disposed within and can extend through cap bore 192'. Indicator shaft 212' is configured to provide visual indication that cartridge injector 104' has ejected a dose of lubricant. Indicator shaft 212' is extended in second axial direction AD2 when cartridge injector 104' is in the first state and is recessed within cartridge body 138' with cartridge injector 104' loading lubricant into metering chamber 228'.

Poppet spring 144' circumscribes a portion of poppet 140' within spring chamber 238'. Poppet spring 144' is disposed fully within spring chamber 238'. Poppet spring 144' extends between spring shoulder 258 of cartridge body 138' and spring head 208' and interfaces with spring head 208' to bias poppet 140' in second axial direction AD2. Poppet spring 144' is disposed within a wet area of cartridge body 138'. Poppet spring 144' is configured to be exposed to and to be disposed within the flow of lubricant through manifold 102' and cartridge injector 104'. As assembled within cartridge body 138', poppet 140' at least partially defines the lubricant flowpaths through cartridge injector 104'. The lubricant passage 186' is at least partially defined between an exterior surface of poppet 140' and an interior surface of end shaft 174'. Supply head 200' is configured to open and close the flowpaths between inlet passages 180' and outlet ports 184', as discussed in more detail below.

Piston 142' is configured to drive lubricant downstream out of cartridge injector 104' during a lubricant injection cycle. Piston 142' is disposed coaxially with poppet 140' and cartridge body 138' on actuation axis AA. Piston 142' is configured to shift along actuation axis AA to dispense lubricant and meter a volume of lubricant for a dispense cycle. Piston 142' is configured to shift along actuation axis AA between a first piston position (shown in FIGS. 7A and 7B) and a second piston position (shown in FIGS. 7C and 7D). In the second piston position, piston 142' is shifted in first axial direction AD1 away from transfer passages 182'.

Metering chamber 228' is at a largest operating volume with piston 142' in the second piston position. The second piston position is associated with the state of cartridge injector 104' with lubricant loaded into metering chamber 228' after lubricant has been driven downstream from outlet chamber 226' and through equipment passage 130' and equipment port 112' for application at a component 40. Piston 142' is configured to drive lubricant out of outlet chamber 226' through equipment passage 130' and equipment port 112' and out of manifold 102' as piston 142' shifts from the first piston position to the second piston position. In the first piston position, piston 142' is shifted in second axial direction AD2 relative to the second piston position to decrease the volume of metering chamber 228'. Piston 142' can abut main body 170' with piston 142' in the first piston position. Metering chamber 228' is at a smallest operating volume with piston 142' in the first piston position. Piston 142' is configured to drive lubricant out of metering chamber 228' and through transfer passages 182', dose passage 190', and outlet ports 184' to load outlet chamber 226' with a volume of lubricant for the next lubricant dispense cycle as piston 142' shifts from the second piston position to the first piston position. The first piston position is associated with the state of cartridge injector 104' prior to lubricant being injected and prior to filling metering chamber 228' to measure a dose of lubricant for a next lubricant injection cycle. In the example shown, piston 142' is normally in the first piston position and shifts to the second piston position and then back to the first piston position during a lubricant injection cycle.

Piston 142' includes piston bore 220' that extends axially through piston 142'. Piston bore 220' is disposed concentrically with lubricant passage 186'. Cartridge body 138' extends into piston bore 220'. In the example shown, end shaft 174' of cartridge body 138' extends into piston bore 220'. End shaft 174' extends into piston bore 220' and aligns piston 142' on actuation axis AA.

Piston 142' extends axially between piston end 222a' and piston end 222b'. Piston end 222a' is oriented in first axial direction AD1 and into injector cavity 114'. Piston end 222b' is oriented in second axial direction AD2 and towards poppet 140'. Piston head 214' is formed as a radially enlarged portion of piston 142' relative to actuation axis AA. Piston shaft 216' extends axially away from piston head 214'. Piston shaft 216' extends away from piston head 214' such that piston head 214' is disposed axially between piston shaft 216' and main body 170'. Piston head 214' and piston shaft 216' can be considered to form a body of piston 142'. Piston head 214' can also be referred to as a flange that extends radially outward from the cylindrical body of piston 142'. In the example shown, piston head 214' has a larger diameter relative to actuation axis AA than piston shaft 216'. Piston 142' thus has dual exterior diameters in the example shown.

Piston head 214' is disposed within intermediate bore 134b'. Piston head 214' has a larger diameter than the intermediate bore 134a' portion of injector cavity 114'. Piston shaft 216' has a larger diameter than intermediate bore 134a'. The larger diameters of piston 142' relative to intermediate bore 134a' inhibits axial movement of piston 142' into intermediate bore 134a'. In the example shown, the end of piston shaft 216' opposite piston head 214' is configured to interface with shelf 232' that is formed at the intersection between the larger diameter intermediate bore 134b' and the smaller diameter intermediate bore 134a'. Shelf 232' is configured to interface with piston end 222a'. Shelf 232' interfaces with piston 142' to limit axial displacement of piston 142' in first axial direction AD1.

Sealing elements fluidly isolate regions of the assembly. Sealing elements can include O-rings and/or resilient metal seals housed within a groove or retained at a junction between adjacent components. Piston seal 218' prevents lubricant from flowing between metering chamber 228' and outlet chamber 226' except through lubricant passage 186'. In the example shown, piston seal 218' engages with a portion of manifold 102' radially outside of piston 142' and engages with a portion of cartridge body 138' radially within piston 142'. Piston seal 218' extends radially between cartridge body 138' and manifold body 108' and seals with both cartridge body 138' and manifold body 108'. Piston seal 218' prevents lubricant leakage from metering chamber 228' to outlet chamber 226' between piston 142' and manifold body 108' and between piston 142' and cartridge body 138'.

Piston seal 218' forms piston end 222b' in the example shown. Piston seal 218' is carried on an axial end face of piston head 214'. In some examples, piston seal 218' rides on piston 142' but is not retained in a groove formed on piston 142'. The lubricant pressure through cartridge injector 104' maintains engagement between piston seal 218' and piston 142'. In the example shown, piston 142' includes a single piston seal 218' that seals with both manifold body 108' and cartridge body 138'. It is understood, however, that other examples of piston 142' can include multiple piston seals, such as a first piston seal engaging between piston head 214' and manifold body 108' and a second piston seal engaging between piston 142' and cartridge body 138'. Piston seal 218' is formed as a dynamic seal that moves along actuation axis AA relative to manifold body 108' and cartridge body 138' during operation.

Piston spring 242 interfaces with piston 142' to bias piston 142' in second axial direction AD2. Piston spring 242 resides within intermediate bore 134b'. Piston spring 242 is disposed within outlet chamber 226'. Piston spring 242 circumscribes cylindrical piston shaft 216' and interfaces with a piston head 214' and manifold body 108'. In the example shown, piston spring 242 interfaces with an axial side of piston head 214' oriented in first axial direction AD1. In the example shown, piston spring 242 interfaces with shelf 232' formed between intermediate bore 134b' and intermediate bore 134a'. Piston spring 242 is configured to compress between the terminal face of intermediate bore 134b' (forming shelf 232') and piston head 214'. Piston spring 242 biases piston 142' to the first piston position.

Cartridge injector 104' includes both piston spring 242 and poppet spring 144' in the lubricant flowpath. Poppet spring 144' and piston spring 242 bias poppet 140' and piston 142', respectively, in the same axial directions along the actuation axis AA. Poppet spring 144' biases poppet 140' in second axial direction AD2. Piston spring 242 biases piston 142' in second axial direction AD2.

Poppet spring 144', which can also be referred to as a reset spring, is spaced from piston 142' in second axial direction AD2. Poppet spring 144' is disposed in an upstream direction from transfer passages 182' and outlet chamber 226'. Poppet spring 144' is disposed in an upstream direction from the piston 142'. Piston 142' is disposed in a downstream direction from poppet spring 144' relative to the flowpaths through cartridge body 138'. In the example shown, poppet spring 144' is disposed within cartridge body 138' and piston spring 242 is disposed outside of cartridge body 138'. Piston spring 242 extends around an exterior portion of cartridge injector 104'. Piston spring 242 is exposed on an exterior of cartridge injector 104'.

Piston 142' and poppet 140' radially overlap with each other during various phases of operation. At least a portion of poppet 140' can be disposed radially within piston 142'. In some states of cartridge injector 104', poppet 140' does not radially overlap with various portions of piston 142'. Poppet 140' and piston 142' move to have radial overlap and to not have radial overlap depending on the operating state of cartridge injector 104'. Piston 142' and poppet 140' are disposed to actuate coaxially along actuation axis AA during operation. Poppet 140' can extend into piston 142' to radially overlap with piston 142' during portions of the lubricant injection cycle.

In the example shown, no portion of piston 142' axially overlaps with the flow control portion of poppet 140', formed by supply head 200'. The piston 142' not axially overlapping with the supply head 200' allows for piston 142' to seat on manifold body 108' and be disconnected from cartridge body 138'. This allows the poppet 140' to be shifted axially relative to piston 142' without concern for interference between poppet 140' and piston 142', which facilitates altering the volume of metering chamber 228' by changing the distance that cartridge injector 104' extends into injector cavity 114'.

Piston 142' radially overlaps with portions of cartridge body 138' throughout operation but is disconnected from cartridge body 138'. Piston 142' can move axially relative to cartridge body 138' while end shaft 174' interfaces with piston 142' within piston bore 220' to guide the axial movement of piston 142'.

Piston 142' defines at least a portion of the exterior of cartridge injector 104'. The exterior of cartridge injector 104' is formed by cartridge body 138' and piston 142'. Cartridge injector 104' interfaces with manifold 102' at a mechanical connection (e.g., directly between cartridge body 138' and manifold 102' or via spacer 106') and interfaces with manifold body 108' at static seal locations and dynamic seal locations. The static seal locations are formed between cartridge body 138' and manifold body 108' (e.g., by cartridge seals 160a', 160b'). The dynamic seal locations are formed between piston 142' and manifold body 108' (e.g., by piston seal 218'). The example shown in FIGS. 10A-10D includes a single dynamic sealing location, though it is understood that not all examples are so limited. The dynamic sealing locations move relative to manifold body 108' during operation (e.g., as piston 142' reciprocates along actuation axis AA), while the static seal locations remain stationary relative to manifold body 108' during operation.

Poppet seal 234' is disposed radially between poppet 140' and end cap 172'. Specifically, poppet seal 234' is disposed between indicator shaft 212' and end cap 172'. In the example shown, poppet seal 234' is supported by end cap 172' and remains stationary relative to end cap 172'. Poppet seal 234' is a dynamic seal in that poppet 140' can move relative to poppet seal 234'. In some examples, a groove is formed in the exterior of poppet 140' and poppet seal 234' is disposed in that groove to ride with poppet 140' along actuation axis AA. Poppet seal 234' inhibits particulate matter from entering into the lubricant flowpaths through cartridge body 138'.

During operation, cartridge injector 104' is initially in the first state shown in FIG. 7A. Poppet spring 144' biases poppet 140' in second axial direction AD2 to the first poppet position in which spring head 208' abuts brace 256 formed by end cap 172'. Piston 142' is initially displaced in second axial direction AD2 and is in the first piston position.

With poppet 140' in the first poppet position, supply head 200' is engaged with cartridge body 138' to fluidly isolate inlet passages 180' from transfer passages 182'. The inlet passages 180' are in fluid communication with inlet chamber 230' and feed passage 128'. The inlet passages 180' are not blocked and lubricant can freely flow through inlet passages 180' and portions of load passage 188'. In some examples, the lubricant can flow into spring chamber 238'. In other examples, the interface between spring head 208' and brace 256 inhibits flow of lubricant into spring chamber 238'. Supply head 200' inhibits flow of lubricant in second axial direction AD2 to transfer passages 182'. Metering chamber 228' is fluidly isolated from inlet chamber 230'. Transfer passages 182' are fluidly isolated from inlet passages 180' with poppet 140' in the first poppet position.

The pump 38 of the lubrication system is activated, increasing lubricant pressure through feed passage 128' and into inlet chamber 230'. Valve 42 closes and pump 38 of lubrication system 32 increases pressure within supply line 37 and feed passage 128', thereby increasing pressure in inlet chamber 230'. Inlet chamber 230' is formed as an annular chamber about cartridge body 138'. Cartridge body 138' extends fully axially through inlet chamber 230'. The outer radial side of inlet chamber 230' is formed by manifold body 108' and the inner radial side of inlet chamber 230' is formed by cartridge body 138'. Main body 170' has a smaller diameter than inlet bore 132' to facilitate formation of the inlet chamber 230'. Inlet chamber 230' extending annularly around cartridge body 138' allows inlet passages 180' to be oriented in any radial direction relative to actuation axis AA and cartridge body 138' will still be connected to the inlet flow through feed passage 128' to receive lubricant through inlet passages 180'.

Lubricant flows through inlet passages 180' and within load passage 188' and is blocked by supply head 200'. With poppet 140' in the first poppet position, lubricant can flow through inlet passages 180' and into lubricant passage 186', but the lubricant is prevented from flowing to transfer passages 182' by the interface between the exterior of supply head 200' and the interior of cartridge body 138'. Lubricant can reside within the portions of lubricant passage 186' upstream of supply head 200'. The lubricant can reside within cartridge body 138', such as within spring chamber 238', and is ready to load into metering chamber 228' when the lubricant pressure builds to a sufficient level to actuate poppet 140' to the second poppet position.

Lubricant pressure builds within feed passage 128' and portions of cartridge body 138' until the lubricant pressure acting on poppet 140', such as acting on spring head 208', exceeds the biasing force applied to poppet 140' by poppet spring 144'. The lubricant pressure exceeding the spring force causes poppet 140' to shift in first axial direction AD1 from the first poppet position to the second poppet position, placing cartridge injector 104' in the second state shown in FIG. 10B.

The lubricant pressure drives poppet 140' in first axial direction AD1 from the first poppet position to the second poppet position. As poppet 140' transitions to the second poppet position, supply head 200' passes into end shaft 174' and seals against the portion of cartridge body 138' defining dose passage 190' to seal the lubricant pathway between transfer passages 182' and outlet ports 184'. In the example shown, supply head 200' is driven into a portion of central cavity 176' through end shaft 174' and sealingly engages with an interior surface of end shaft 174'. Metering chamber 228' is thereby fluidly isolated from outlet chamber 226' with poppet 140' in the second poppet position.

Supply head 200' also disengages from the portion of cartridge body 138' defining load passage 188' as poppet 140' shifts to the second poppet position. The seal between supply head 200' and cartridge body 138' blocking flow through load passage 188' is broken and transfer passages 182' are fluidly connected to inlet passages 180'. Metering chamber 228' is thus placed into fluid communication with inlet chamber 230'. Lubricant flows through inlet passages 180' and load passage 188' to transfer passages 182'. Lubricant is output from transfer passages 182' to metering chamber 228' to increase a lubricant pressure within metering chamber 228'.

Cartridge injector 104' can be configured such that inlet chamber 230' and outlet chamber 226' are fluidly isolated from each other throughout operation. Poppet 140' is sized such that supply head 200' has a larger axial extent than transfer passages 182'. Supply head 200' is sized such that supply head 200' is still engaged with a portion of cartridge body 138' upstream of transfer passages 182' to fluidly isolate metering chamber 228' and inlet chamber 230' when supply head 200' passes over transfer passages 182' and engages a portion of cartridge body 138' downstream of transfer passages 182' to fluidly isolate metering chamber 228' and outlet chamber 226'. Metering chamber 228' can thus be fluidly isolated from both inlet chamber 230' and outlet chamber 226' during at least a part of the operation of cartridge injector 104'.

With poppet 140' in the second poppet position, transfer passages 182' are fluidly connected with inlet passages 180'. Load passage 188' is open such that lubricant can flow through load passage 188' and to metering chamber 228' through transfer passages 182'. The lubricant flows into metering chamber 228' from load passage 188'. The lubricant pressure in metering chamber drives piston 142' in first axial direction AD1, thereby increasing the volume of metering chamber 228' and allowing the desired volume of lubricant to enter into metering chamber 228'. In the example shown, the lubricant pressure in metering chamber 228' overcomes the spring force of piston spring 242 to drive piston 142' in first axial direction AD1. In the example shown, the lubricant flowing into metering chamber 228' exerts the axial driving force on piston seal 218'. The lubricant acting directly on piston seal 218' assists in compressing piston seal 218' to ensure sealing engagement on both radial sides of piston seal 218', sealing with both cartridge body 138' and manifold body 108'.

Piston 142' displaces in first axial direction AD1 until piston 142' encounters shelf 232', which interfaces with piston end 222a' to limit displacement of piston 142' in first axial direction AD1. Piston 142' is thus driven from the first piston position to the second piston position by lubricant pressure in the metering chamber 228'. Piston 142' shifting in first axial direction AD1 decreases the volume of outlet chamber 226' and increases the lubricant pressure in outlet chamber 226'. Lubricant that was previously loaded into outlet chamber 226' is driven downstream from outlet chamber 226' through intermediate bore 134a', through equipment passage 130', and through equipment port 112' to exit from manifold 102'. The lubricant flows downstream from manifold 102' and is applied to a component 40. With piston 142' displaced to the second piston position cartridge injector 104' is placed in the third state shown in FIG. 10C. Cartridge injector 104' has dispensed the metered volume of lubricant with cartridge injector 104' in the third state.

Outlet chamber 226' is fluidly isolated from metering chamber 228' as metering chamber 228' is loaded with a dose volume of lubricant and as piston 142' drives the lubricant downstream from outlet chamber 226'. Supply head 200' is disposed within dose passage 190' and sealingly interfaces with cartridge body 138' to fluidly isolated metering chamber 228' and outlet chamber 226' with poppet 140' in the second piston position.

Lubricant pressure in feed passage 128' is relieved to cause cartridge injector 104' to reset cartridge injector 104' and load the dose of metered lubricant from metering chamber 228' into outlet chamber 226'. The lubricant is loaded into outlet chamber 226' to prime cartridge injector 104' for a subsequent lubricant injection cycle. The drop in lubricant pressure allows the spring force of poppet spring 144' to drive poppet 140' from the second poppet position to the first poppet position. Poppet 140' is driven in second axial direction AD2 and back to the first poppet position. Supply head 200' is pulled in second axial direction AD2 and covers transfer passages 182', fluidly disconnecting metering chamber 228' from both load passage 188' and dose passage 190'. Supply head 200' continues to shift in second axial direction AD2 into load passage 188' and uncovers transfer passages 182'. Supply head 200' uncovering transfer passages 182' fluidly connects transfer passages 182' and outlet ports 184' via lubricant passage 186'. Cartridge injector 104' is thus placed in the fourth state shown in FIG. 10D. With cartridge injector 104' in the fourth state, metering chamber 228' is loaded with the dose volume of lubricant and transfer passages 182' are fluidly connected to outlet ports 184'.

Supply head 200' passing out of dose passage 190' creates an unoccupied volume in the flowpath between metering chamber 228' and the downstream component that was previously occupied by supply head 200'. Such volume is filled by lubricant from metering chamber 228' which also causes a drop in the lubricant pressure in metering chamber 228' and downstream through outlet chamber 226' and equipment passage 130'. The drop in lubricant pressure allows piston spring 242 to drive piston 142' in second axial direction AD2. Piston 142' drives the lubricant from metering chamber 228' and through transfer passages 182' into dose passage 190'. The lubricant flows through dose passage 190' and exits cartridge body 138' through an axially oriented outlet aperture of the dose passage 190'. In the example shown, the lubricant exits cartridge body 138' through an axial opening at the distal end of end shaft 174'. The lubricant enters into piston bore 220' from cartridge body 138'. The lubricant is output from cartridge injector 104' through outlet ports 184' that are formed through piston 142'. The outlet ports 184' output the lubricant into outlet chamber 226', which is at least partially defined by manifold body 108'. Piston 142' drives the dose of lubricant downstream out of metering chamber 228' and into outlet chamber 226' to load outlet chamber 226' with the dose of lubricant to be applied during a next lubricant injection cycle.

In the example shown, piston seal 218' is the portion of piston 142' that exerts a driving force on the lubricant within metering chamber 228' to drive that lubricant downstream out of metering chamber 228'. Piston seal 218' exerting the pressure on the lubricant can assist in compressing piston seal 218' and maintaining sealing engagement with cartridge body 138' and manifold body 108'. It is understood, however, that not all examples are so limited. For example, an axial face of piston head 214' oriented in second axial direction AD2 can interface with the lubricant to drive the lubricant. In such an example, a first piston seal 218' can be mounted on a radial exterior of piston 142' to engage with manifold body 108' and a second piston seal 218' can be mounted on a radial interior of piston 142' to engage with cartridge body 138', similar to piston seals 218a, 218b of piston 142.

Piston 142' continues to displace in second axial direction AD2 from the second piston position and towards the first piston position, decreasing the volume of metering chamber 228' and outputting lubricant from metering chamber 228' to load outlet chamber 226'. Piston 142' continues to shift until piston 142' returns to the first piston position. Cartridge injector 104' is thus returned to the first state shown in FIG. 10A and is ready for another lubricant injection cycle.

The volume of lubricant supplied to the component 40 can be equal to the volume of lubricant discharged from metering chamber 228' by piston 142'. This lubricant volume can be increased or decreased by adjusting a length of spacer 106' and thus a distance that cartridge body 138' extends into injector cavity 114'. For example, additional spacer rings 244 can be added or a spacer ring 244 can be removed to adjust the volume of metering chamber 228'. Adjusting the axial length of the spacer 106' changes the distance that piston 142' can travel within injector cavity 114', thereby changing the maximum volume of metering chamber 228'. Increasing the axial length of spacer 106', such as by adding additional spacer rings 244, increases the lubricant volume output by cartridge injector 104'. Decreasing the axial length of spacer 106', such as by removing spacer rings 244 or eliminating spacer 106', decreases the lubricant volume output by cartridge injector 104'.

Piston 142' shifts in first axial direction AD1 from the first piston position associated with metering chamber 228' not being filled with lubricant to the second piston position associated with the metering chamber 228' being filled with lubricant for dispense. Poppet 140' shifts in the first axial direction AD1 from the first poppet position associated with the first state of cartridge injector 104', in which metering chamber 228' is not filled with lubricant and is fluidly disconnected from inlet chamber 230', to the second poppet position associated with lubricant filling into the metering chamber 228' with metering chamber 228' fluidly connected to inlet chamber 230'. In the example shown, poppet 140' is in the same position (the second poppet position) both while lubricant is being metered into metering chamber 228' (e.g., with cartridge injector 104' transitioning between the second and third states) and during the portion of the lubricant injection cycle in which lubricant is emitted from cartridge injector 104' to the component 40.

During a lubricant injection cycle, both poppet 140' and piston 142' initially shift in first axial direction AD1. Poppet 140' then shifts back in second axial direction AD2 to reset prior to piston 142' shifting back in second axial direction AD2 to emit lubricant from metering chamber 228' and to outlet chamber 226' to prime cartridge injector 104. As such, both poppet 140' and piston 142' shift in the same axial directions during various stages of the lubricant injection cycle. Piston 142' and poppet 140' shifting in the same axial directions during various stages allows for a more compact cartridge injector 104' because piston 142' and poppet 140' are not required to move in opposite axial directions, away from each other, which requires a larger axial length to accommodate.

Cartridge injector 104' can be installed and uninstalled as a single component, simplifying the installation and removal processes and making the processes more efficient. Cartridge injector 104' being mountable as the single component reduces downtime, decreases costs, and allows equipment to operate for longer periods. Cartridge injector 104' is a single component which eliminates loose parts that can be mishandled or lost by the installer. A single configuration of cartridge injector 104' can be utilized to output different dose volumes without manipulating the configuration of cartridge injector 104' itself.

Manifold body 108' defines at least a portion of the pressure cavities associated with the injection process. Manifold body 108' defines the inlet chamber 230' that receives the lubricant from feed passage 128'. The lubricant from inlet chamber 230' drives poppet 140' from the first poppet position to the second poppet position. The lubricant that initially feeds into cartridge body 138' feeds from the annular inlet chamber 230' that extends about cartridge body 138'. The annular inlet chamber 230' allows lubricant to enter into inlet passages 180' from any location within inlet chamber 230' and circumferentially around cartridge body 138'. As such, cartridge injector 104' is not required to be in any particular orientation to position inlet passages 180' to receive lubricant. Instead, cartridge injector 104' can simply be threaded into injector cavity 114' until a desired tightness is achieved without concern as to the orientations of inlet passages 180'.

Metering chamber 228' is the chamber that measures a volume of lubricant for application during a lubricant injection cycle. Metering chamber 228' is at least partially defined by manifold body 108'. In the example shown, manifold body 108' forms the outer radial sides of metering chamber 228'. Manifold body 108' defines a cylindrical exterior of metering chamber 228'. Metering chamber 228' is not formed within cartridge body 138'. Instead, metering chamber 228' is formed around a portion of cartridge body 138' and is fluidly connected to flowpaths through cartridge body 138'. Transfer passages 182' output lubricant into metering chamber 228' out of cartridge body 138'. The lubricant received through transfer passages 182' from metering chamber 228' comes from outside of cartridge body 138'. Metering chamber 228' is a pressure chamber. Piston 142' increases the pressure in metering chamber 228' to drive lubricant downstream from metering chamber 228', back into cartridge body 138', and then out of cartridge body 138' and downstream from cartridge body 138' back into manifold 102' to prime cartridge injector 104'.

Metering chamber 228' being at least partially defined by manifold body 108' allows for a less robust construction of cartridge injector 104', providing manufacturing and materials cost savings. Manifold body 108' holds the pressure in metering chamber 228' meaning that less stress is imparted to cartridge injector 104', increasing the operational life. Further, metering chamber 228' being at least partially defined by manifold body 108' allows for a larger volume metering chamber 228' without a corresponding increase in the size of cartridge body 138', as the volume of metering chamber 228' can be adjusted by simply shifting the axial position of cartridge body 138' within injector cavity 114'.

Outlet chamber 226' is the chamber that receives the outflow of lubricant from cartridge injector 104'. Outlet chamber 226' is at least partially defined by cartridge injector 104'. In the example shown, manifold body 108' forms the outer radial sides of outlet chamber 226'. Manifold body 108' defines a cylindrical exterior of outlet chamber 226'. Outlet chamber 226' is not formed within cartridge body 138'. Outlet chamber 226' is not a fluid fitting that connects directly to cartridge body 138'. Instead, outlet chamber 226' is formed within manifold body 108' and is fluidly connected to flowpaths through cartridge body 138'.

Outlet chamber 226' is connected to equipment passage 130' that extends through manifold body 108' to equipment port 112'. Equipment passages 130' extend to lateral side 120a' of manifold body 108'. Equipment port 112' is the location of injector assembly 100' where an exterior line (e.g., output line 39) can connect to injector assembly 100' to receive an outflow of lubricant from injector assembly 100'. Equipment port 112' is formed on lateral side 120a' on the exterior of manifold body 108'. It is understood, however, that manifold 102' can include additional equipment ports 112' associated with a single injector cavity 114', similar to equipment ports 112a, 112b shown in FIG. 12. Cartridge injector 104' outputs lubricant into manifold body 108', not directly into a fluid line extending to a component.

In the example shown, each of inlet chamber 230', metering chamber 228', and outlet chamber 226' are disposed coaxially on actuation axis AA. Inlet chamber 230', metering chamber 228', and outlet chamber 226' are disposed coaxially with the lubricant passage 186' that transports lubricant axially through cartridge injector 104'. The coaxial configuration provides a more compact and easier to assemble cartridge injector 104' and injector assembly 100'.

Cartridge injector 104' outputs lubricant to multiple, discrete chambers defined by manifold body 108' during a single lubricant injection cycle. Lubricant is output from cartridge body 138' multiple times during a lubricant injection cycle. Lubricant is received into cartridge body 138' multiple times during a lubricant injection cycle. In the example shown, lubricant is received into cartridge body 138' for a first time from inlet chamber 230'. Lubricant is output from cartridge body 138' a first time into metering chamber 228'. Lubricant is received into cartridge body 138' for a second time from metering chamber 228'. Lubricant is output from cartridge body 138' a second time into outlet chamber 226'.

While lubricant is input into and output from cartridge body 138' multiple times during a single lubricant injection cycle, the lubricant is received into manifold 102' a single time and output from manifold 102' a single time for a single cartridge injection process for a cartridge injector 104'. The lubricant is received into manifold 102' via a supply port 110' and flows through feed passage 128'. The lubricant is output from manifold 102' via equipment passage 130' and equipment port 112'. While multiple discrete flows of lubricant can be output from manifold 102' for each cartridge injection process (e.g., from the multiple equipment ports 112'), each of those discrete flows is a single output related to a single cartridge injector 104'.

At least a portion of the lubricant flow in inlet chamber 230' flows radially around a portion of cartridge body 138'. A portion of end shaft 174' extends into outlet chamber 226' to be surrounded by the lubricant in outlet chamber 226'. Piston 142' is disposed at least partially in outlet chamber 226'. A portion of cartridge injector 104' is radially surrounded by lubricant that is received from metering chamber 228'. Similarly, at least a portion of cartridge body 138' is surrounded radially by flow output from cartridge body 138', both in metering chamber 228' and in outlet chamber 226'.

Inlet passages 180' are disposed radially through cartridge body 138'. Inlet passages 180' are disposed through a portion of cartridge body 138' that is disposed within inlet chamber 230'. A portion of cartridge injector 104' is radially surrounded by lubricant that is disposed within inlet chamber 230'. The lubricant in inlet chamber 230' can freely flow annularly around cartridge body 138' and can flow into cartridge body 138' through the inlet passages 180' that are arrayed annularly around cartridge body 138'. The annular inlet chamber 230' is disposed coaxially with cartridge body 138'.

The inlet passages 180' are located through a radial side of the cartridge body 138'. The lubricant flows axially within cartridge body 138', coaxial with actuation axis AA, and is emitted radially out of outlet ports 184' and into the annular outlet chamber 226' surrounding cartridge body 138'.

Inlet passages 180' receive lubricant from annularly around cartridge body 138'. Transfer passages 182' can receive lubricant from annularly around cartridge body 138' and can output lubricant annularly around cartridge body 138'. Outlet ports 184' can output lubricant annularly around cartridge body 138'. Receiving and outputting annular flows allows for quicker loading of lubricant into cartridge injector 104' and for quicker dispense of lubricant from cartridge injector 104'. The annular flows facilitate quicker actuation of components (e.g., poppet 140' and piston 142') as lubricant can be more quickly loaded into and output from cartridge injector 104'.

The injection process described in reference to cartridge injector 104' repeats for each cartridge injector 104' included within the injector assembly 100'. Each injection process can occur contemporaneously or in sequential order for all cartridge injectors 104' of lubrication system 32 until each injector provides a target volume of lubricant to respective components 40.

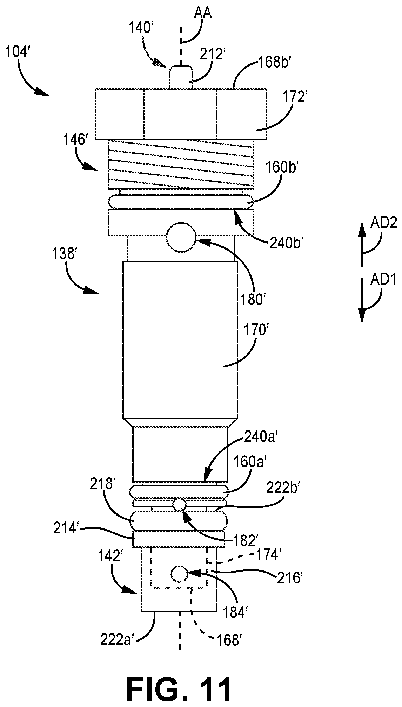

FIG. 11 is a side elevation view of cartridge injector 104'. In FIG. 11, cartridge injector 104' is removed from manifold 102' to illustrate external features of cartridge injector 104' in greater detail. It is understood, however, that the discussion of cartridge injector 104' is with continued reference to FIGS. 9-10D. End cap 172' is assembled to main body 170' to form cartridge body 138'. Piston 142' is assembled with cartridge body 138' to form cartridge injector 104'. Piston 142' and cartridge body 138' are disposed coaxially on actuation axis AA. Piston 142', end cap 172', and cartridge body 138' are disposed coaxially on actuation axis AA. A dust cap and the piston spring 242 are omitted to better illustrate features of cartridge injector 104'. The radial exterior of cartridge injector 104' is formed by cartridge body 138' and piston 142'. Cartridge body 138' is configured to remain stationary within the injector cavity 114' while piston 142' can move along actuation axis AA relative to cartridge body 138'. Piston 142' is disposed at an axial end of cartridge body 138' opposite end cap 172'. Piston 142', cartridge body 138', and poppet 140' are disposed coaxially on the actuation axis AA.

Transfer passages 182' extend through cartridge body 138' at a location disposed axially between cartridge seal 160a' and piston 142'. Transfer passages 182' are disposed axially between cartridge seal 160a' and piston seal 218'. Outlet ports 184' extend through piston 142' at locations axially between piston seal 218' and piston end 222a'.

In the example shown, cartridge injector 104' includes an array of inlet passages 180', an array of outlet ports 184', and an array of transfer passages 182'. Subsets of each array of ports are shown in FIG. 11. FIG. 11 shows one of the multiple transfer passages 182', one of the multiple outlet ports 184', and one of the multiple inlet passages 180'. While cartridge injector 104' includes at least one inlet passage 180', at least one outlet port 184', and at least one transfer passage 182', it is understood that cartridge injector 104' can include any desired number of each of inlet passage 180', transfer passage 182', and outlet port 184', such as one, two, three, four, five, or more. It is further understood that cartridge injector 104' can include the same or a different number of inlet passages 180' from transfer passages 182' and/or outlet ports 184'. Cartridge injector 104' can include the same or a different number of transfer passages 182' from inlet passages 180' and/or outlet ports 184'. Cartridge injector 104' can include the same or a different number of outlet ports 184' from inlet passages 180' and/or transfer passages 182'.

Cartridge injector 104' is configured such that inlet passages 180', transfer passages 182', and outlet ports 184' can be oriented in any radial direction 360-degrees about actuation axis AA and will still be fluidly connected to receive lubricant from and/or emit lubricant to chambers within manifold body 108'. Cartridge body 138' can be rotated to any orientation about the cartridge axis CA during installation and will still be fluidly connected to receive lubricant from feed passage 128' and provide lubricant to equipment passage 130' The radial input from an annular inlet chamber 230 and radial output into an annular outlet chamber 226' simplifies installation and operation of cartridge injector 104'.

No hose is directly connected to cartridge body 138'. Cartridge body 138' does not need to be aligned in a particular orientation during installation. The example of cartridge injector 104' shown can be inserted into injector cavity 114' with inlet passages 180', transfer passages 182', and outlet ports 184' oriented in any radial direction and then rotated on actuation axis AA to connect cartridge injector 104' to manifold 102'. Cartridge body 138' can be rotated until a desired tightness is achieved in the threaded interface without concern as to the final orientation of the inlet passages 180', transfer passages 182', or outlet ports 184'.

Seal grooves 240a', 240b' are formed in the exterior of cartridge body 138'. Seal groove 240a' is configured to hold cartridge seal 160a' and seal groove 240b' is configured to hold cartridge seal 160b'. Seal grooves 240a', 240b' are configured such that both axial sides of each seal groove 240a', 240b' are formed by a portion of cartridge body 138' that projects away from the base of the seal groove 240a', 240b'. Seal grooves 240a', 240b' support cartridge seals 160a', 160b' on both axial sides of the cartridge seal 160a', 160b'. Seal groove 240a' is disposed axially between transfer passages 182' and inlet passages 180'. Seal groove 240b' is disposed on an opposite axial side of inlet passages 180' from seal groove 240a'. Seal groove 240b' is disposed on an opposite axial side of seal groove 240a' from transfer passages 182'. Each of inlet passages 180', transfer passages 182', and outlet ports 184' are disposed on a same axial side of seal groove 240b'.

Cartridge injector 104' provides significant advantages. A portion of the exterior of cartridge injector 104' is formed by the cartridge body 138' that guides lubricant between an inlet and an outlet and another portion of the exterior of cartridge injector 104' is formed by piston 142' that drives the dose of lubricant downstream for injection. Such a configuration decreases the size of cartridge injector 104' and provides for a more compact and resilient assembly. Cartridge injector 104' includes arrays of passages (e.g., one or more of inlet passages 180', transfer passages 182', and outlet ports 184') that admit lubricant into cartridge body 138' and/or emit lubricant from cartridge body 138' and that are arrayed around cartridge body 138'. The arrays of passages facilitate quick and efficient lubricant flow into and out of cartridge body 138'.

Piston 142' is disconnected from cartridge body 138'. Piston 142' can freely reciprocate relative to cartridge body 138'. Piston 142' being separate from cartridge body 138' allows for quick and easy servicing and replacement of piston 142' if needed. Piston 142' can be removed from cartridge injector 104' by shifting piston 142' in first axial direction AD1 and off of cartridge body 138'. Piston 142' can be removed and replaced without accessing the interior of cartridge body 138'.

FIG. 12 is an isometric cross-sectional view taken along line 12-12 in FIG. 4 showing a portion of manifold 102. Manifold body 108, equipment ports 112a, 112b (collectively herein "equipment port 112" or "equipment ports 112"), injector cavity 114, equipment passage 130, and feed passage 128 of manifold are shown. Equipment passage 130 includes primary passage 130a and secondary passage 130b. Cartridge injectors 104 are removed from injector cavity 114 for simplicity and to more clearly illustrate features of manifold 102.

As shown, manifold 102 can include multiple equipment ports 112 associated with a single respective injector cavity 114. Equipment port 112a is formed through lateral side 120a of manifold body 108. Equipment port 112b is formed through vertical side 122b of manifold body 108. Equipment ports 112a, 112b form a set of equipment ports 112 that are associated with injector cavity 114 to receive an outflow of lubricant from injector cavity 114. Equipment port 112a is oriented orthogonal to equipment port 112b. Equipment port 112a is oriented away from cartridge axis CA. Equipment port 112b is oriented axially with respect to cartridge axis CA. Equipment port 112a is oriented laterally while equipment port 112b is oriented vertically. During operation, an output line 39 is connected to at least one of equipment ports 112a, 112b to receive lubricant output from the respective injector cavity 114 associated with those equipment ports 112a, 112b. In some examples, only one of the equipment ports 112a, 112b is connected to the output line 39 while the other one of the equipment ports 112a, 112b is plugged.

Equipment passage 130 extends from injector cavity 114 to equipment ports 112. In the example shown, equipment passage 130 includes primary passage 130a that intersects injector cavity 114 such that primary passage 130a is in direct fluid communication with injector cavity 114. Primary passage 130a extends to equipment port 112a. Equipment passage 130 further includes secondary passage 130b that branches from primary passage 130a at a location within manifold body 108. Secondary passage 130b extends to equipment port 112b to provide lubricant to equipment port 112b. Lubricant provided to equipment port 112b flows through both primary passage 130a and secondary passage 130b.

Manifold 102 includes a dual equipment port 112 configuration in which lubricant can be output from manifold 102 through various of the exterior surfaces of manifold 102. The multiple equipment ports 112 associated with a single injector cavity 114 provides significant advantages. The equipment ports 112a, 112b are disposed through surfaces of manifold 102 that are oriented in different directions. Such a configuration allows manifold 102 to be mounted in locations that were not previously suitable for mounting injectors because of limitations in where the output lines 39 could be connected. For manifold 102, the output line 39 can be connected to equipment port 112a and project laterally from manifold 102 or the output line 39 can be connected to equipment port 112b to project vertically from manifold 102. The end user thus has the option to attach the output line 39 to whichever equipment port 112a, 112b is most convenient. Having the equipment ports 112a, 112b on different planes (one on lateral side 120a and one on vertical side 122b) thereby simplifies the installation process and allows for mounting at additional locations. While the dual-equipment port 112 configuration is shown with regard to manifold 102, it is understood that such a configuration is equally applicable to any manifold, such as manifold 102a, manifold 102b, manifold 102c, manifold 102', etc.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the particular embodiment(s) disclosed, but that the invention will include all embodiments falling within the scope of the appended claims.

## Claims

1. A cartridge injector (104) comprising:
a cartridge body (138) defining a central cavity (176) extending along an actuation axis (AA);
a poppet (140) at least partially disposed within the cartridge body, the poppet actuatable along the actuation axis between a first poppet position and a second poppet position; and
a lubricant passage (186) extending axially within the cartridge body on the actuation axis, the lubricant passage configured to provide a pathway for lubricant to flow between an inlet passage (180) of the cartridge injector and an outlet passage (184) of the cartridge injector; **characterized by** further comprising:
a dispense piston (142) disposed on the cartridge body such that an exterior of the cartridge injector is partially formed by the cartridge body and partially formed by the dispense piston, the dispense piston configured to move along the actuation axis relative to the cartridge body.

2. The cartridge injector of claim 1, wherein the poppet (140) is configured to fluidly isolate the inlet passage (180) from the outlet passage (184) with the poppet in the first poppet position and with the poppet in the second poppet position.

3. The cartridge injector of claim 1 or claim 2, wherein the poppet (140) divides the lubricant passage into a load passage (188) fluidly connected to the inlet passage (180) and a dose passage (190) fluidly connected to the outlet passage (184), and wherein the load passage is disposed coaxially with the dose passage on the actuation axis (AA).

4. The cartridge injector of any one of claims 1-3, wherein no springs are disposed in the lubricant passage.

5. The cartridge injector of any one of claims 1-4, wherein no channels configured to transport lubricant axially within cartridge body are offset radially from the actuation axis.

6. The cartridge injector of claim 3, wherein the inlet passage (180) extends through the cartridge body (138) from an exterior of the cartridge body to the load passage (188).

7. The cartridge injector of claim 6, wherein the outlet passage (184) extends from an exterior of the cartridge injector to the dose passage (190).

8. The cartridge injector of claim 7, the cartridge body further comprising:
a supply groove (178) extending into an exterior of the cartridge body, the outlet passage (184) includes an opening disposed within the supply groove.

9. The cartridge injector of claim 8, wherein the supply groove (178) is disposed axially between a first seal (160a) supported by the cartridge body and a second seal (160b) supported by the cartridge body.

10. The cartridge injector of any one of claims 1-9, further comprising:
a transfer passage (182) extending through the cartridge body to the lubricant passage (186), the transfer passage disposed axially between the inlet passage (180) and the outlet passage (184);
wherein the transfer passage is fluidly connected to the inlet passage and fluidly disconnected from the outlet passage with the poppet (140) in the first poppet position, and
wherein the transfer passage is fluidly connected to the outlet passage and fluidly disconnected from the inlet passage with the poppet in the second poppet position.

11. The cartridge injector of claim 1, further comprising:
a first piston seal (218a) supported on an exterior of the dispense piston; and
a second piston seal (218c) supported on the exterior of the dispense piston.

12. The cartridge injector of claim 1 or claim 11, the piston further comprising:
a piston head (214) having a first diameter; and
a piston shaft (216) extending axially from the piston head and having a second diameter, the first diameter larger than the second diameter.

13. The cartridge injector of any one of claims 1, 11 and 12, wherein the poppet (140) extends into the dispense piston (142) to radially overlap with the dispense piston, and
wherein:
the dispense piston is configured to shift between a first piston position along the actuation axis and a second piston position along the actuation axis;
the dispense piston radially overlaps with the poppet with the dispense piston in both the first piston position and the second piston position; and
the dispense piston radially overlaps with the poppet with the poppet in both the first poppet position and the second poppet position.

14. The cartridge injector of any one of claims 1-13, wherein the poppet further comprises:
a meter shuttle (196) having a supply head (200) at a first axial end of the meter shuttle, a dose head (202) at a second axial end of the meter shuttle, and a shaft (174) extending axially between the supply head and the dose head, wherein:
with the poppet in the first poppet position the dose head seals the lubricant passage at a location axially between a transfer passage (182) extending through the cartridge body to the lubricant passage (186) and the outlet passage (184) to fluidly disconnect the outlet passage and the transfer passage; and
with the poppet in the second poppet position the supply head seals the lubricant passage at a location axially between the transfer passage and the inlet passage to fluidly disconnect the outlet passage and the transfer passage.

15. A method of disassembling a cartridge injector (104) comprising a cartridge body (138), a poppet (140) translatable along an actuation axis (AA) within a first passage extending axially through the inj ector body, and a piston (142) guided along an exterior surface of the injector body, the method comprising:
mechanically disconnecting the injector body from a manifold body (108) of a manifold (102), the manifold body defining a feed passage that is fluidly connected to an injector cavity (114) that the cartridge injector is at least partially disposed within, the manifold body further defining a feed passage (128) that is fluidly connected to the injector cavity; and
pulling the cartridge injector axially to remove the cartridge body and the poppet from the manifold while a supply line (37) remains connected to the manifold body and an output line (39) remains connected to the manifold body.

## Patentansprüche

1. Kartuscheninjektor (104), umfassend:
einen Kartuschenkörper (138), der einen mittigen Hohlraum (176) definiert, der sich entlang einer Betätigungsachse (AA) erstreckt;
ein Tellerventil (140), das mindestens teilweise innerhalb des Kartuschenkörpers angeordnet ist, wobei das Tellerventil entlang der Betätigungsachse zwischen einer ersten Tellerventilposition und einer zweiten Tellerventilposition betätigbar ist; und
einen Schmiermitteldurchgang (186), der sich axial innerhalb des Kartuschenkörpers auf der Betätigungsachse erstreckt, wobei der Schmiermitteldurchgang dazu eingerichtet ist, einen Pfad für Schmiermittel bereitzustellen, um zwischen einem Einlassdurchgang (180) des Kartuscheninjektors und einem Auslassdurchgang (184) des Kartuscheninjektors zu fließen; **dadurch gekennzeichnet, dass** er des Weiteren umfasst:
einen Abgabekolben (142), der so an dem Kartuschenkörper angeordnet ist, dass ein Äußeres des Kartuscheninjektors teilweise durch den Kartuschenkörper gebildet wird und teilweise durch den Abgabekolben gebildet wird, wobei der Abgabekolben dazu eingerichtet ist, sich entlang der Betätigungsachse relativ zu dem Kartuschenkörper zu bewegen.

2. Kartuscheninjektor nach Anspruch 1, wobei das Tellerventil (140) dazu eingerichtet ist, den Einlassdurchgang (180) strömungsmäßig von dem Auslassdurchgang (184) zu trennen, wenn sich das Tellerventil in der ersten Tellerventilposition befindet und wenn sich das Tellerventil in der zweiten Tellerventilposition befindet.

3. Kartuscheninjektor nach Anspruch 1 oder Anspruch 2, wobei das Tellerventil (140) den Schmiermitteldurchgang in einen Beladungsdurchgang (188), der mit dem Einlassdurchgang (180) in Strömungsverbindung steht, und einen Dosierdurchgang (190), der mit dem Auslassdurchgang (184) in Strömungsverbindung steht, unterteilt, und wobei der Beladungsdurchgang koaxial zu dem Dosierdurchgang auf der Betätigungsachse (AA) angeordnet ist.

4. Kartuscheninjektor nach einem der Ansprüche 1-3, wobei keine Federn in dem Schmiermitteldurchgang angeordnet sind.

5. Kartuscheninjektor nach einem der Ansprüche 1-4, wobei keine Kanäle, die dazu eingerichtet sind, Schmiermittel axial innerhalb des Kartuschenkörpers zu transportieren, von der Betätigungsachse radial versetzt sind.

6. Kartuscheninjektor nach Anspruch 3, wobei sich der Einlassdurchgang (180) durch den Kartuschenkörper (138) von einer Außenseite des Kartuschenkörpers zu dem Beladungsdurchgang (188) erstreckt.

7. Kartuscheninjektor nach Anspruch 6, wobei sich der Auslassdurchgang (184) von einer Außenseite des Kartuscheninjektors zu dem Dosierdurchgang (190) erstreckt.

8. Kartuscheninjektor nach Anspruch 7, wobei der Kartuschenkörper des Weiteren umfasst:
eine Zuführungsnut (178), die sich in ein Äußeres des Kartuschenkörpers erstreckt, wobei der Auslassdurchgang (184) eine Öffnung aufweist, die innerhalb der Zuführungsnut angeordnet ist.

9. Kartuscheninjektor nach Anspruch 8, wobei die Zuführungsnut (178) axial zwischen einer ersten Dichtung (160a), die durch den Kartuschenkörper gestützt wird, und einer zweiten Dichtung (1606), die durch den Kartuschenkörper gestützt wird, angeordnet ist.

10. Kartuscheninjektor nach einem der Ansprüche 1-9, des Weiteren umfassend:
einen Transferdurchgang (182), der sich durch den Kartuschenkörper zu dem Schmiermitteldurchgang (186) erstreckt, wobei der Transferdurchgang axial zwischen dem Einlassdurchgang (180) und dem Auslassdurchgang (184) angeordnet ist;
wobei der Transferdurchgang mit dem Einlassdurchgang in Strömungsverbindung steht und von dem Auslassdurchgang strömungsmäßig getrennt ist, wenn sich das Tellerventil (140) in der ersten Tellerventilposition befindet, und
wobei der Transferdurchgang mit dem Auslassdurchgang in Strömungsverbindung steht und von dem Einlassdurchgang strömungsmäßig getrennt ist, wenn sich das Tellerventil in der zweiten Tellerventilposition befindet.

11. Kartuscheninjektor nach Anspruch 1, des Weiteren umfassend:
eine erste Kolbendichtung (218a), die an einer Außenseite des Abgabekolbens gestützt ist; und
eine zweite Kolbendichtung (218c), die an der Außenseite des Abgabekolbens gestützt ist.

12. Kartuscheninjektor nach Anspruch 1 oder Anspruch 11, wobei der Kolben des Weiteren umfasst:
einen Kolbenkopf (214), der einen ersten Durchmesser aufweist; und
einen Kolbenschaft (216), der sich axial von dem Kolbenkopf erstreckt und einen zweiten Durchmesser aufweist, wobei der erste Durchmesser größer ist als der zweite Durchmesser.

13. Kartuscheninjektor nach einem der Ansprüche 1, 11 und 12, wobei sich das Tellerventil (140) in den Abgabekolben (142) erstreckt, um den Abgabekolben radial zu überlappen, und wobei:
der Abgabekolben dazu eingerichtet ist, zwischen einer ersten Kolbenposition entlang der Betätigungsachse und einer zweiten Kolbenposition entlang der Betätigungsachse verschoben zu werden;
der Abgabekolben das Tellerventil radial überlappt, wenn sich der Abgabekolben sowohl in der ersten Kolbenposition als auch in der zweiten Kolbenposition befindet; und
der Abgabekolben das Tellerventil radial überlappt, wenn sich das Tellerventil sowohl in der ersten Tellerventilposition als auch in der zweiten Tellerventilposition befindet.

14. Kartuscheninjektor nach einem der Ansprüche 1-13, wobei das Tellerventil des Weiteren umfasst:
ein Zumess-Shuttle (196), das einen Zuführkopf (200) an einem ersten axialen Ende des Zumess-Shuttles, einen Dosierkopf (202) an einem zweiten axialen Ende des Zumess-Shuttles und einen Schaft (174), die sich axial zwischen dem Zuführkopf und dem Dosierkopf erstreckt, aufweist, wobei:
wenn sich das Tellerventil in der ersten Tellerventilposition befindet, der Dosierkopf den Schmiermitteldurchgang an einer Stelle axial zwischen einem Transferdurchgang (182), der sich durch den Kartuschenkörper zu dem Schmiermitteldurchgang (186) erstreckt, und dem Auslassdurchgang (184) abdichtet, um den Auslassdurchgang und den Transferdurchgang strömungsmäßig zu trennen; und
wenn sich das Tellerventil in der zweiten Tellerventilposition befindet, der Zuführkopf den Schmiermitteldurchgang an einer Stelle axial zwischen dem Transferdurchgang und dem Einlassdurchgang abdichtet, um den Auslassdurchgang und den Transferdurchgang strömungsmäßig zu trennen.

15. Verfahren zum Zerlegen eines Kartuscheninjektors (104), umfassend einen Kartuschenkörper (138), ein Tellerventil (140), das entlang einer Betätigungsachse (AA) innerhalb eines ersten Durchgangs, der sich axial durch den Injektorkörper erstreckt, verschiebbar ist, und einen Kolben (142), der entlang einer Außenfläche des Injektorkörpers geführt wird, wobei das Verfahren umfasst:
mechanisches Trennen des Injektorkörpers von einem Verteilerkörper (108) eines Verteilers (102), wobei der Verteilerkörper einen Zufuhrdurchgang definiert, der mit einem Injektorhohlraum (114), in dem der Kartuscheninjektor mindestens teilweise angeordnet ist, in Strömungsverbindung steht, wobei der Verteilerkörper des Weiteren einen Zufuhrdurchgang (128) definiert, der mit dem Injektorhohlraum in Strömungsverbindung steht; und
axiales Ziehen des Kartuscheninjektors, um den Kartuschenkörper und das Tellerventil aus dem Verteiler zu entfernen, während eine Zufuhrleitung (37) mit dem Verteilerkörper verbunden bleibt und eine Ausgangsleitung (39) mit dem Verteilerkörper verbunden bleibt.

## Revendications

1. Injecteur à cartouche (104) comprenant :
un corps de cartouche (138) définissant une cavité centrale (176) s'étendant le long d'un axe d'actionnement (AA) ;
un champignon (140) disposé au moins partiellement à l'intérieur du corps de cartouche, le champignon pouvant être actionné le long de l'axe d'actionnement entre une première position de champignon et une deuxième position de champignon ; et
un passage de lubrifiant (186) s'étendant axialement à l'intérieur du corps de cartouche sur l'axe d'actionnement, le passage de lubrifiant étant configuré pour fournir une voie d'écoulement du lubrifiant entre un passage d'entrée (180) de l'injecteur à cartouche et un passage de sortie (184) de l'injecteur à cartouche ; **caractérisé en ce qu'**il comprend en outre :
un piston de distribution (142) disposé sur le corps de cartouche de sorte qu'un extérieur de l'injecteur à cartouche soit partiellement formé par le corps de cartouche et partiellement formé par le piston de distribution, le piston de distribution étant configuré pour se déplacer le long de l'axe d'actionnement par rapport au corps de cartouche.

2. Injecteur à cartouche selon la revendication 1, dans lequel le champignon (140) est configuré pour isoler fluidiquement le passage d'entrée (180) du passage de sortie (184), avec le champignon étant dans la première position de champignon et dans la deuxième position de champignon.

3. Injecteur à cartouche selon la revendication 1 ou 2, dans lequel le champignon (140) divise le passage de lubrifiant en un passage de charge (188) en communication fluidique avec le passage d'entrée (180) et un passage de dose (190) en communication fluidique avec le passage de sortie (184) et dans lequel le passage de charge est disposé coaxialement au passage de dose sur l'axe d'actionnement (AA).

4. Injecteur à cartouche selon une quelconque des revendications 1 à 3, dans lequel aucun ressort n'est disposé dans le passage de lubrifiant.

5. Injecteur à cartouche selon une quelconque des revendications 1 à 4, dans lequel aucun canal configuré pour transporter axialement le lubrifiant dans le corps de la cartouche n'est décalé radialement par rapport à l'axe d'actionnement.

6. Injecteur à cartouche selon la revendication 3, dans lequel le passage d'entrée (180) traverse le corps de cartouche (138) depuis l'extérieur du corps de cartouche jusqu'au passage de charge (188).

7. Injecteur à cartouche selon la revendication 6, dans lequel le passage de sortie (184) s'étend depuis un extérieur de l'injecteur de cartouche jusqu'au passage de dose (190).

8. Injecteur à cartouche selon la revendication 7, le corps de cartouche comprenant en outre :
une rainure d'alimentation (178) s'étendant vers un extérieur du corps de cartouche, le passage de sortie (184) comprend une ouverture ménagée dans la rainure d'alimentation.

9. Injecteur à cartouche selon la revendication 8, dans lequel la rainure d'alimentation (178) est disposée axialement entre un premier joint (160a) supporté par le corps de cartouche et un deuxième joint (160b) supportés par le corps de cartouche.

10. Injecteur à cartouche selon une quelconque des revendications 1 à 9, comprenant en outre :
un passage de transfert (182) traversant le corps de la cartouche jusqu'au passage de lubrifiant (186), disposé axialement entre le passage d'entrée (180) et le passage de sortie (184) ;
dans lequel le passage de transfert est en communication fluidique avec le passage d'entrée et en déconnexion fluidique avec le champignon (140) dans la première position, et
dans lequel le passage de transfert est en communication fluidique avec le passage de sortie et en déconnexion fluidique avec le passage d'entrée et le champignon dans la deuxième position.

11. Injecteur à cartouche selon la revendication 1, comprenant en outre :
un premier joint de piston (218a) supporté à l'extérieur du piston de distribution ; et
un deuxième joint de piston (218c) supporté à l'extérieur du piston de distribution.

12. Injecteur à cartouche selon la revendication 1 ou 11, le piston comprenant en outre :
une tête de piston (214) ayant un premier diamètre ; et
une tige de piston (216) s'étendant axialement depuis la tête de piston et ayant un deuxième diamètre, le premier diamètre étant supérieur au deuxième diamètre.

13. Injecteur à cartouche selon une quelconque des revendications 1, 11 et 12, dans lequel le champignon (140) s'étend dans le piston de distribution (142) pour se superposer radialement à ce dernier, et dans lequel :
le piston de distribution est configuré pour passer d'une première position de piston le long de l'axe d'actionnement à une deuxième position de piston le long de l'axe d'actionnement ;
le piston de distribution se superpose radialement au champignon, avec le piston de distribution dans à la fois la première position de piston et la deuxième position de piston ; et
le piston de distribution se superpose radialement au champignon, dans à la fois la première position de champignon et la deuxième position de champignon.

14. Injecteur à cartouche selon une quelconque des revendications 1 à 13, dans lequel le champignon comprend en outre :
une navette de dosage (196) comportant une tête d'alimentation (200) à une première extrémité axiale de la navette de dosage, une tête de dosage (202) à une deuxième extrémité axiale de la navette de dosage et un arbre (174) s'étendant axialement entre la tête d'alimentation et la tête de dosage, dans lequel :
lorsque le champignon est dans la première position de champignon, la tête de dosage obture le passage de lubrifiant à un emplacement axialement situé entre un passage de transfert (182) traversant le corps de la cartouche jusqu'au passage de lubrifiant (186) et le passage de sortie (184) pour déconnecter fluidiquement le passage de sortie et le passage de transfert ; et
lorsque le champignon est dans la deuxième position de champignon, la tête d'alimentation obture le passage de lubrifiant à un emplacement axialement entre le passage de transfert et le passage d'entrée pour déconnecter fluidiquement le passage de sortie et le passage de transfert.

15. Procédé de démontage d'un injecteur à cartouche (104) comprenant un corps de cartouche (138), un champignon (140) déplaçable en translation le long d'un axe d'actionnement (AA) à l'intérieur d'un premier passage s'étendant axialement à travers le corps de l'injecteur et un piston (142) guidé le long d'une surface extérieure du corps d'injecteur, le procédé comprenant :
la déconnexion mécanique du corps d'injecteur d'un corps de collecteur (108) d'un collecteur (102), le corps de collecteur définissant un passage d'alimentation en communication fluidique avec une cavité d'injecteur (114) dans laquelle l'injecteur à cartouche est au moins partiellement disposé, le corps de collecteur définissant en outre un passage d'alimentation (128) en communication fluidique avec la cavité d'injecteur ; et
l'extraction axiale de l'injecteur à cartouche pour retirer le corps de la cartouche et le champignon du collecteur, tandis qu'une conduite d'alimentation (37) reste connectée au corps de collecteur et une conduite de sortie (39) reste connectée au corps de collecteur.
